# EUROPEAN PATENT APPLICATION

(11) **EP 4 284 081 A2**
(43) Date of publication of application: **29.11.2023**
(21) Application number: 23195018.9
(22) Date of filing: 07.01.2020
(51) Int. Cl.: H04W 56/00

(54) **COMMUNICATION SYSTEM AND COMMUNICATION TERMINAL**

(30) Priority: 09.01.2019 JP 2019001624
(62) Divisional of application: 20738716.8
(71) Applicant: MITSUBISHI ELECTRIC CORPORATION, Chiyoda-ku Tokyo 100-8310 (JP)
(72) Inventor: SHIMODA, Tadahiro, Tokyo, 100-8310 (JP); MOCHIZUKI, Mitsuru, Tokyo, 100-8310 (JP); FUKUI, Noriyuki, Tokyo, 100-8310 (JP); UCHINO, Daichi, Tokyo, 100-8310 (JP); NAKAMURA, Kiyoshige, Tokyo, 100-8310 (JP)
(74) Representative: Meissner Bolte Partnerschaft mbB

(57) **Abstract**

A user apparatus in a communication system comprising: a plurality of user apparatuses configured to communicate with each other in a sidelink; and a base station configured to wirelessly communicate with each of the user apparatuses, wherein the user apparatus exchanges first sidelink control information and second sidelink control information by using channels different from each other.

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

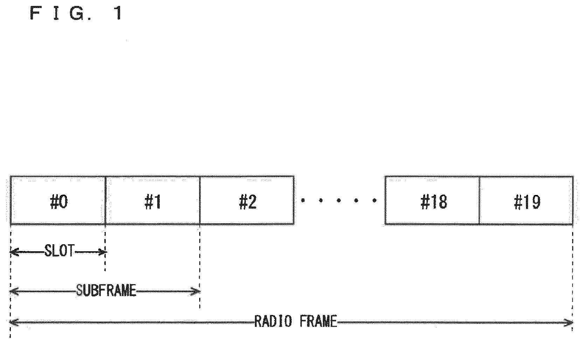

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V15.2.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. The example studies include the Time Sensitive Network (see Non-Patent Document 20 (3GPP RP-182090)), the local caching (see Non-Patent Document 21 (3GPP RP-172726)), and the preemption in the sidelink (see Non-Patent Document 22 (3GPP R1-1810593)).

### Prior-Art Documents

### Non-Patent Documents

| | |
|---|---|
| Non-Patent Document 1: | 3GPP TS 36.300 V15.2.0 |
| Non-Patent Document 2: | 3GPP S1-083461 |
| Non-Patent Document 3: | 3GPP TR 36.814 V9.2.0 |
| Non-Patent Document 4: | 3GPP TR 36.912 V15.0.0 |
| Non-Patent Document 5: | "Scenarios, requirements and KPIs for 5G mobile and wireless system", ICT-317669-METIS/D1.1 |
| Non-Patent Document 6: | 3GPP TR 23.799 V14.0.0 |
| Non-Patent Document 7: | 3GPP TR 38.801 V14.0.0 |
| Non-Patent Document 8: | 3GPP TR 38.802 V14.2.0 |
| Non-Patent Document 9: | 3GPP TR 38.804 V14.0.0 |
| Non-Patent Document 10: | 3GPP TR 38.912 V14.1.0 |
| Non-Patent Document 11: | 3GPP RP-172115 |
| Non-Patent Document 12: | 3GPP TS 37.340 V15.2.0 |
| Non-Patent Document 13: | 3GPP TS 38.211 V15.2.0 |
| Non-Patent Document 14: | 3GPP TS 38.213 V15.2.0 |
| Non-Patent Document 15: | 3GPP TS 38.214 V15.2.0 |
| Non-Patent Document 16: | 3GPP TS 38.300 V15.2.0 |
| Non-Patent Document 17: | 3GPP TS 38.321 V15.2.0 |
| Non-Patent Document 18: | 3GPP TS 38.212 V15.2.0 |
| Non-Patent Document 19: | 3GPP RP-161266 |
| Non-Patent Document 20: | 3GPP RP-182090 |
| Non-Patent Document 21: | 3GPP RP-172726 |
| Non-Patent Document 22: | 3GPP R1-1810593 |
| Non-Patent Document 23: | 3GPP TR22.804 V16.1.0 |
| Non-Patent Document 24: | 3GPP R3-185808 |
| Non-Patent Document 25: | 3GPP TS36.331 V15.3.0 |
| Non-Patent Document 26: | 3GPP R2-1817173 |
| Non-Patent Document 27: | 3GPP R1-1810775 |
| Non-Patent Document 28: | 3GPP RP-182111 |
| Non-Patent Document 29: | Draft Report of 3GPP TSG RAN WGI #95 v0.2.0 (Spokane, |
| | USA, 12th-16th November 2018) |
| Non-Patent Document 30: | 3GPP TS23.501 V15.3.0 |
| Non-Patent Document 31: | 3GPP R2-1815441 |

### Summary

### Problems to be Solved by the Invention

To satisfy the Ultra-Reliable and Low Latency Communication (URLLC) requirements, support of the Time Sensitive Network (TSN) has been studied in 3GPP (see Non-Patent Document 20 (3GPP RP-182090)). The Time Sensitive Network requires clock synchronization between a plurality of UEs (see Non-Patent Document 23 (3GPP TR22.804 V16.1.0)). Clock synchronization between a base station and each UE has been studied as a method for synchronizing the clocks of a plurality of UEs (see Non-Patent Document 24 (3GPP R3-185808), Non-Patent Document 25 (3GPP TS36.331 V15.3.0), and Non-Patent Document 26 (3GPP R2-1817173)). However, since the UE with mobility does not know the propagation delay to a target base station, the UE time is sometimes suddenly changed before and after the mobility. This causes a problem of a malfunction in a system using the TSN.

Moreover, introduction of the preemption in the sidelink (SL) communication in NR has been proposed to satisfy the low latency characteristics in the SL communication in NR (see Non-Patent Document 22 (3GPP R1-1810593) and Non-Patent Document 27 (3GPP R1-1810775)). However, none discloses a specific method on the preemption in the SL. Thus, the SL communication has problems in that the preemption cannot be performed and the low latency characteristics cannot be satisfied.

In view of the problems, one of the objects of the present invention is to provide a radio communication technology with low latency and high reliability.

### Means to Solve the Problems

The present invention provides a communication system including: a communication terminal; and a plurality of communication apparatuses configured to perform radio communication with the communication terminal, wherein when the communication terminal switches a communication apparatus to which the communication terminal is connected from a first communication apparatus to a second communication apparatus, the communication terminal corrects a time of the communication terminal, based on a timing reference to be transmitted from the second communication apparatus and timing advance of the second communication apparatus.

The present invention also provides a communication terminal configured to perform radio communication with a communication apparatus, wherein when the communication terminal switches the communication apparatus to which the communication terminal is connected from a first communication apparatus to a second communication apparatus, the communication terminal corrects a time of the communication terminal, based on a timing reference to be transmitted from the second communication apparatus and timing advance of the second communication apparatus.

### Effects of the Invention

The present invention can provide the radio communication technology with low latency and high reliability.

The objects, features, aspects and advantages of the present invention will become more apparent from the following detailed description of the present invention when taken in conjunction with the accompanying drawings.

### Brief Description of Drawings

FIG. 1 is a diagram illustrating the configuration of a radio frame for use in an LTE communication system.
FIG. 2 is a block diagram showing the overall configuration of an LTE communication system 200 under discussion of 3GPP.
FIG. 3 is a block diagram illustrating an overall configuration of a NR communication system 210 that has been discussed in 3GPP.
FIG. 4 illustrates a structure of the DC to be performed by an eNB and a gNB that are connected to the EPC.
FIG. 5 illustrates a structure of the DC to be performed by gNBs that are connected to the NG core.
FIG. 6 illustrates a structure of the DC to be performed by the eNB and the gNB that are connected to the NG core.
FIG. 7 illustrates a structure of the DC to be performed by the eNB and the gNB that are connected to the NG core.
FIG. 8 is a block diagram showing the configuration of a user equipment 202 shown in FIG. 2.
FIG. 9 is a block diagram showing the configuration of a base station 203 shown in FIG. 2.
FIG. 10 is a block diagram showing the configuration of an MME.
FIG. 11 is a block diagram illustrating a configuration of the 5GC.
FIG. 12 is a flowchart showing an outline from a cell search to an idle state operation performed by a communication terminal (UE) in LTE communication system.
FIG. 13 illustrates an example structure of a cell in an NR system.
FIG. 14 illustrates an outline of operations of correcting the UE time in handover according to the first embodiment.
FIG. 15 illustrates a sequence diagram of the operations of correcting the UE time in handover according to the first embodiment.
FIG. 16 is a sequence diagram illustrating another example of the operations of correcting the UE time in handover according to the first embodiment.
FIG. 17 is a sequence diagram illustrating an example where the UE performs operations of estimating the TA of the target base station and correcting the UE time in handover according to the first embodiment.
FIG. 18 is a sequence diagram illustrating example operations of correcting the time between base stations according to the first modification of the first embodiment.
FIG. 19 is a sequence diagram illustrating operations of switching between PDU sessions to be used for transmitting data and switching between base stations to which the UE is connected according to the second embodiment.
FIG. 20 is the sequence diagram illustrating operations of switching between the PDU sessions to be used for transmitting data and switching between the base stations to which the UE is connected according to the second embodiment.
FIG. 21 is a sequence diagram illustrating another example of operations of switching between the PDU sessions to be used for transmitting data and switching between the base stations to which the UE is connected according to the second embodiment.
FIG. 22 is the sequence diagram illustrating another example of operations of switching between the PDU sessions to be used for transmitting data and switching between the base stations to which the UE is connected according to the second embodiment.
FIG. 23 illustrates an outline of the preemption in the SL communication according to the fourth embodiment.
FIG. 24 illustrates the first example of a preemption method in the SL communication according to the fourth embodiment.
FIG. 25 illustrates the second example of the preemption method in the SL communication according to the fourth embodiment.
FIG. 26 illustrates the third example of the preemption method in the SL communication according to the fourth embodiment.
FIG. 27 illustrates the fourth example of the preemption method in the SL communication according to the fourth embodiment.
FIG. 28 illustrates an outline of the preemption in the SL communication according to the first modification of the fourth embodiment.
FIG. 29 illustrates the first example of the preemption method in the SL communication according to the first modification of the fourth embodiment.
FIG. 30 illustrates the second example of the preemption method in the SL communication according to the first modification of the fourth embodiment.
FIG. 31 illustrates the third example of the preemption method in the SL communication according to the first modification of the fourth embodiment.
FIG. 32 illustrates a case where the SLRPs are configured in a UL carrier in the Uu according to the fifth embodiment.
FIG. 33 illustrates a case where preempting UL resources in the Uu is permitted for the SL communication according to the fifth embodiment.
FIG. 34 illustrates a case where preempting the resources within the SLRPs is permitted for the UL communication in the Uu according to the fifth embodiment.
FIG. 35 illustrates a case where two SLRPs and two SLBWPs are configured within the same carrier according to the sixth embodiment.
FIG. 36 is a conceptual diagram illustrating the support of not only the non-SUL but also the SUL in the SL according to the seventh embodiment.
FIG. 37 illustrates a case where the numerologies in the non-SUL and the SUL are the same according to the seventh embodiment.
FIG. 38 illustrates a case where the numerologies in the non-SUL and the SUL are different according to the seventh embodiment.
FIG. 39 illustrates an example sequence for performing the SL communication in the SL SUL according to the seventh embodiment.
FIG. 40 illustrates the example sequence for performing the SL communication in the SL SUL according to the seventh embodiment.
FIG. 41 illustrates another example sequence for performing the SL communication in the SL SUL according to the seventh embodiment.
FIG. 42 illustrates another example sequence for performing the SL communication in the SL SUL according to the seventh embodiment.

### Description of Embodiments

### The First Embodiment

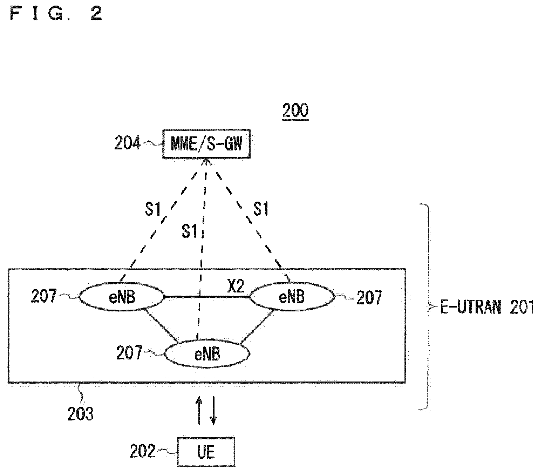

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC IDLE and RRC CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC _CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

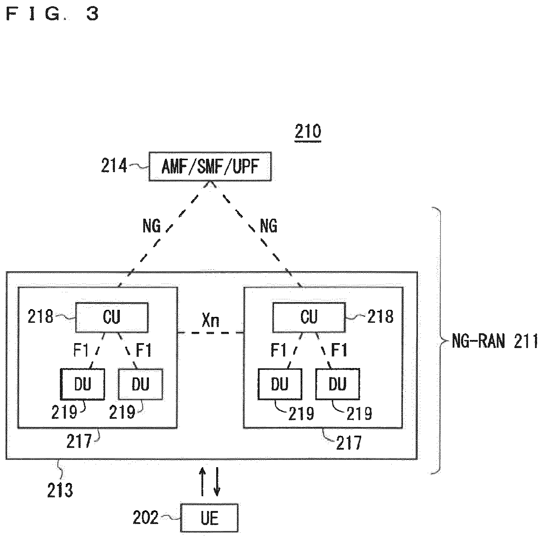

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC _CONNECTED, and RRC_INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

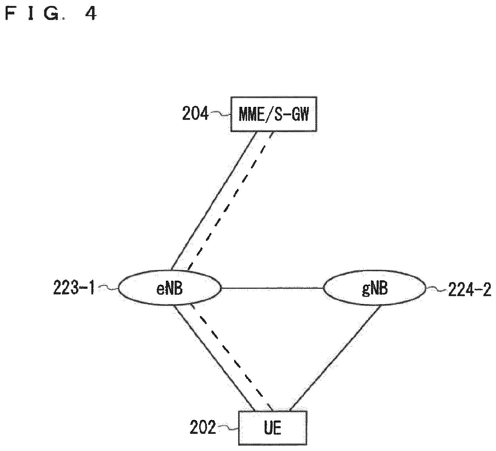

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

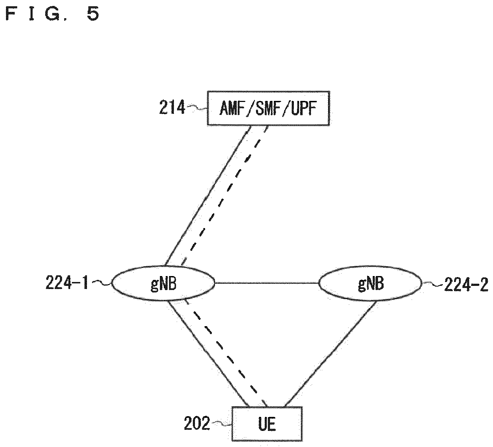

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

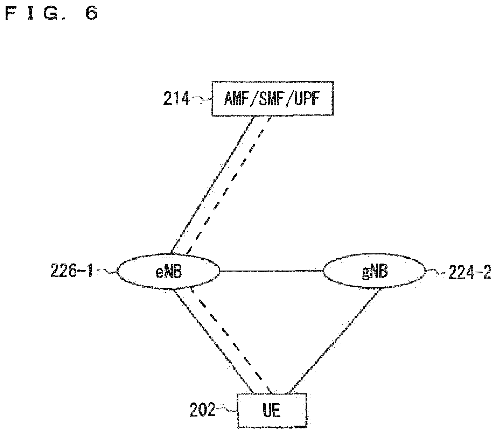

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

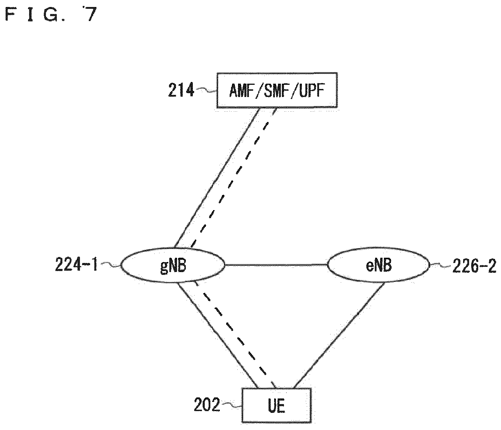

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

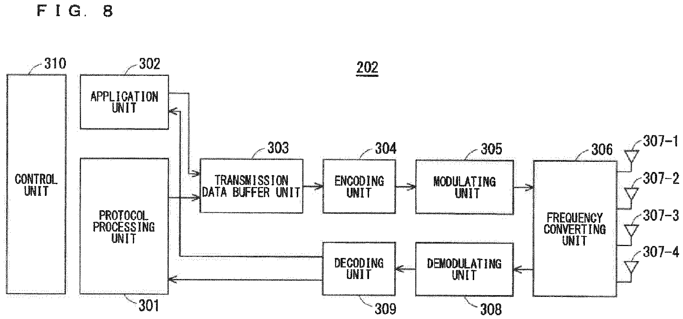

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction.

There may exist the data output from the transmission data buffer unit 303 directly to a modulating unit 305 without the encoding process. The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation.

The demodulated data is passed to a decoding unit 309, and is subjected to a decoding process such as error correction. Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

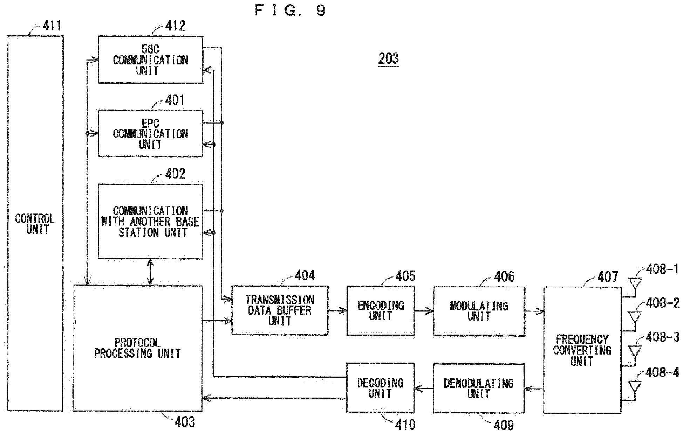

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction. Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

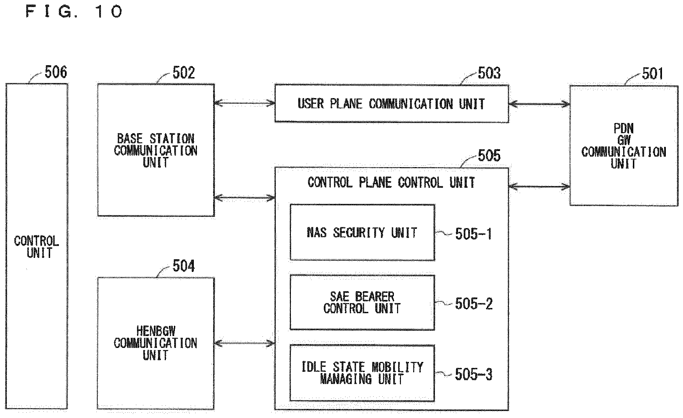

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

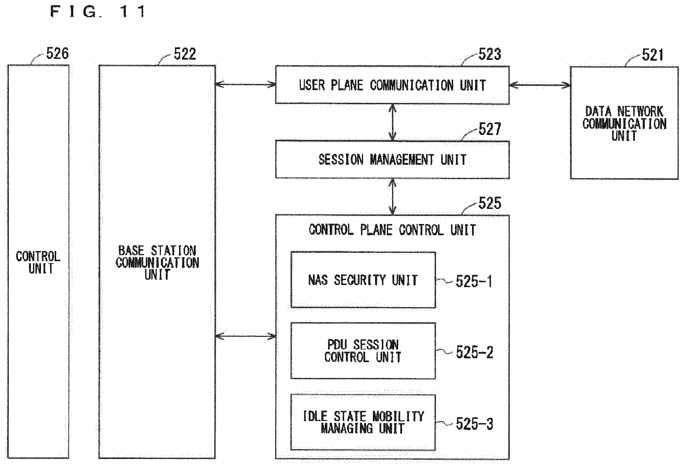

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane communication unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

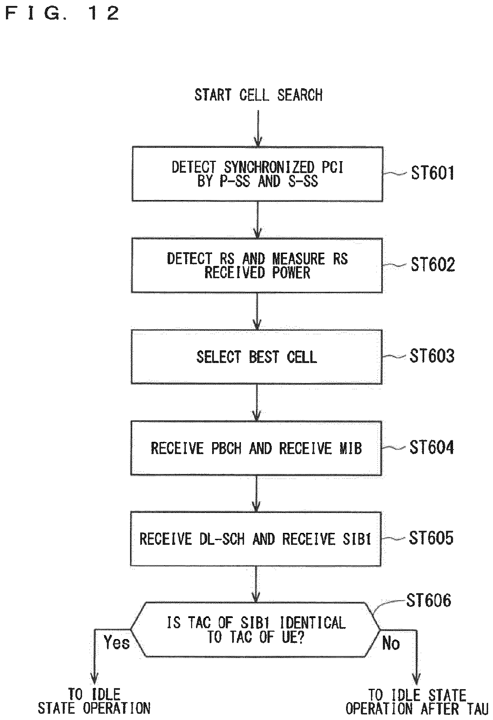

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

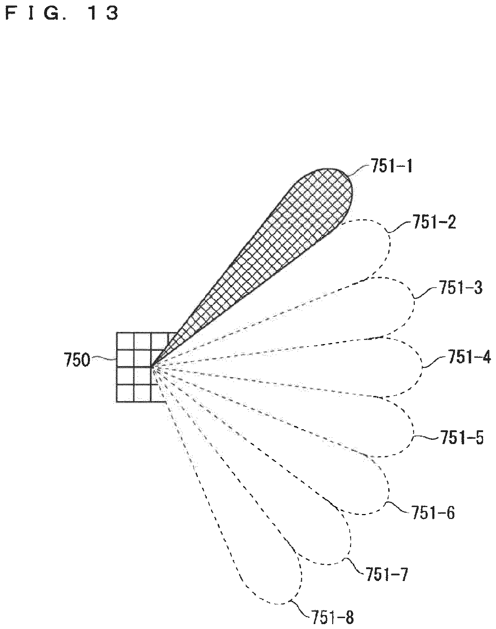

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In the clock synchronization between the base station and the UE in the TSN, the base station may broadcast information on the clock synchronization to the UEs, or dedicatedly notify each of the UEs of the information. The information may be included in system information, or in the RRC signaling, for example, the signaling for downlink information notification (DLInformationTransfer). The information may be time reference information (hereinafter timing reference). The timing reference may be combined information of a time and information on a predetermined system frame, for example, information indicating the time at the end of the predetermined system frame. The UE may configure its own UE time, using the information.

In information included in the timing reference, combined information of a time and information on a predetermined subframe instead of the predetermined system frame, for example, information indicating the time at the end of the subframe may be used. Alternatively, combined information of a time and information on a predetermined slot, for example, information indicating the time at the end of the slot may be used in the information included in the timing reference. The time at each of the ends may be replaced with the time at the beginning. This can, for example, shorten the waiting time for the UE until the time. Consequently, the UE can promptly configure the time for its own UE.

The base station may generate the timing reference to be transmitted from the base station to the UE using, for example, time information obtained from a global navigation satellite system (GNSS) or the Regional Navigation Satellite System (RNSS), time information signaled from a location information server to the base station, time information signaled from the high-level NW device (e.g., AMF and/or SMF) to the base station, or time information obtained from a time server. For example, the base station transmits, to the UE, the timing reference generated using the time information signaled from the high-level NW device to the base station to allow the clock synchronization in the overall communication system.

The UE may correct its own UE time calculated using the timing reference. The correction may be, for example, correction of the propagation delay between the base station and the UE. The correction may be performed, using, for example, the timing advance (TA). In the communication system, for example, the TA may be regarded as the round trip propagation delay time between the base station and the UE. The UE may use, as the corrected UE time, a value obtained by adding a value of half the TA to its own UE time.

However, none discloses a method on the clock synchronization when the UE moves. Thus, the UE with mobility cannot smoothly perform clock synchronization with a target base station. For example, the UE time is sometimes suddenly changed when the UE time is corrected using the TA between the target base station and the UE, because this TA is different from the TA between the source base station and the UE. This causes a problem of a malfunction in the system using the TSN.

A solution to the problem is hereinafter disclosed.

The UE simultaneously applies the timing reference and the TA that have been received from the target base station when correcting its own UE time. In other words, the UE does not correct its own UE time only using one of the timing reference and the TA.

The UE corrects its own UE time simultaneously using both of the timing reference and the TA of the target base station. Its own UE time may be, for example, the time obtained by adding a value of half the TA to the timing reference. Before the calculation, the UE may use its own UE time calculated using the timing reference and the TA from the source base station as it is.

The UE may hold the timing reference and/or the TA that have been received from the source base station. The UE may hold the timing reference and/or the TA, for example, during the handover from the source base station to the target base station or after the handover. The UE may hold the timing reference and/or the TA of the source base station after the handover, for example, until receiving both of the TA and the timing reference from the target base station. The UE may hold the timing reference received from the source base station. The UE may calculate its own UE time using the TA and the timing reference. The UE may calculate its own UE time using its own UE clock. The UE may, for example, continue to calculate its own UE time using the TA and the timing reference from the source base station, until the completion of the handover. This enables, for example, the UE to maintain its own UE time even when a handover failure occurs.

The UE may establish uplink synchronization with the target base station, before correcting its own UE time using the timing reference and the TA from the target base station or simultaneously when correcting its own UE time. The UE may establish the uplink synchronization using the TA received from the target base station. The UE may hold both of the TAs received from the target base station and the source base station. This enables, for example, the UE to establish the uplink synchronization with the target base station while maintaining its own UE time.

After correcting its own UE time using the timing reference and the TA from the target base station, the UE may release the TA and the timing reference that have been received from the source base station. This can, for example, reduce the memory usage in the UE.

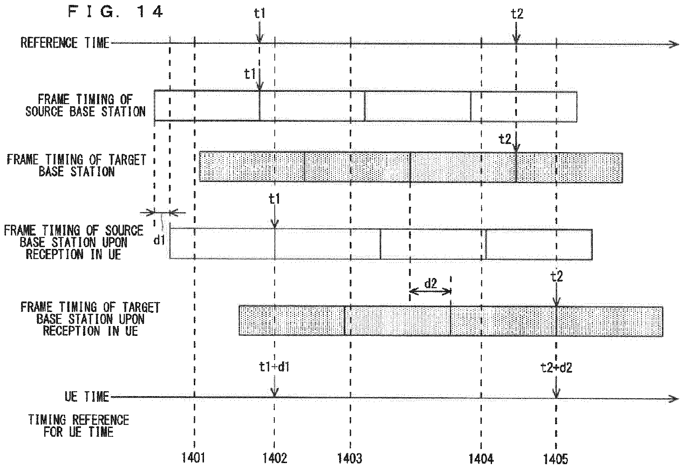

FIG. 14 illustrates an outline of operations of correcting the UE time in mobility. In FIG. 14, the times in the source base station and the target base station synchronize with the reference time in the 5G system. A rectangle enclosed by a solid line in FIG. 14 represents an SFN.

At a timing 1401 in FIG. 14, the UE understands propagation delay d1 from the source base station to its own UE. The source base station notifies the UE of the timing reference indicating that the time at the end of a predetermined SFN is t1. At a timing 1402, the UE configures the time (t1 + d1) obtained by adding the propagation delay d1 to the time t1 included in the timing reference, as its own UE time when receiving a signal indicating the end of the SFN.

At a timing 1403 in FIG. 14, the UE performs handover from the source base station to the target base station. At a timing 1404, the UE understands propagation delay d2 from the target base station to its own UE. The target base station notifies the UE of the timing reference indicating that the time at the end of yet another predetermined SFN is t2. At a timing 1405, the UE reconfigures the time (t2 + d2) obtained by adding the propagation delay d2 to the time t2 included in the timing reference, as its own UE time when receiving a signal indicating the end of the yet another SFN.

Although FIG. 14 illustrates the timing reference as information indicating the time at the end of a predetermined SFN, the time at the end of a predetermined subframe, the time at the end of a predetermined slot, the time at the end of a predetermined mini-slot, or the time at the end of a predetermined symbol may be used instead. The time at each of the ends may be replaced with the time at the beginning. In such a case, the rectangle enclosed by the solid line in FIG. 14 may represent a subframe, a slot, a mini-slot, or a symbol. This can, for example, shorten the time from when the UE receives the timing reference to the predetermined time included in the timing reference. Consequently, the UE can promptly perform clock synchronization.

The base station may broadcast the timing reference, or dedicatedly notify it to each UE. The base station may notify the timing reference using system information or via the RRC dedicated signaling, the MAC signaling, or the L1/L2 signaling. As an example of notifying the timing reference via the MAC signaling, the timing reference may include information on the time at a predetermined timing of a slot or a mini-slot including the MAC signaling (e.g., the beginning or the end of the slot/mini-slot). As an example of notifying the timing reference via the L1/L2 signaling, the timing reference may include information on the time at a predetermined timing of a slot or a mini-slot including the L1/L2 signaling (e.g., the beginning or the end of the slot/mini-slot).

The UE in RRC_INACTIVE state or RRC_IDLE state may obtain the timing reference. The UE may obtain the timing reference, for example, using the system information broadcast from the base station. The UE may configure its own UE time using the timing reference. The UE may determine uncertainty in its own UE time, using a cell radius of the base station. For example, the base station may broadcast the cell radius. This enables, for example, the clock synchronization in the communication system, irrespective of an RRC state of the UE.

The notification of the timing reference from the base station to the UE may be notification solely to the UE (e.g., notification including the C-RNTI of the UE) or notification to a plurality of UEs. The plurality of UEs may be, for example, a plurality of UEs in a beam to which the UE belongs (e.g., all or a part of the UEs in the beam). The plurality of UEs may be all the UEs. The base station may notify the plurality of UEs of the timing reference, for example, using a group common PDCCH. This enables, for example, the base station to notify many UEs of the timing reference. Consequently, the efficiency in the communication system can be increased.

The UE may request the base station to notify the timing reference. The UE may make the request, for example, via the signaling for System Information Request, e.g., the PRACH including a random access preamble for the System Information Request, or the RRC dedicated signaling. As an example of making the request via the RRC dedicated signaling, the request may be included in the signaling indicating the RRC reconfiguration completion (RRCReconfigurationComplete), or new RRC dedicated signaling may be provided. In response to the request, the base station may notify the UE of the timing reference. This enable, for example, the UE to promptly obtain the timing reference without waiting for the broadcast cycle of the system information.

As another example, the UE may request the timing reference from the high-level NW device. The high-level NW device may be, for example, the AMF or the SMF. The UE may make the request to the SMF through the AMF. The UE may make the request, for example, via the NAS signaling. The request may or need not include, for example, information on the base station as a target receiver of the timing reference. In response to the request, the high-level NW device may instruct the base station to notify the timing reference to the UE. The high-level NW device may issue the instruction, for example, via the signaling in the NG interface. The base station instructed by the high-level NW device may be, for example, a base station indicated by the information included in the request from the UE to the high-level NW device. In response to the instruction, the base station may notify the UE of the timing reference. This enables, for example, the high-level NW device to control the notification of the timing reference from the base station to the UE. Consequently, the efficiency in the communication system can be increased.

As another example, the timing reference may be notified via the NAS signaling. The high-level NW device may notify the UE of the timing reference. The high-level NW device may be, for example, the AMF, the SMF, or the UPF. The SMF may notify the timing reference to the UE through the AMF. In such a case, the high-level NW device may obtain the frame timing of the base station. The base station may notify the high-level NW device of information on the frame timing. The base station may give the notification, for example, through the NG interface. This can, for example, establish synchronization among the UEs being served by different base stations in the 5G system. As another example, the location information server may notify the UE of the timing reference. The high-level NW device may obtain the subframe timing, the slot timing, the mini-slot timing, or the symbol timing instead of obtaining the frame timing.

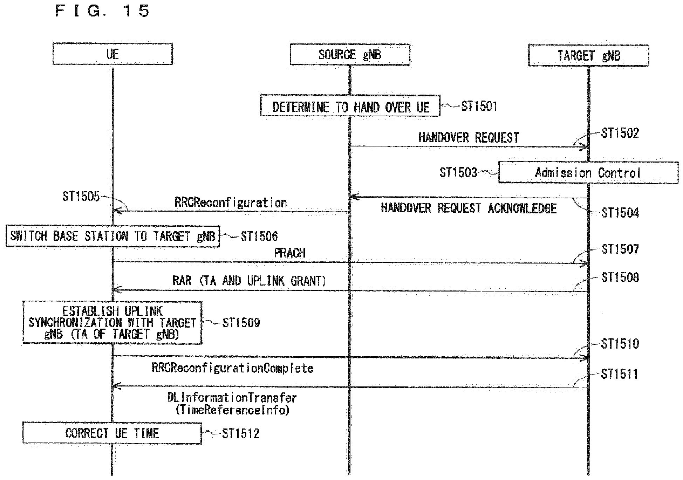

FIG. 15 illustrates a sequence diagram of the operations of correcting the UE time in handover. FIG. 15 illustrates an example where both of the source base station and the target base station are NR base stations (gNBs). Furthermore, FIG. 15 illustrates an example where the UE obtains the timing reference from the target gNB via the signaling for downlink information notification (DLInformationTransfer) from the target gNB. Unless otherwise specified, the Xn interface is used for the communication between the source gNB and the target gNB in FIG. 15.

In Step ST1501 of FIG. 15, the source gNB determines to hand over the UE to the target gNB. In Step ST1502, the source gNB notifies the target gNB of a handover request. In Step ST1503, the target gNB performs admission control.

In Step ST1504 of FIG. 15, the target gNB notifies the source gNB of the acknowledgement to the handover request (Handover Request Acknowledge). In Step ST1505, the source gNB instructs the UE of the handover to the target gNB. The source gNB may issue the instruction, for example, via the signaling for the RRC reconfiguration (RRCReconfiguration). In Step ST1506, the UE switches the base station to which the UE is connected from the source gNB to the target gNB. In Step ST1506, the UE may use its own UE time calculated using the timing reference and the TA that have been received from the source gNB. In Step ST1506, the UE may hold the timing reference and the TA that have been received from the source gNB.

In Step ST1507 of FIG. 15, the UE transmits the PRACH to the target gNB. In Step ST1508, the target gNB transmits the Random Access Response (RAR) to the UE. The target gNB may include, in the RAR in Step ST1508, the TA and/or the uplink grant and notify the UE of the TA and/or the uplink grant. The UE may establish uplink synchronization with the target gNB using the TA in Step ST1509. In Step ST1509, the UE need not correct its own UE time. The UE may notify the target gNB of information indicating the completion of the handover, using the uplink grant in Step ST1510. The UE may notify the information, for example, using the RRC reconfiguration completion (RRCReconfigurationComplete).

In Step ST1511 of FIG. 15, the target gNB notifies the UE of the timing reference. The target gNB may give the notification via the RRC signaling, for example, using the downlink information notification (DLInformationTransfer). In Step ST1512, the UE corrects its own UE time, using the TA received in Step ST1508 and the timing reference received in Step ST1511. The UE may correct the time, for example, by configuring the time obtained by adding a value of half the TA to the time included in the timing reference, as the time specified by the timing reference. The UE may discard the timing reference and the TA of the source gNB in Step ST1512.

Although FIG. 15 illustrates an example where the timing reference is notified via the RRC dedicated signaling, the timing reference may be notified using the system information. The UE may obtain the timing reference using the system information. This can, for example, reduce the amount of signaling from the target gNB to the UEs being served thereby.

Step ST1510 of FIG. 15 indicates that the UE notifies the target gNB of the information indicating the completion of the handover. The notification may include a request for notifying the timing reference from the UE to the target gNB. For example, the signaling for the RRC reconfiguration completion (RRCReconfigurationComplete) to be transmitted from the UE to the target gNB may include information on the request for notifying the timing reference. In response to the request, the target gNB may notify the UE of the timing reference. This enables, for example, the target gNB to promptly notify the UE of the timing reference.

The timing reference of the target base station may be notified to the UE before the handover. The target base station may notify the source base station of the timing reference of its own gNB. The target base station may give the notification via the signaling in the interface between the base stations (e.g., the Xn interface). For example, the target base station may include the timing reference in the signaling for acknowledging the handover request and notify the timing reference. The source base station may notify the UE of the timing reference of the target base station, via the signaling for the acknowledgement. For example, the source base station may include the timing reference in the signaling for the handover instruction (e.g., the RRC reconfiguration (RRCReconfiguration)) and notify the timing reference. The UE may obtain the timing reference of the target base station via the signaling for the instruction. The UE may correct its own UE time, using the TA and the timing reference that are received from the target base station. The UE may correct its own UE time, for example, after receiving the TA. This enables, for example, the UE to promptly correct its own UE time.

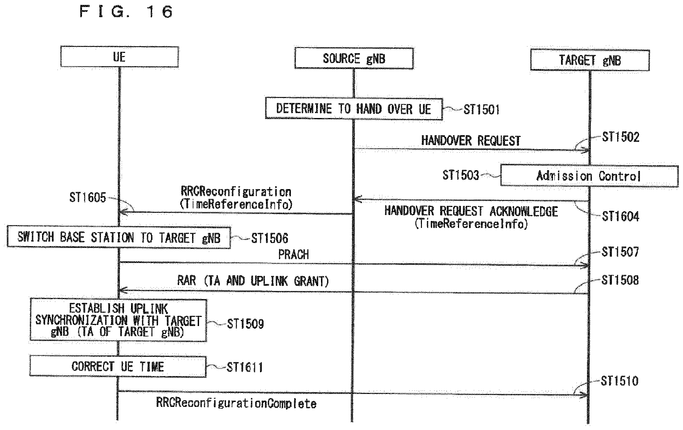

FIG. 16 is a sequence diagram illustrating another example of the operations of correcting the UE time in handover. FIG. 16 illustrates an example where both of the source base station and the target base station are NR base stations (gNBs). Furthermore, FIG. 16 illustrates an example where the UE obtains the timing reference from the target gNB using the handover instruction. In FIG. 16, the same step numbers are applied to processes common to those in FIG. 15, and the common description thereof is omitted.

Steps ST1501 to ST1503 in FIG. 16 are identical to those in FIG. 15.

In Step ST1604 of FIG. 16, the target gNB notifies the source gNB of the acknowledgement to the handover request (Handover Request Acknowledge). The target gNB includes the timing reference of its own gNB in the acknowledgement and notifies the source gNB of the timing reference. In Step ST1605, the source gNB instructs the UE of the handover to the target gNB. The source gNB includes the timing reference of the target gNB in the instruction and notifies the UE of the timing reference. The source gNB may issue the instruction, for example, via the signaling for the RRC reconfiguration (RRCReconfiguration). In Step ST1506, the UE switches the base station to which the UE is connected from the source gNB to the target gNB. In Step ST1506, the UE obtains the timing reference of the target gNB from the handover instruction received in Step ST1605. In Step ST1506, the UE may use its own UE time calculated using the timing reference and the TA that have been received from the source gNB. In Step ST1506, the UE may hold the timing reference and the TA that have been received from the source gNB.

Steps ST1507 to ST1509 in FIG. 16 are identical to those in FIG. 15.

In Step ST1611 of FIG. 16, the UE corrects its own UE time, using the TA received in Step ST1508 and the timing reference received in Step ST1605. The method for correcting the time may be identical to that in the example disclosed in FIG. 15. The UE may discard the timing reference and the TA of the source gNB in Step ST1611.

Step ST1510 in FIG. 16 is identical to that in FIG. 15.

The UE may use only the latest timing reference among the timing references received a plurality of number of times. For example, when the UE receives both the timing reference broadcast from the base station and the timing reference dedicatedly notified, the UE may use only the timing reference received later. The UE may discard the timing reference received earlier. This can, for example, increase the precision of the UE time.

Another solution is disclosed. The UE may estimate the TA of the target base station. The UE may correct its own UE time, using the estimated TA and the timing reference from the target base station. The UE may estimate the TA of the target base station, using a difference between the propagation delay from the target base station and the propagation delay from the source base station. The estimation by the UE should be applicable, for example, when slot timings (may be frame timings; the same may be applied to the following description) in transmission of the target base station and the source base station are the same. The estimation by the UE may be applied to, for example, the mobility between transmission/reception points (TRPs). This enables, for example, the UE to correct its own UE time before starting a random access procedure.

The UE may hold the slot timing of the source base station. The UE may hold the TA of the source base station. The UE may obtain the slot timing of the target base station. The UE may calculate the TA of the target base station, using the TA from the source base station and a difference between the slot timing of the target base station and the slot timing of the source base station. For example, the UE may estimate, as the TA from the target base station, a value obtained by doubling the difference between the slot timing of the source base station and the slot timing of the target base station and adding the result to the TA from the source base station. This enables, for example, the UE to correct its own UE time before the random access procedure with the target base station. The UE need not perform the random access procedure with the target base station. The UE may establish uplink synchronization with the target base station using the estimated TA. This enables, for example, the UE to promptly perform the handover process.

The signaling for the handover instruction from the source base station to the UE may include information on the frame timings of the source base station and the target base station. The information may be, for example, information indicating whether the frame timings of the two base stations are the same, information on whether to estimate the TA, or information on a difference in frame timing between the base stations. The information on the difference may be information in transmission of the two base stations. Using the information, the UE may or need not estimate the TA, or may determine whether to estimate the TA. This enables, for example, the UE to promptly estimate the TA.

The source base station may obtain information on the slot timing of the target base station. The source base station may obtain the information, for example, through a cell search. The source base station may derive the information on the frame timings of the source base station and the target base station, using the obtained information. The information on the frame timings of the source base station and the target base station may be the one previously described. The source base station may notify the UE of the derived information. As another example, the target base station may obtain information on the slot timing of the source base station. The target base station may obtain the information, for example, through a cell search. The target base station may notify the source base station of information on the slot timings of the source base station and the target base station, using the obtained information. For example, the source base station may notify the UE of the information. This enables, for example, the source base station or the target base station to obtain information on the slot timing of a corresponding one of the base stations.

The UE may obtain the frame timing of the target gNB. The UE may perform the operation of obtaining the frame timing, for example, during the measurement. The UE may notify the source gNB of information on the obtained timing or information on a difference in frame timing between the source gNB and the target gNB. The UE may, for example, include the information in a measurement result report from the UE to the source gNB and notify the information. The source gNB may calculate the TA in the connection between the target gNB and the UE, using the notification. The target gNB may calculate the TA and notify it to the source gNB. The source gNB may notify the UE of the TA. The source gNB may, for example, include the TA in a handover instruction from the source gNB to the UE and notify the TA. This enables, for example, the UE to promptly obtain the TA. Consequently, the UE can promptly establish synchronization with the target gNB.

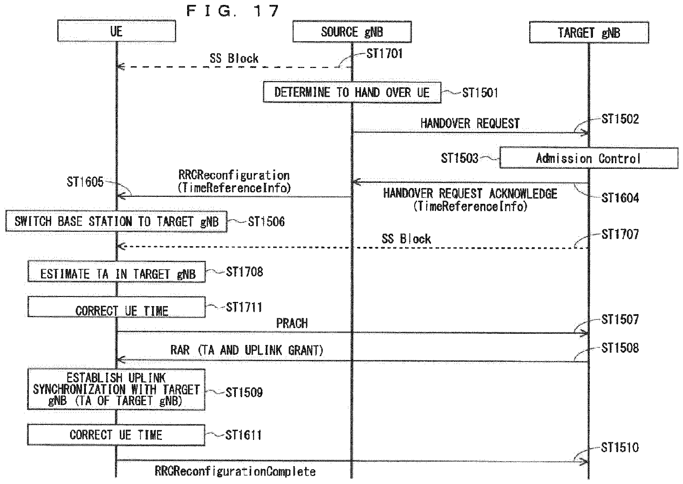

FIG. 17 is a sequence diagram illustrating an example where the UE performs operations of estimating the TA of the target base station and correcting the UE time in handover. FIG. 17 illustrates an example where both of the source base station and the target base station are NR base stations (gNBs). FIG. 17 illustrates an example where the frame timings of the source gNB and the target gNB are the same. Furthermore, FIG. 17 illustrates an example where the UE obtains the timing reference from the target gNB using the handover instruction. In FIG. 17, the same step numbers are applied to the processes common to those in FIGS. 15 and 16, and the common description thereof is omitted.

In Step ST1701 of FIG. 17, the UE receives the SS block from the source gNB to obtain the frame timing of the source gNB.

Steps ST1501 to ST1503 in FIG. 17 are identical to those in FIG. 15.

Steps ST1604, ST1605, and ST1506 are identical to those in FIG. 16.

In Step ST1707 of FIG. 17, the UE receives the SS block from the target gNB to obtain the frame timing of the target gNB. In Step ST1708, the UE estimates the TA in the target gNB, using the frame timing of the source gNB obtained in Step ST1701 and the frame timing of the target gNB obtained in Step ST1707. In Step ST1711, the UE corrects its own UE time, using the TA estimated in Step ST1708 and the timing reference received in Step ST1605. The method for correcting the time may be identical to that in the example disclosed in FIG. 15. The UE may discard the timing reference and the TA of the source gNB in Step ST1711.

Steps ST1507 to ST1509 and ST1611 and ST1510 in FIG. 17 are identical to those in FIG. 15.

FIG. 17 illustrates an example where the UE corrects its own UE time twice. This enables, for example, the UE to promptly obtain the time after the handover and obtain the precise time through the second correction.

Although FIG. 17 illustrates the example where the UE corrects its own UE time twice, the UE may correct its own UE time only once. For example, the UE need not perform Step ST1611 in FIG. 17. This can, for example, reduce the amount of processing in the UE.

FIG. 17 illustrates an example where the UE performs Step ST1707 of receiving the SS block from the target gNB after Step ST1506 of switching to the target gNB. Conversely, the UE may receive the SS block from the target gNB before the switching to the target gNB. For example, in the measurement before determining the handover in Step ST1501, the UE may receive the SS block from the target gNB and hold the frame timing from the target gNB. This enables, for example, the UE to promptly estimate the TA of the target gNB after switching to the target gNB.

The UE may correct its own UE time using only the TA from the target gNB. The UE may correct its own UE time, for example, when the time is synchronized between the source gNB and the target gNB. The source gNB may notify the UE of information on the clock synchronization with the target gNB. The information may be, for example, information on whether to perform the clock synchronization or information on the precision of the clock synchronization. The UE may correct its own UE time, using the clock synchronization information and the TA from the target gNB. For example, the UE need not receive the timing reference from the target gNB. Consequently, the UE can promptly correct its own UE time.

The UE may discard the received timing reference. For example, if the UE is handed over before arrival of the SFN included in the timing reference, the UE may discard the timing reference. As another example, if the UE receives a plurality of timing references, the UE may discard the timing references except the latest timing reference. This can, for example, prevent a malfunction in the UE time.

If the UE is handed over before arrival of the SFN included in the timing reference, the UE may configure or correct its own UE time with reference to the SFN before the handover. This can, for example, reduce the signaling between the base station and the UE.

The UE may increase uncertainty in its own UE time. The amount of increased uncertainty may be determined using the clock precision of its own UE. The amount of increased uncertainty may be, for example, a value obtained by multiplying a clock error of its own UE per unit time by the elapsed time since the previous correction of its own UE time or since the previous increase in the uncertainty. The UE may perform the operation of increasing uncertainty regardless of the presence or absence of handover. The UE may perform the operation of increasing uncertainty, for example, while the UE does not receive the timing reference from the base station.

As another example, the UE may increase uncertainty in handover. The UE may increase uncertainty, upon receipt of the timing reference from the target base station or in the absence of receiving the TA from the target base station. For example, the UE may add, to the uncertainty, a time value corresponding to the propagation delay of half a distance of a cell radius of the target base station. The UE may assume, as the TA from the target base station, the time value corresponding to the propagation delay of half a distance of the cell radius. The UE may correct its own UE time, using the timing reference from the target base station and the assumed TA. This enables, for example, the UE to promptly calculate the UE time after the handover.

The method according to the first embodiment may be applied to the mobility between the DUs and/or the mobility between the TRPs as well as to the handover exemplified as the mobility between the base stations. This can, for example, prevent sudden change in the time of the UE with mobility even when the base station has a plurality of DUs and/or TRPs. Consequently, a malfunction in the communication system can be prevented.

Here, a commonality among the base stations, the DUs, and the TRPs is that they are communication apparatuses configured to perform radio communication with the UE. Thus, the mobility between the base stations, the mobility between the DUs, and the mobility between the TRPs can be referred to as mobility between the communication apparatuses.

The method according to the first embodiment may be applied to the movement of the UE between the communication apparatuses. The method according to the first embodiment may be applied, for example, when the TA is changed. The UE may correct its own UE time, simultaneously using the changed TA and the timing reference received after the TA has been changed. This can, for example, prevent sudden change in its own UE time when the TA is changed. Consequently, a malfunction in the communication system can be prevented.

When the UE moves between the communication apparatuses, the UE may correct its own UE time, using the changed TA and a difference between the downlink frame timing in the previous correction of its own UE time and the downlink frame timing after the TA has been changed. The UE may hold information on the downlink frame timing in the previous correction of its own UE time in calculating the difference. The UE may correct its own UE time before receiving the timing reference after the TA has been changed. This enables, for example, the UE to promptly correct its own UE time after receiving the changed TA.

The first embodiment can prevent sudden change in the time of the UE with mobility. Consequently, a malfunction in a system using the TSN can be prevented.

The first modification of the first embodiment

The clock synchronization between the base station and the UE in the TSN may be applied when the DC is used.

The UE corrects its own UE time each time the UE receives the timing reference from the master base station and/or the secondary base station.

The UE may prioritize the timing reference from the master base station. For example, the UE may discard the timing reference transmitted from the secondary base station. This can, for example, avoid the complexity in the communication system.

As another example, the UE may prioritize the timing reference from the secondary base station. For example, when the master base station is an eNB and the secondary base station is a gNB, the UE may prioritize the timing reference from the secondary base station. The gNB may be more precise than the eNB. This can, for example, maintain the UE time with high precision.

As another example, the UE may determine the timing reference from which base station should be prioritized. The UE may make the determination, for example, using information on the precision of the time in each base station. For example, the UE may prioritize the timing reference from the base station with higher precision. The information on the precision may be, for example, information on the uncertainty included in the timing reference. This can, for example, increase the precision of the UE time.

As another example, the base station itself may determine the timing reference from which base station should be prioritized, and notify it to the UE. The base station may give the notification, for example, via the RRC signaling, the MAC signaling, or the L1/L2 signaling. The base station that makes the determination may be a master base station or a secondary base station. The base station may make the determination, for example, using information on the precision of the time in each base station. For example, the master base station may determine to prioritize the timing reference from the base station with higher precision. The information on the precision may be, for example, information on the uncertainty included in the timing reference. This can, for example, increase the precision of the UE time.

As another example, the UE may make the determination using a validity period of the timing reference to be disclosed in the second modification of the first embodiment. For example, the UE may prioritize the timing reference from the base station with a longer validity period. This produces, for example, the same advantages as previously described. The base station may make the determination in the similar manner.

As another example, the UE may make the determination using the maximum value of the validity period. The master base station and/or the secondary base station may broadcast, to the UEs, information on the maximum value of the validity period of the timing reference, or dedicatedly notify it to each of the UEs. Although, for example, the update of the timing reference with the passage of time causes a phenomenon of alternately switching between the base stations determined by the UE, the notification can prevent the phenomenon. The base station may make the determination in the similar manner.

As another example, the high-level NW device may notify the UE of information on the timing reference from which base station the UE uses. The high-level NW device may be a 5G core system, for example, the AMF or the SMF. As another example, the high-level NW device may be the EPC, e.g., the MME. The high-level NW device may give the notification, for example, via the NAS signaling, or via a combination of the signaling in the interface between the high-level NW device and the base station and the signaling in the interface between the base station and the UE (e.g., a combination of the RRC signaling, the MAC signaling, and the L1/L2 signaling).

As another example, the UE may hold a plurality of times. The UE may hold, for example, both of the time configured and/or corrected using the timing reference from the master base station and the time configured and/or corrected using the timing reference from the secondary base station. This can, for example, prevent sudden change in the UE time even when the time differs between the master base station and the secondary base station. Consequently, a malfunction in the communication system can be prevented.

As another example where the UE holds a plurality of times, a different UE time may be provided for each requirement of a service used by the UE. For example, the UE may hold the UE time for each different network slicing. This enables, for example, flexible time management in the requirements of different services used by the UE.

Information on the timing reference may include information on a transmission source base station. The master base station and/or the secondary base station may include information on its own base station in the information on the timing reference and notify the information on its own base station to the UE. The information on the base station may be, for example, an identifier indicating the master base station or the secondary base station. The UE may identify the base station that is a transmission source of the timing reference, using the information on the transmission source base station.

The information on the timing reference need not include the information on the transmission source base station. The UE may determine with the time of which base station the data is associated, using information on a communication path with the base station, for example, information on a use bearer. This can, for example, avoid the complexity in the communication system.

Information indicating the time at which the timing reference from which base station is used may be included in or added to data to be transmitted from the base station to the UE. For example, the UPF, the AMF, or the base station may include or add the information. When the base station includes or adds the information, the RRC layer, the SDAP layer, a layer higher than the RRC layer or the PDCP layer, the RLC layer, or the MAC layer may include or add the information.

The base station may notify the UE of the information via the RRC signaling, include the information in the SDAP header or the PDCP header and notify the UE of the information, notify the UE of the information as the PDCP control PDU, include the information in the RLC header and notify the UE of the information, notify the UE of the information as the RLC control PDU, include the information in the MAC header and notify the UE of the information, or notify the UE of the information via the MAC signaling or the L1/L2 signaling. The UE may determine with the time of which base station the data is associated, using the information.

The UPF or the AMF may determine using the timing reference from which base station the data is processed. For example, the UPF may make the determination on the U-plane data, the AMF may make the determination on the C-plane data, or the AMF may make the determination on both of the U-plane data and the C-plane data. The determination may be made, for example, using information on the precision of the time in each base station.

The information may be, for example, information on the uncertainty included in the timing reference. Each base station may notify the UPF and/or the AMF of the information on the precision. Alternatively, the UE may notify it to the AMF. Each base station may notify the UPF and/or the AMF through the NG interface. The UE may notify the AMF via the NAS signaling. The AMF may notify the UPF of the information on the precision or information on the determination. The AMF may give the notification to the UPF through the SMF. The UPF and/or the AMF may, for example, determine to use the time of the base station having more precise time. This enables, for example, clock synchronization with higher precision between the UEs.

As another example, the information indicating the time at which the timing reference from which base station is used need not be included in the data to be transmitted from the base station to the UE. The UE may determine with the time of which base station the data is associated, using information on a communication path with the base station, for example, information on a use bearer.

As another example method for correcting the time in the UE, the UE may increase uncertainty in its own UE time. For example, UE may use, as the uncertainty in its own UE time, a range including the time calculated using the timing reference from the master base station and the time calculated using the timing reference from the secondary base station. The UE may configure, as its own UE time, a value between the aforementioned times, for example, a median between the times. This can, for example, avoid the design complexity in the communication system.

Another solution is disclosed. The UE may request the base station to correct the time. The base station may be the master base station or the secondary base station. When the UE transmits a request for correcting the time to the secondary base station, the UE may transmit the request to the secondary base station directly or through the master base station. In response to the request, the base station may correct the time of its own base station.

The UE may determine the base station whose time should be corrected, using information on the timing reference from each base station. The UE may determine, for example, a base station with lower precision as the base station whose time should be corrected. This enables, for example, the clock synchronization based on the base station with higher precision. Consequently, the UEs in the communication system can be synchronized with higher precision. As another example, the UE may determine a base station with higher precision as the base station whose time should be corrected.

As another example in correcting the time of a base station, the UE may notify the high-level NW device of a request for correcting the time of the base station. The high-level NW device may be, for example, the AMF. The UE may give the notification to the high-level NW device, for example, via the NAS signaling. The high-level NW device may notify the base station of the request. In response to the notification, the base station may correct the time of its own base station.

As another example, the base station may notify the high-level NW device of information on the time of its own base station. The high-level NW device may be, for example, the AMF. The high-level NW device may notify the base station of a request for correcting the time, using the information. In response to the notification, the base station may correct the time of its own base station.

The request may include information indicating the request for correcting the time, information on the base station whose time should be corrected, or information on the amount of time to be corrected. The information on the base station whose time should be corrected may be, for example, an identifier indicating the master base station or the secondary base station.

The information on the amount of time to be corrected may be given as, for example, an amount of correction per predetermined time unit. The base station may correct its own time, using information included in the request. The base station may notify the UE of information indicating the completion of the correction. The base station may notify the information indicating the completion, through another base station or the high-level NW device.

The time may be corrected between the base stations. Such a correction may be performed, for example, in response to a request from the UE.

The base station whose time should be corrected may broadcast or notify the timing reference using the corrected time, to the UEs being served thereby. The UEs being served thereby may configure its own UE times, using the timing reference. This enables, for example, the clock synchronization between the UEs in the communication system.

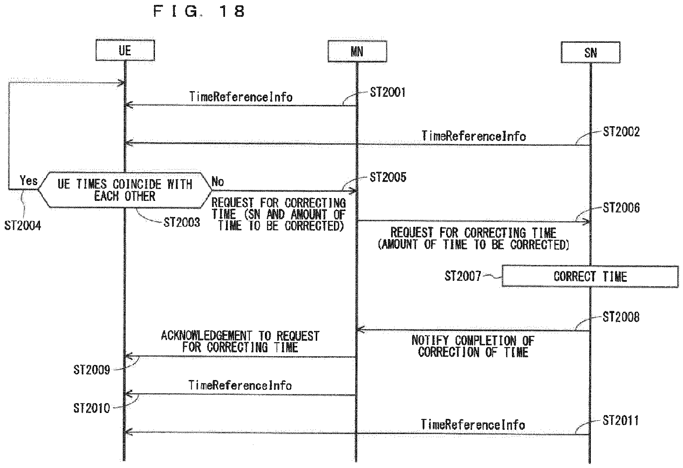

FIG. 18 is a sequence diagram illustrating example operations of correcting the time between the base stations. FIG. 18 illustrates an example where the UE requests the master base station (MN) to correct the time of the secondary base station (SN). FIG. 18 illustrates an example where the MN requests the SN to correct the time. It is assumed in FIG. 18 that the UE has already obtained the TAs from the MN and the SN.

In Step ST2001 of FIG. 18, the MN notifies the UE of the timing reference. The UE calculates the UE time using the timing reference from the MN (hereinafter may be referred to as a MN-referenced UE time). In Step ST2002, the SN notifies the UE of the timing reference. The UE calculates the UE time using the timing reference from the SN (hereinafter may be referred to as an SN-referenced UE time).

In Step ST2003 of FIG. 18, the UE compares the MN-referenced UE time with the SN-referenced UE time. The UE may compare the UE times, for example, using the presence or absence of an overlap between a range of the MN-referenced UE time and its uncertainty and a range of the SN-referenced UE time and its uncertainty. For example, in the presence of the overlap, the UE may determine that the UE times coincide with each other.

When the UE times coincide with each other in Step ST2003 of FIG. 18, in Step ST2004, the UE returns to the operations of receiving the timing references of the two base stations in Steps ST2001 and ST2002. When the UE times are different in Step ST2003, the UE transmits, to the MN, a request for correcting the SN time in Step ST2005. The request may include information indicating the SN whose time should be corrected, or information on the amount of time to be corrected. The UE may calculate the amount of time to be corrected, using a difference between the UE times.

In Step ST2006 of FIG. 18, the MN requests the SN to correct the time. The request may include information on the amount of SN time to be corrected. The information may be the amount of time to be corrected which the MN has obtained from the UE in Step ST2005. In Step ST2007, the SN corrects the time of its own base station, using the obtained information on the amount of time to be corrected in Step ST2006.

In Step ST2008 of FIG. 18, the SN notifies the MN of the completion of correction of the time of its own base station. In Step ST2009, the MN notifies the UE of the acknowledgement to the request for correcting the SN time. The notification in Step ST2009 may be notification indicating the completion of correction of the SN time.

Steps ST2010 and ST2011 in FIG. 18 are identical to Steps ST2001 and ST2002. In Step ST2011, the SN notifies the timing reference using the corrected time. The UE calculates the MN-referenced UE time and the SN-referenced UE time, using the timing reference obtained in Step ST2010 and the timing reference obtained in Step ST2011, respectively.

Another solution is disclosed. The UE may configure its own UE time in an overlap between the range of its own UE time and its uncertainty which have been found using the timing reference from the master base station and the range of its own UE time and its uncertainty which have been found using the timing reference from the secondary base station. The UE may configure a median of the overlapping range as its own UE time, or a range including the overlapping range as a range of the uncertainty in its own UE time. This enables, for example, the UE to increase the precision of its own UE time using the timing references from the two base stations.

The method for correcting the time of the base station disclosed in the first modification of the first embodiment may be applied to the handover. This enables, for example, the clock synchronization between the base stations.

As an example of correcting the time of the base station in handover, the time of the source base station may be corrected. The UE may request the target base station to correct the time of the source base station. The UE may notify the target base station of the request, after obtaining the timing reference and the TA from the target base station. The UE may correct its own UE time, before or after notifying the request to the target base station or simultaneously with the notification.

The target base station may request the source base station to correct the time. Information included in the request from the UE to the target base station or the request from the target base station to the source base station may be identical to the information previously disclosed. In response to the request from the target base station, the source base station may correct the time of its own base station.

As another example, the time of the target base station may be corrected. The UE may request the target base station to correct the time. The UE may notify the target base station of the request, after obtaining the timing reference and the TA of the target base station. Information included in the request from the UE to the target base station may be identical to the information previously disclosed. In response to the request from the UE, the target base station may correct the time of its own base station. The UE may correct its own UE time, using the timing reference and the TA from the target base station after the correction.

The UE may determine which time of the source base station or the target base station should be corrected in handover. For example, the UE may determine to correct the time of the base station with lower precision of the time. As another example, the source base station or the target base station may make the determination.

The high-level NW device may instruct the base station to correct the time of the base station in handover. The UE may notify the high-level NW device of information on the correction of the time from each base station. The UE may give the notification, for example, via the NAS signaling. The method for the high-level NW device to instruct the base station to correct the time of the base station may be identical to the method for correcting the time using the high-level NW device in the DC.

As another example, the UE may determine its own UE time, using both of the timing reference from the target base station and the timing reference from the source base station. For example, the UE may determine its own UE time in an overlap between the range of its own UE time and its uncertainty which have been found using the timing reference from the target base station and the range of its own UE time and its uncertainty which have been found using the timing reference from the source base station. This can, for example, increase the precision of the time in the UE.

The method for correcting the time of the base station disclosed in the first modification of the first embodiment may be applied to correction of the time of a surrounding base station of the UE. The base station may be a base station that is not connected to the UE. The method may be applied when any device in the communication system knows a difference in frame timing between the surrounding base station and the base station that is being connected to the UE.

The UE may obtain the timing reference of the surrounding base station. The timing reference obtained by the UE may be the one broadcast from the surrounding base station. The UE may estimate the TA of the surrounding base station, using the frame timing of the surrounding base station. The UE may estimate the TA in the method disclosed in the first embodiment. The UE may request the base station that is being connected to the UE to correct the time of the surrounding base station.

The UE may make the request, for example, via the RRC signaling, the MAC signaling, or the L1/L2 signaling. The base station that is being connected to the UE may request the surrounding base station to correct the time. Each of information included in the request from the UE to the base station that is being connected to the UE and information included in the request from the base station that is being connected to the UE to the surrounding base station may be identical to the information disclosed in the first modification of the first embodiment. In response to the request from the base station that is being connected to the UE, the surrounding base station may correct the time of its own base station.

The high-level NW device may instruct the base station to correct the time of the surrounding base station, similarly to the correction of the time of the base station in handover.

As another example, the UE may determine its own UE time, using both of the timing reference from the base station to which the UE is connected and the timing reference from the surrounding base station. For example, the UE may determine its own UE time in an overlap between the range of its own UE time and its uncertainty which have been found using the timing reference from the base station to which the UE is connected and the range of its own UE time and its uncertainty which have been found using the timing reference from the surrounding base station. The number of the surrounding base stations may be one or more. This can, for example, increase the precision of the time in the UE.

The method according to the first modification of the first embodiment may be applied to the movement of the UE between the communication apparatuses. For example, upon receipt of the timing references from a plurality of DUs, the UE may determine its own UE time using the timing reference from the DU higher in precision of the timing reference, or determine a range of its own UE time and its uncertainty in an overlap between ranges of its own UE time and its uncertainty which have been found using the timing references from at least two of the DUs. This can, for example, increase the precision of the UE time.

As another example, the UE immediately before performing handover may communicate with the source base station using the DU whose validity period of the timing reference is longer among the DUs to which the UE can be connected. This can, for example, prevent deterioration of the precision of its own UE time during the handover of the UE.

The first modification of the first embodiment clarifies the base station with which the UE performs clock synchronization. Consequently, a malfunction in the communication system can be prevented. Furthermore, a time error between the base stations can be corrected in the DC. Consequently, the number of the UEs whose clocks can be synchronized with each other in the communication system can be increased.

### The second modification of the first embodiment

Since the beamforming is used in NR, the gNB needs to notify the UEs being served thereby of the timing reference in a plurality of beam directions. Thus, it takes time to transmit the timing reference from the base station to the UEs. Consequently, the error between the UE times may be increased, for example, when the clock precision in the UEs is low.

A method for solving the problem is disclosed.

A validity period of the timing reference is provided. The UE may provide the validity period. The validity period may be predefined in a standard. The validity period may be, for example, a fixed value, or determined using the clock precision of the UE. The information on the validity period may be included in the UE capability. The information may be, for example, the validity period or information on the clock precision in the UE.

A timer on the validity period may be provided. The base station may have the timer. The UE may notify the base station of information on the validity period. The UE may notify, for example, the UE capability. The base station may configure the timer in the validity period of the timing reference in the UE, using the notification. The timer may be initialized and started by the broadcast or the notification of the timing reference from the base station to the UE. The base station may notify the UE of the timing reference upon expiration of the timer. This can, for example, prevent increase in the error between the UE times.

The UE may have the timer on the validity period. The UE may initialize and start the timer upon receipt of the timing reference broadcast or notified from the base station. The UE may request the timing reference from the base station upon expiration of the timer. The UE may make the request via the RRC signaling, the MAC signaling, or the L1/L2 signaling. In response to the request, the base station may notify the UE of the timing reference. This can, for example, prevent increase in the error between the UE times.

Another solution is disclosed. The UE may always obtain the timing reference that is cyclically broadcast. The base station may broadcast or notify, in advance, a broadcast cycle of the timing reference to the UE. This can, for example, prevent increase in the error between the UE times.

As another example, the UE may obtain, on a part of the broadcast cycle, the timing reference that is cyclically broadcast. For example, the UE may obtain the timing reference every plural cycles. The number of the cycles may be determined, for example, using the clock precision in the UE. For example, the UE need not perform an operation of receiving a part of the broadcast of the timing reference. Consequently, the power consumption in the UE can be reduced.

The UE may notify the base station of information on whether dedicated notification of the timing reference is necessary. For example, when the precision of the time can be sufficiently maintained only through reception of the timing reference cyclically broadcast, the UE may notify the base station that the dedicated notification of the timing reference is unnecessary. The information may be included in, for example, the UE capability. In response to the information, the base station need not dedicatedly notify the UE of the timing reference. This can, for example, increase the efficiency in the communication system.

The timer in the second modification of the first embodiment may be applied to the validity period and/or the TA. The validity period of the TA and/or the timer may be provided as a timer different from timeAlignmentTimer described in Non-Patent Document 17 (3GPP TS 38.321 V15.2.0). The validity period and/or the timer may be a value shorter than the timeAlignmentTimer. A method of configuring the timer of the TA and operations of the timer may be identical to those of the timer for the timing reference.

For example, the base station may notify the UE of the TA upon expiration of the timer in the TA. The UE may correct its own UE time using the TA. As another example, the value of the timer may be determined using the moving speed of the UE. The moving speed may be, for example, a moving speed in a cell radius direction. This enables, for example, the base station to promptly understand change in the TA due to the movement of the UE. Consequently, the precision of the UE time can be maintained.

The base station may obtain the moving speed of the UE using an uplink RS. The base station may calculate the moving speed of the UE, for example, using the amount of the Doppler shift of the uplink RS. The uplink RS may be, for example, the DMRS, the SRS, or the PTRS. As another example, the uplink RS may be an RS for positioning.

Both of the timer for the timing reference and the timer of the TA may be used. This can, for example, further increase the precision of the UE time.

The second modification of the first embodiment can prevent increase in the time error caused by the clock error in the UE.

### The Second Embodiment

In the communication of U-plane data and/or C-plane data in the TSN, the latency may remain constant.

However, a problem of varying latency occurs before, after, or in the mobility such as the handover. Furthermore, for example, the shortage of frequency resources and/or time resources in the base station causes a problem of varying latency in the communication between the base station and the UE.

A method for solving the problems is disclosed.

The UE communicates through a plurality of PDU sessions. A path that passes through each of the master base station and the secondary base station may have the plurality of PDU sessions. The plurality of PDU sessions may be configured for one network slicing. The UE transmits and receives data in a PDU session that passes through the base station without any mobility. The PDU session in which the data is transmitted and received may be switched among the plurality of PDU sessions.

For example, when the master base station is switched, the UE may switch an uplink data transmission path to the path that passes through the secondary base station. The UPF may switch a downlink data transmission path to the path that passes through the secondary base station.

As another example, when the secondary base station is switched, the UE may switch the uplink data transmission path to the path that passes through the master base station. The UPF may switch the downlink data transmission path to the path that passes through the master base station.

The master base station may instruct the UE to switch the uplink data transmission path. The master base station may be the source master base station when the master base station is switched. The instruction may include information indicating through which base station the path to be used passes, or information on data for which the path is switched. The information on the data for which the path is switched may be, for example, information on the QoS flow, information on a bearer, or information on a PDU session. In response to the instruction, the UE may switch the path to be used for transmitting the uplink data. This enables, for example, the UE to switch a transmission path only for data requiring such switching. Consequently, congestion in the transmission path at a switching destination can be prevented.

The UE may transmit, to the master base station, a response to the instruction. This can, for example, prevent a variance on the uplink data communication path between the UE and the master base station. Consequently, a malfunction in the communication system can be prevented.

After the switching instruction, the UE may receive the downlink data from the base station before the switching or the base station after the switching. This can, for example, prevent missing of the downlink data before or after the UPF switches the downlink data transmission path.

The master base station may instruct the UE via the RRC signaling. For example, the instruction may be included in the signaling for the RRC reconfiguration (RRCReconfiguration). This can, for example, avoid the design complexity in the communication system. As another example, the master base station may instruct the UE via the MAC signaling. For example, the MAC CE for switching the path may be provided. This enables, for example, the master base station to promptly notify the UE to switch the uplink data transmission path. As another example, the master base station may instruct the UE via the L1/L2 signaling. This enables, for example, the master base station to further promptly notify the UE of the switching.

The UE may respond to the master base station via the RRC signaling, the MAC signaling, or the L1/L2 signaling. The UE may response, for example, via the signaling for the RRC reconfiguration completion (RRCReconfigurationComplete), as the HARQ response to the MAC CE including the instruction, or via another signaling.

The master base station may instruct the AMF to switch the downlink data transmission path in the UPF. The master base station may be the source master base station when the master base station is switched. The AMF may transfer the instruction to the UPF. The AMF may transfer the instruction to the UPF through the SMF. The instruction may include information indicating through which base station the path to be used passes, or information on data for which the path is switched.

The information on the data for which the path is switched may be, for example, information on the QoS flow or information on a PDU session. In response to the instruction, the UPF may switch the path to be used for transmitting the downlink data. This enables, for example, the UPF to switch a transmission path only for data requiring such switching. Consequently, congestion in the transmission path at a switching destination can be prevented.

The UPF may transmit, to the AMF, a response to the instruction. The UPF may transmit the response through the SMF. The AMF may transfer the response to the master base station. This can, for example, prevent a variance on the uplink data communication path between the high-level NW device and the master base station. Consequently, a malfunction in the communication system can be prevented.

After the switching instruction, the UPF may receive the uplink data from the base station before the switching or the base station after the switching. This can, for example, prevent missing of the uplink data before or after the UE switches the uplink data transmission path.

The master base station may issue the instruction to the AMF via the signaling in the NG interface. The signaling for transmitting the instruction may be an existing signaling, or newly provided. The AMF may transfer the instruction to the UPF in the same manner. The UPF may respond to the instruction from the AMF in the same manner. The AMF may transfer the response to the UE in the same manner.

The PDU session may have an activated/deactivated state. In the switching of the communication path, activation and deactivation of the PDU session may be used. The UE and/or the UPF may transmit data through the activated PDU session. The UE and/or the UPF may be able to receive data through the activated PDU session or the deactivated PDU session. This produces, for example, the same advantages as previously described.

The latency between the UPF and the UE should be consistent in the plurality of PDU sessions. For example, the latency in transmitting and receiving data before and after switching the PDU session to be used for the data transmission can be held constant.

When the UE and the UPF transmit and receive data therebetween, the transmitter may notify information on the transmission time of transmission data or information on the due time at which the receiver should perform reception. The transmitter may be the UE or the UPF. The receiver may be the UPF or the UE. The reception due time may be, for example, the time at which the receiver should transfer data to the upper layer.

The time may be, for example, the time per millisecond, the time using a subframe number, the time using a slot number, the time using a mini-slot number, the time using a symbol number, or the time using a combination of some of these. The transmitter may, for example, attach a timestamp to the transmission data. The timestamp may represent information identical to the aforementioned time. The upper layer, the SDAP, the PDCP, the RLC, or the MAC may attach the timestamp.

As another example, the transmitter may notify the information on the transmission time via the NAS signaling, the RRC signaling, the MAC signaling, or the L1/L2 signaling. The receiver may derive the timing using the information on the transmission time. The receiver may remove the timestamp from the received data. The method may be applied to the plurality of PDU sessions between the UE and the UPF. This enables, for example, the latency when the UE and the UPF transmit and receive data therebetween to be consistent among the plurality of PDU sessions.

The AMF may notify the UPF and/or the UE of information on the latency between the UE and the UPF. The information may be, for example, the latency required for the communication between the UPF and the UE. The AMF may give the notification, for example, via the signaling in the NG interface or via the NG signaling. The UPF and/or the UE may obtain the latency between the UPF and the UE, using the information.

The notification of the information on the transmission time of transmission data from the transmitter and/or the information on the due time at which the receiver should perform reception when the UE and the UPF transmit and receive data therebetween may be applied to cyclical transmission and reception of data. The information on the due time at which the receiver should perform reception may be, for example, a combination of a cycle and an offset, that is, one due time at which the receiver should perform reception. The information may include information indicating that the data is cyclically transmitted and received. The UE and/or the UPF may transfer the received data to the upper layer using the information. For example, the latency in cyclically transmitting and receiving the data can be maintained constant.

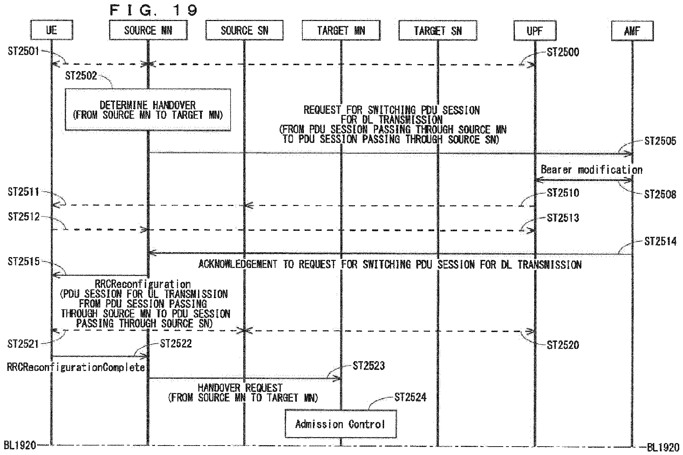

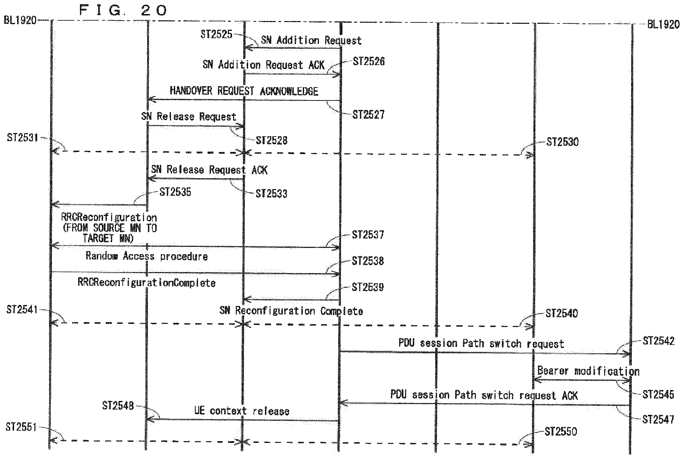

FIGS. 19 and 20 illustrate a sequence diagram of operations of switching between the PDU sessions to be used for transmitting data and switching between the base stations to which the UE is connected according to the second embodiment. FIGS. 19 and 20 are connected across a location of a border BL1920. FIGS. 19 and 20 illustrate an example of transmitting and receiving the U-plane data between the UE and the UPF.

In the example illustrated in FIGS. 19 and 20, the PDU session to be used for transmitting and receiving data is switched from the PDU session that passes through the source master base station (source MN) to the PDU session that passes through the secondary base station, and the master base station to which the UE is connected is switched from the source MN to the target MN.

In Steps ST2500 and ST2501 of FIG. 19, data is transmitted and received between the UE and the UPF through the source MN. Step ST2500 indicates transmission and reception of data between the UPF and the source MN, and ST2501 indicates transmission and reception of the data between the source MN and the UE.

In Step ST2502 of FIG. 19, the source MN determines to switch the master base station from its own base station to the target MN. In Step ST2502, the source MN may determine not to switch the secondary base station.

In Step ST2505 of FIG. 19, the source MN requests the AMF to switch the PDU session to be used for transmitting the downlink U-plane data between the UE and the UPF from the PDU session passing through its own base station to the PDU session passing through the source SN. In Step ST2508, the AMF notifies the UPF of the request for the switching, and the UPF notifies the AMF of the completion of the switching. The notification of the request and the completion may be performed through the SMF. In response to the notification of the request, the UPF switches the PDU session to be used for transmitting the downlink U-plane data from the PDU session passing through the source MN to the PDU session passing through the source SN.

In Steps ST2510 and ST2511 of FIG. 19, the UPF transmits the downlink U-plane data to the UE through the source SN. Step ST2510 indicates transmission of the data from the UPF to the source SN, and ST2511 indicates transmission of the data from the source SN to the UE. In Steps ST2512 and ST2513, the UE transmits the uplink U-plane data to the UPF through the source MN. Step ST2512 indicates transmission of the data from the UE to the source MN, and ST2513 indicates transmission of the data from the source MN to the UPF.

In Step ST2514 of FIG. 19, the AMF transmits, to the source MN, the acknowledgement to the request for switching the PDU session in Step ST2505. The AMF may transmit the acknowledgement, using the switching completion notification from the UPF to the AMF in Step ST2508.

In Step ST2515 of FIG. 19, the source MN instructs the UE to switch the PDU session to be used for transmitting the uplink U-plane data between the UE and the UPF from the PDU session passing through its own base station to the PDU session passing through the source SN. For example, the instruction may be included in the signaling for the RRC reconfiguration (RRCReconfiguration). In response to the instruction, the UE switches the PDU session to be used for transmitting the uplink U-plane data from the PDU session passing through the source MN to the PDU session passing through the source SN.

In Steps ST2520 and ST2521 of FIG. 19, data is transmitted and received between the UE and the UPF through the source SN. Step ST2520 indicates transmission and reception of data between the UPF and the source SN, and ST2521 indicates transmission and reception of the data between the source SN and the UE.

In Step ST2522 of FIG. 19, the UE notifies the source MN of the response to the instruction for switching in Step ST2515. The UE may notify the response via the signaling for the RRC reconfiguration completion (RRCReconfigurationComplete).

In Step ST2523 of FIG. 19, the source MN notifies the target MN of the handover request. The notification may include information indicating that the secondary base station is not switched. In Step ST2524, the target MN performs admission control on the handover.

In Step ST2525 of FIG. 20, the target MN issues a secondary base station addition request (Secondary Node Addition Request) to the source SN. In Step ST2526, the source SN notifies the target MN of the secondary base station addition request acknowledgement (Secondary Node Addition Request Acknowledge).

In Step ST2527 of FIG. 20, the target MN responds to the source MN with the acknowledgement to the handover request (Handover Request Acknowledge) in Step ST2523.

In Step ST2528 of FIG. 20, the source MN issues a secondary base station release request (Secondary Node Release Request) to the source SN. After the notification of the request, transmission and reception of the data between the UE and the UPF through the source SN may be continued. The source MN may include, in the request, information indicating the continuance of transmission and reception of the data through the source SN.

Steps ST2530 and ST2531 in FIG. 20 are identical to Steps ST2520 and ST2521, respectively.

In Step ST2533 of FIG. 20, the source SN notifies the source MN of the acknowledgement to the secondary base station release request (Secondary Node Release Request Acknowledge).

In Step ST2535 of FIG. 20, the source MN instructs the UE of the handover from its own base station to the target MN. For example, the instruction may be included in the signaling for the RRC reconfiguration (RRCReconfiguration). The instruction may include information indicating no change in the secondary base station. In response to the instruction, the UE performs a handover from the source MN to the target MN without changing the secondary base station from the source SN.

In Step ST2537, the UE performs the random access procedure with the target MN. In Step ST2538, the UE notifies the target MN of the completion of the handover. The UE may give the notification, for example, via the signaling for the RRC reconfiguration completion (RRCReconfigurationComplete). In Step ST2539, the target MN notifies the source SN of the secondary base station reconfiguration completion (Secondary Node Reconfiguration Complete).

Steps ST2540 and ST2541 in FIG. 20 are identical to Steps ST2520 and ST2521, respectively.

In Step ST2542 of FIG. 20, the target MN notifies the AMF of a request for switching a path of the PDU session between the UE and the UPF through the source MN to a path passing through the target MN. The target MN may notify the request, for example, via the signaling for a PDU session path switch request. In Step ST2545, the AMF notifies the UPF of the request for the switching, and the UPF notifies the AMF of the completion of the switching. The notification of the request and the completion may be performed through the SMF. In response to the notification of the request, the UPF switches the path of the PDU session between the UE and the UPF through the source MN to the path passing through the target MN.

In Step ST2547 of FIG. 20, the AMF transmits, to the target MN, the acknowledgement to the request for switching the PDU session path in Step ST2542. The AMF may transmit the acknowledgement, using the switching completion notification from the UPF to the AMF in Step ST2545.

In Step ST2548 of FIG. 20, the target MN instructs the source MN to release the UE context. The target MN may issue the instruction, for example, via the signaling for the UE context release.

Steps ST2550 and ST2551 in FIG. 20 are identical to Steps ST2520 and ST2521, respectively.

FIGS. 19 and 20 illustrate an example of switching the PDU session for transmitting the downlink data in Steps ST2505 to ST2514 before switching the PDU session for transmitting the uplink data in Steps ST2515 to ST2522. Conversely, the PDU session for transmitting the downlink data may be switched after switching the PDU session for transmitting the uplink data. As another example, the PDU session for transmitting the uplink data may be switched during the switching of the PDU session for transmitting the downlink data. For example, Step ST2515 may be performed between Steps ST2505 and ST2514. As another example, the PDU session for transmitting the downlink data may be switched during the switching of the PDU session for transmitting the uplink data. For example, Step ST2505 may be performed between Steps ST2515 and ST2522. This can, for example, increase the flexibility in the communication system.

Although FIGS. 19 and 20 illustrate the switching of the path for transmitting and receiving the U-plane data, a transmission/reception path in the C-plane may be switched. In switching of the transmission/reception path in the C-plane, the C-plane data may be transmitted and received between the UE and the AMF. This can, for example, prevent the latency in the C-plane data from varying due to the switching between the base stations.

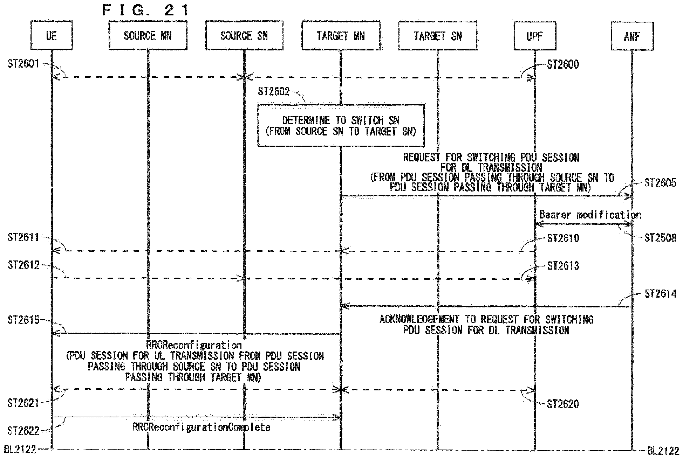

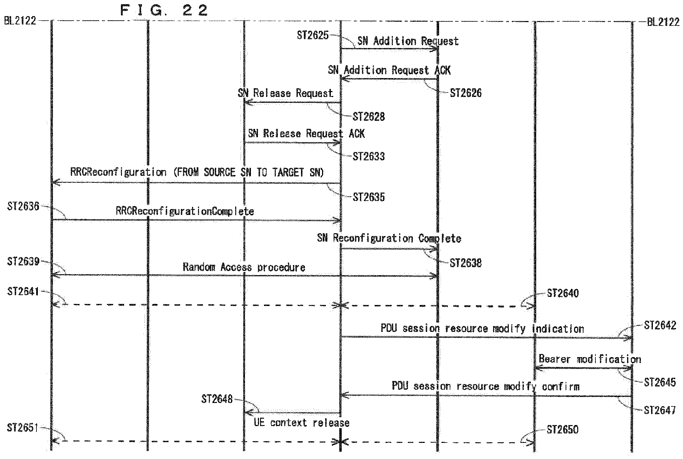

FIGS. 21 and 22 illustrate a sequence diagram of another example of operations of switching between the PDU sessions to be used for transmitting data and switching between the base stations to which the UE is connected according to the second embodiment. FIGS. 21 and 22 are connected across a location of a border BL2122. FIGS. 21 and 22 illustrate an example of transmitting and receiving the U-plane data between the UE and the UPF.

In the example illustrated in FIGS. 21 and 22, the PDU session to be used for transmitting and receiving data is switched from the PDU session that passes through the source secondary base station (source SN) to the PDU session that passes through the target master base station, and the secondary base station to which the UE is connected is switched from the source SN to the target SN. Here, an example where the operations illustrated in FIGS. 21 and 22 follow the operations illustrated in FIGS. 19 and 20 is described. In FIGS. 21 and 22, the same step numbers are applied to the processes identical to those in FIGS. 19 and 20, and the common description thereof is omitted.

In Steps ST2600 and ST2601 of FIG. 21, data is transmitted and received between the UE and the UPF through the source SN. Step ST2600 indicates transmission and reception of the data between the UPF and the source SN, and ST2601 indicates transmission and reception of the data between the source SN and the UE.

In Step ST2602 of FIG. 21, the target MN determines to switch the secondary base station from the source SN to the target SN.

In Step ST2605 of FIG. 21, the target MN requests the AMF to switch the PDU session to be used for transmitting the downlink U-plane data between the UE and the UPF from the PDU session passing through the source SN to the PDU session passing through its own base station. Step ST2508 is identical to that in FIG. 19. In response to the notification of the request, the UPF switches the PDU session to be used for transmitting the downlink U-plane data from the PDU session passing through the source SN to the PDU session passing through the target MN.

In Steps ST2610 and ST2611 of FIG. 21, the UPF transmits the downlink U-plane data to the UE through the target MN. Step ST2610 indicates transmission of the data from the UPF to the target MN, and ST2611 indicates transmission of the data from the target MN to the UE. In Steps ST2612 and ST2613, the UE transmits the uplink U-plane data to the UPF through the source SN. Step ST2612 indicates transmission of the data from the UE to the source SN, and ST2613 indicates transmission of the data from the source SN to the UPF.

In Step ST2614 of FIG. 21, the AMF transmits, to the target MN, the acknowledgement to the request for switching the PDU session in Step ST2605. The AMF may transmit the acknowledgement, using the switching completion notification from the UPF to the AMF in Step ST2508.

In Step ST2615 of FIG. 21, the target MN instructs the UE to switch the PDU session to be used for transmitting the uplink U-plane data between the UE and the UPF from the PDU session passing through the source SN to the PDU session passing through its own base station. For example, the instruction may be included in the signaling for the RRC reconfiguration (RRCReconfiguration). In response to the instruction, the UE switches the PDU session to be used for transmitting the uplink U-plane data from the PDU session passing through the source SN to the PDU session passing through the target MN.

In Steps ST2620 and ST2621 of FIG. 21, data is transmitted and received between the UE and the UPF through the target MN. Step ST2620 indicates transmission and reception of the data between the UPF and the target MN, and ST2621 indicates transmission and reception of the data between the target MN and the UE.

In Step ST2622 of FIG. 21, the UE notifies the target MN of the response to the instruction for switching in Step ST2615. The UE may notify the response via the signaling for the RRC reconfiguration completion (RRCReconfigurationComplete).

In Step ST2625 of FIG. 22, the target MN issues a secondary base station addition request (Secondary Node Addition Request) to the target SN. In Step ST2626, the target SN notifies the target MN of the secondary base station addition request acknowledgement (Secondary Node Addition Request Acknowledge).

In Step ST2628 of FIG. 22, the target MN issues a secondary base station release request (Secondary Node Release Request) to the source SN. In Step ST2633, the source SN notifies the target MN of the acknowledgement to the secondary base station release request (Secondary Node Release Request Acknowledge).

In Step ST2635 of FIG. 22, the target MN instructs the UE to switch the secondary base station from the source SN to the target SN. For example, the instruction may be included in the signaling for the RRC reconfiguration (RRCReconfiguration). In response to the instruction, the UE may change the secondary base station from the source SN to the target SN. In Step ST2636, the UE notifies the target MN of the completion of the switching of the SN base station. The UE may give the notification, for example, via the signaling for the RRC reconfiguration completion (RRCReconfigurationComplete). In Step ST2638, the target MN notifies the target SN of the secondary base station reconfiguration completion (Secondary Node Reconfiguration Complete). In Step ST2639, the UE performs the random access procedure with the target SN.

In FIG. 22, Steps ST2640 and ST2641 are identical to Steps ST2620 and ST2621, respectively.

In Step ST2642 of FIG. 22, the target MN notifies the AMF to switch a path of the PDU session between the UE and the UPF through the source SN to a path passing through the target SN. The target MN may give the notification, for example, via the signaling for the PDU session resource modification request (PDU session resource modify indication). In Step ST2645, the AMF transfers the switching notification to the UPF, and the UPF notifies the AMF of the completion of the switching. The notification of the switching and the completion may be performed through the SMF. In response to the notification of the switching, the UPF switches the path of the PDU session between the UE and the UPF through the source SN to the path passing through the target SN.

In Step ST2647 of FIG. 22, the AMF transmits, to the target MN, the acknowledgement to the PDU session resource modification notification in Step ST2642. The AMF may transmit the acknowledgement, using the switching completion notification from the UPF to the AMF in Step ST2645.

In Step ST2648 of FIG. 22, the target MN instructs the source SN to release the UE context. The target MN may issue the instruction, for example, via the signaling for the UE context release.

In FIG. 22, Steps ST2650 and ST2651 are identical to Steps ST2620 and ST2621, respectively.

In FIGS. 21 and 22, switching of the PDU session for transmitting the downlink data in Steps ST2605 to ST2614 may be performed after or during the switching of the PDU session for transmitting the uplink data in Steps ST2615 to ST2622 similarly to FIGS. 19 and 20. Furthermore, the switching of the PDU session for transmitting the uplink data in Steps ST2615 to ST2622 may be performed during the switching of the PDU session for transmitting the downlink data in Steps ST2605 to ST2614. This can, for example, increase the flexibility in the communication system.

In FIGS. 21 and 22, the transmission/reception path in the C-plane may be switched similarly to FIGS. 19 and 20. In switching of the transmission/reception path in the C-plane, the C-plane data may be transmitted and received between the UE and the AMF or between the UE and the SMF. This can, for example, prevent the latency in the C-plane data from varying due to the switching between the base stations.

The operations illustrated in FIGS. 19 and 20 and the operations illustrated in FIGS. 21 and 22 may be alternately performed. For example, even when the UE continues to move, the latency in transmitting and receiving data between the UE and the high-level NW device can be maintained constant.

A plurality of UPFs may be used in a method for the UE to communicate using a plurality of PDU sessions. For example, different PDU sessions may pass through different UPFs. In the communication using the plurality of UPFs, a device over a Data Network (DN) in Non-Patent Document 30 (3GPP TS23.501 V15.3.0) may transmit and receive data to and from the UE through the plurality of UPFs. The master base station may request the AMF to switch a downlink data transmission path. The AMF may transfer the request to the device over the DN. The AMF may transfer the request through the SMF. In response to the transferred request, the device over the DN may switch between the PDU sessions to be used for transmitting the downlink data. The master base station may instruct the UE to switch between the PDU sessions to be used for transmitting the uplink data. The master base station may instruct the UE as previously described. For example, the communication using the plurality of UPFs produces the same advantages as previously described.

Another solution is disclosed. The handover to the base station that does not satisfy the latency requirements is not performed. The source base station notifies the target base station of the latency requirements. The target base station determines acceptance/rejection of the handover, using the latency requirements.

Information on the latency requirements may be included in the signaling for requesting the handover to be notified from the source base station to the target base station. The information may be configured for each QoS flow to be used by the UE or for each bearer to be used by the UE. The target base station may determine acceptance/rejection of the handover for each QoS flow and/or for each bearer, using the information. The source base station may notify the target base station of the QoS flow and/or bearer for accepting the handover.

The clock synchronization may be performed in the 5G system. The clock synchronization may be performed, for example, between the high-level NW device and the base station.

The high-level NW device may notify the base station of a time stamp. The base station may notify the high-level NW device of a time stamp. The high-level NW device may calculate the transmission latency from its own device to the base station, using the time stamp transmitted by its own device and the time stamp transmitted from the base station to its own device. The high-level NW device may notify the base station of the transmission latency. The base station may correct the time of its own base station using the transmission latency.

The clock synchronization may be performed between the base stations. The method for synchronizing the clocks of the high-level NW device and the base station or the method disclosed in the first modification of the first embodiment may be applied to the synchronization between the base stations.

The second embodiment can maintain the communication latency constant even in mobility.

### The Third Embodiment

The base station may hold the downlink data to be transmitted to the UE. The UPF may transmit, to the base station, the held downlink data (hereinafter may be referred to as local cache data). The base station may transmit the local cache data to the UE.

However, when the UE is handed over between the base stations, the target base station does not hold the local cache data. This causes a problem of increase in the latency in receiving the data in the UE.

A solution to the problem is disclosed.

The target base station holds the local cache data. The source base station may transmit the local cache data to the target base station.

The source base station may transmit the local cache data to the target base station simultaneously when or after the source base station transmits the handover request to the target base station. This enables, for example, the target base station to promptly obtain the local cache data.

As another example, the source base station may transmit the local cache data to the target base station, for example, after the target base station acknowledges the handover request from the source base station. For example, when the target base station rejects the handover request, the source base station need not transmit the local cache data to a target base station reselected. Consequently, the efficiency in the communication system can be increased.

As another example, the UPF may transmit the local cache data to the target base station. The target base station may request the UPF to transmit the local cache data to the target base station. This can, for example, reduce the load on the interface between the base stations.

The source base station may release the local cache data. The source base station may perform the release operation, for example, after receiving the acknowledgement to the handover request. This can, for example, reduce the memory usage in the source base station.

Another solution is disclosed. A plurality of base stations hold the local cache data. The plurality of base stations may be, for example, base stations located in the same RAN notification area (RNA) as the source base station, or base stations located in the same tracking area as the source base station. As another example, the source base station or the high-level NW device may determine the base stations holding the local cache data. The source base station or the high-level NW device may determine the base stations holding the local cache data, for example, using the position information of the UE. The plurality of base stations may hold the local cache data, for example, before start of the handover. This can, for example, prevent the congestion in the communication system during the handover processes.

The source base station may notify the target base station of information indicating from (or after) which data the subsequent data in the local cache data should be transmitted to the UE. The local cache data may have a sequence number. The sequence number may be provided separately from the PDCP SN. The sequence number may be provided, for example, for each packet. The aforementioned information may include the sequence number, the PDCP SN, or combined information of the sequence number and the PDCP SN. This can, for example, prevent an overlap or missing of the local cache data after the handover.

The UE may notify the base station of information on the data that the UE desires to start receiving in the local cache data. The information may include the sequence number, the PDCP SN, or combined information of the sequence number and the PDCP SN. The UE may notify the base station, for example, when the UE resumes data communication, when the base station fast-forwards and/or rewinds data in the data communication with the UE, or when the UE is handed over. Examples of the resumption of the data communication in the UE may include a case where the UE transitions from RRC_INACTIVE back to RRC_CONNECTED. When transitioning to RRC_INACTIVE, the UE may hold the sequence number, the PDCP SN, or combined information of the sequence number and the PDCP SN. This can, for example, increase the flexibility in transmitting the local cache data from the base station to the UE.

As another example on the sequence number of the local cache data, the sequence number may be associated with the PDCP SN. For example, the sequence number may be found as a value obtained by adding or subtracting a predetermined offset to or from the PDCP SN. One PDCP PDU may be generated from one packet in a local cache. This can, for example, avoid the complexity in the communication system.

The source base station may combine information on an offset value and information on the PDCP SN in which the next PDCP PDU should be generated, and notify the target base station of the resulting information. This can, for example, reduce the size of the signaling in the communication between the base stations.

The UE may notify the base station of only the PDCP SN in the data that the UE desires to start receiving in the local cache data. The base station may calculate the sequence number of the data that the UE desires to start receiving in the local cache data, using the information on the offset value and the PDCP SN. As another example, the UE may notify the base station of the sequence number of the local cache data in the data that the UE desires to start receiving. The base station may calculate the PDCP SN of the data that the UE desires to start receiving in the local cache data, using the sequence number and the information on the offset value. The UE may give the notification using the PDCP control PDU or via the RRC signaling. This can, for example, reduce the amount of signaling between the UE and the base station.

As another example on the sequence number of the local cache data, the sequence number of the TCP may be used. The notification from the source base station to the target base station may include the TCP sequence number. The source base station may hold information on combinations of the TCP sequence numbers and the PDCP SNs in the local cache data. The notification from the UE to the base station may include the TCP sequence numbers. For example, new numbers need not be provided in the communication system. Consequently, the complexity in the communication system can be avoided.

The local cache data according to the third embodiment may be applied to the uplink communication for transmission from the UE to the base station. The local cache may be, for example, intended for the user data to be transmitted from the UE to another UE through the base station. The local cache may be, for example, intended for the base station to terminate the communication protocol (e.g., the TCP) with the UE when the communication rate from the UE to a peer in the application layer of the UE is greater (e.g., the communication distance is longer or the number of routing devices between the UE and the peer is larger).

The source base station may transfer the local cache data in the uplink communication to the target base station. A plurality of base stations may hold the local cache data.

The source base station may notify the UE of the information indicating from (or after) which data the subsequent data in the local cache data should be transmitted to the UE. The local cache data may have a sequence number. The sequence number may be provided separately from the PDCP SN. The sequence number may be provided, for example, for each packet. The UE may determine data whose uplink transmission to the target base station is started, using the information. This can, for example, prevent overlap transmission or missing of data in the uplink communication.

The third embodiment enables the UE to reduce the latency in the downlink and/or uplink communication even in the handover. Furthermore, the UE can secure the reliability in the downlink and/or uplink communication.

### The Fourth Embodiment

In 3GPP, the sidelink (SL) is supported for the Device-to-Device (D2D) communication and the Vehicle-to-Vehicle (V2V) communication (see Non-Patent Document 1). The SL is defined by the PC5 interface.

Physical channels (see Non-Patent Document 1) to be used for the SL are described. A physical sidelink broadcast channel (PSBCH) carries information related to systems and synchronization, and is transmitted from the UE.

A physical sidelink discovery channel (PSDCH) carries a sidelink discovery message from the UE.

A physical sidelink control channel (PSCCH) carries control information from the UE for the sidelink communication and the V2X sidelink communication.

A physical sidelink shared channel (PSSCH) carries data from the UE for the sidelink communication and the V2X sidelink communication.

Transport channels (see Non-Patent Document 1) to be used for the SL are described. A sidelink broadcast channel (SL-BCH) has a predetermined transport format, and is mapped to the PSBCH that is a physical channel.

A sidelink discovery channel (SL-DCH) has periodic broadcast transmission of a fixed size and a predetermined format. The SL-DCH supports both of the UE autonomous resource selection and the resource allocation scheduled by the eNB. The SL-DCH has collision risk in the UE autonomous resource selection. The SL-DCH has no collision when the eNB allocates dedicated resources to the UE. The SL-DCH supports the HARQ combining. The SL-DCH does not support the HARQ feedback. The SL-DCH is mapped to the PSDCH that is a physical channel.

A sidelink shared channel (SL-SCH) supports broadcast transmission. The SL-SCH supports both of the UE autonomous resource selection and the resource allocation scheduled by the eNB. The SL-SCH has collision risk in the UE autonomous resource selection. The SL-SCH has no collision when the eNB allocates dedicated resources to the UE. The SL-SCH supports the HARQ combining. The SL-SCH does not support the HARQ feedback. The SL-SCH supports dynamic link adaptation by varying the transmission power, modulation, and coding. The SL-SCH is mapped to the PSSCH that is a physical channel.

Logical channels (see Non-Patent Document 1) to be used for the SL are described. A Sidelink Broadcast Control Channel (SBCCH) is a sidelink channel for broadcasting sidelink system information from one UE to other UEs. The SBCCH is mapped to the SL-BCH that is a transport channel.

A Sidelink Traffic Channel (STCH) is a point-to-multipoint sidelink traffic channel for transmitting user information from one UE to other UEs. This STCH is used only by sidelink communication capable UEs and V2X sidelink communication capable UEs. The point-to-point communication between two sidelink communication capable UEs is realized with the STCH. The STCH is mapped to the SL-SCH that is a transport channel.

In 3GPP, support of the V2X communication in NR has also been studied. Study of the V2X communication in NR has been pursued based on the LTE system and the LTE-A system. There are changes and additions from the LTE system and the LTE-A system in the following points.

In LTE, the SL communication relies only on broadcasts. In NR, support of not only broadcasts but also unicasts and groupcasts has been studied as the SL communication (see Non-Patent Document 28 (3GPP RP-182111)).

Support of, for example, the HARQ feedback (Ack/Nack) or the CSI report in the unicast communication or the groupcast communication has been studied.

The SL communication in NR requires the low latency characteristics. Introduction of the preemption to the SL communication in NR has been proposed to satisfy the requirements of the low latency characteristics (Non-Patent Document 22 (3GPP R1-1810593) and Non-Patent Document 27 (R1-1810775)). The preemption is the technology for preempting the existing transmission of data to the UE with transmission to another UE requiring the low latency characteristics (Non-Patent Document 16 (TS38.300)).

In the SL, the transmission UE sometimes transmits pieces of data of a plurality of services, and their reception UEs are sometimes different for the respective services. In such a case, the UE that receives resources for preempted communication is different from the UE that receives resources for preempting communication. The transmission UE needs to notify each of these reception UEs that resources are preempted or preempting. These notification methods have not yet been disclosed.

As such, the specific preemption method in the SL has not yet been disclosed. Thus, a failure in the preemption causes a problem of failing to satisfy the requirements of the low latency characteristics. The fourth embodiment discloses a method for solving such a problem.

In the normal SL communication, the UE that performs transmission (transmission UE) includes, in the SL control information (SCI), for example, the scheduling information such as the resource allocation information of the PSSCH or the UE to be a communication target (reception UE), and transmits the information in the PSCCH. Furthermore, the transmission UE transmits the PSSCH according to the scheduling information. Upon receipt of the PSCCH, the reception UE recognizes that the PSCCH is data for its own UE, receives the PSSCH according to the scheduling information, and obtains the data.

The preemption is disclosed. The transmission UE transmits information indicating the preemption (Preemption Indication (PI)) in the PSCCH. The transmission UE may include the information indicating the preemption in the SCI and transmit the information in the PSCCH. The transmission UE may transmit, in the PSCCH, resource allocation information for the preempting communication and the information indicating the preemption. The transmission UE may include, in the SCI, the resource allocation information for the preempting communication and the information indicating the preemption and transmit the pieces of information in the PSCCH.

The transmission UE may transmit the pieces of information in the PSCCH of the preempting communication. The resource allocation information for the preempting communication may be replaced with the scheduling information for the preempting communication. The transmission UE may include, in the SCI, the scheduling information for the preempting communication and the information indicating the preemption and transmit the pieces of information in the PSCCH.

All the UEs that perform the SL communication can receive the PSCCHs in a configured resource pool in the SL. Both of the reception UE in the preempting communication and the reception UE in the preempted communication can receive the PSCCHs. Thus, the reception UE in the preempting communication can receive the resource allocation information, and the reception UE in the preempted communication can receive the information indicating the preemption.

The SCI may be divided into two. The SCI is divided into, for example, SCI1 and SCI2. Two different channels for transmitting the respective SCIs may be provided. For example, a PSCCH1 and a PSCCH2 are provided. All the UEs for each of which a resource pool has been configured can receive one of the PSCCHs, for example, the PSCCH1 similarly to the conventional PSCCH. Only one UE or a UE group can receive the other PSCCH, for example, the PSCCH2 unlike the conventional PSCCH.

The SCI1 of the PSCCH1 that can be received by all the UEs for each of which the resource pool has been configured may include the information indicating the preemption. The SCI1 of the PSCCH1 that can be received by all the UEs for each of which the resource pool has been configured may include the resource allocation information for the preempting communication and the information indicating the preemption. The other information may be included in the SCI2. As such, both of the reception UE in the preempting communication and the reception UE in the preempted communication can receive the SCI1 of the PSCCH1.

The reception UE in the preempted communication receives the PSCCH, and determines whether the SCI includes the PI. In the absence of the PI, the reception UE determines that resources are not preempted. In the presence of the PI, the reception UE determines that the resources are preempted. When determining that the resources are preempted, the reception UE in the preempted communication does not receive the resources to be allocated in the PSCCH.

The PI may include allocation information on the resources to be preempted. When determining that the resources are preempted, the reception UE in the preempted communication does not receive the resources to be allocated according to the resource allocation information included in the PI. This can prevent the reception UE in the preempted communication from receiving the PSSCH for other reception UEs that has been transmitted with the preempted resources.

The reception UE in the preempting communication receives the PSCCH, and determines whether the SCI includes an identifier of its own UE as a target UE. In the absence of the identifier of its own UE, the reception UE determines that the transmitted data is not intended for its own UE, and does not receive the PSSCH. In the presence of the identifier of its own UE, the reception UE determines that the transmitted data is intended for its own UE, and receives the PSSCH according to the scheduling information included in the SCI. As such, the reception UE in the preempting communication can receive the PSSCH transmitted with the preempted resources.

The resources in the preempted communication may be reserved resources or resources to which data is actually allocated. The disclosed method is applicable even when the reserved resources are preempted.

The following five specific examples of information included in the PI are disclosed.
(1) Information indicating the preemption
(2) Information on the resources to be preempted
(3) Information indicating a reception process when the resources are preempted
(4) Information on the reception UE in the preempted communication
(5) Combinations of (1) to (4) above

In (1), the information indicating the preemption may be information indicating whether the resources are preempted or information indicating that the resources are preempted.

In (2), the information on the resources to be preempted may be the resource allocation information. The resource information may be time-frequency information. Examples of the resource information include the slot number, the number of slots, the PRB number, and the number of PRBs. The time units include TTI, slot, mini-slot, symbol, 1/n symbol (n is a positive integer), and code block group (CBG). The frequency units include PRB and subcarrier.

The information on the resources to be preempted may be limited to time information. Here, the frequency resources may be identical to the frequency resources already allocated or reserved. This can reduce the information on the resources to be preempted.

The RS in the SL may be excluded from the resources to be preempted. For example, the DMRS may be excluded from the resources. For example, when the preemption is performed per symbol, symbols excluding the DMRS should be the resources to be preempted. The reception UE in the preempted communication can increase the probability of demodulating data mapped to a slot including the preempted resources, using the DMRS.

In (3), the reception process when the resources are preempted may be a process of preventing reception of only the preempted resources or a process of preventing reception of predetermined resources including the preempted resources. Examples of the predetermined resources include a slot. Alternatively, the predetermined resources may be a plurality of contiguous slots. As another example, the reception process when the resources are preempted may be a process of preventing reception of all pieces of data for which a part of the resources are preempted. This can simplify the reception process. The reception process described herein may be a process of demodulating data.

In (4), information on the reception UE in the preempted communication should be information for identifying the reception UE. The information may be, for example, an identifier of the UE. This can explicitly indicate the reception UE to be preempted, and reduce malfunctions.

The PSCCH including the PI may be a PSCCH in a slot/mini-slot to which resources to be preempted are allocated. Consequently, the PI can be notified in the PSCCH when the PSCCH is transmitted on the resources to be preempted. Alternatively, the PSCCH including the PI may be a PSCCH next to the slot to which resources to be preempted are allocated. Consequently, the PI can be notified in the PSCCH even when the PSCCH is not transmitted on the resources to be preempted.

The transmission UE may transmit, in the PSCCH, information on the reception UE in the preempting communication. The transmission UE may include, in the SCI, the information on the reception UE in the preempting communication together with the PI and the scheduling information including the resource allocation information for the preempting communication, and transmit the pieces of information in the PSCCH. The information on the reception UE in the preempting communication should be information for identifying the reception UE. The information may be, for example, an identifier of the UE.

When the transmission UE transmits the information on the reception UE in the preempting communication in the PSCCH, the transmission UE may omit the transmission of the PI. The transmission UE includes, in the SCI, the information on the reception UE in the preempting communication and the scheduling information including the resource allocation information for the preempting communication, and transmits the pieces of information in the PSCCH.

Upon receipt of the PSCCH, the reception UE in the preempted communication can recognize that the data is intended for another UE, from the information on the reception UE in the preempting communication. The reception UE in the preempted communication should avoid receiving the resources indicated by the resource allocation information.

Upon receipt of the PSCCH, the reception UE in the preempting communication recognizes that the information is scheduling information for its own UE, from the information on the reception UE in the preempting communication, and receives the PSSCH according to the scheduling information.

When performing the preemption, the transmission UE need not perform transmission to the reception UE in the preempted communication only with the preempted resources. This can minimize the data not to be transmitted to the reception UE in the preempted communication. As another method, the transmission UE need not perform transmission to the reception UE in the preempted communication with the predetermined resources including the preempted resources.

The predetermined resources may be, for example, one or more code block groups (CBGs) or one or more slots. For example, when a plurality of slots are scheduled, the transmission UE need not perform transmission to the reception UE in the preempted communication in the plurality of slots including the preempted resources. This can simplify the processes of the transmission UE.

When performing transmission to the reception UE in the preempted communication with resources except the preempted resources in the scheduled resources, the transmission UE may perform rate matching on the resources except the preempted resources to perform the transmission. The transmission UE can transmit data with the scheduled resources. The transmission UE should notify the reception UE of information on the rate matching. The transmission UE may include, in the PI, information indicating the reception process when the resources are preempted, and notify the reception UE of the information.

When the transmission UE performs the preemption, a transmission process for the transmission UE to the reception UE in the preempted communication may be appropriately as necessary associated with the reception process in the reception UE when the resources are preempted. For example, when the transmission UE does not transmit, in the preemption, one slot including the preempted resources to the reception UE in the preempted communication, the reception process in the reception UE may be a process of preventing reception in the one slot including the preempted resources. In such a case, the transmission UE may notify the reception UE of a transmission processing method for the transmission UE to the reception UE in the preempted communication, instead of the information indicating the reception process when the resources are preempted.

This enables the preemption in the SL. Thus, the preemption can be performed in the SL communication requiring the low latency characteristics, and the low latency characteristics required for the communication can be satisfied.

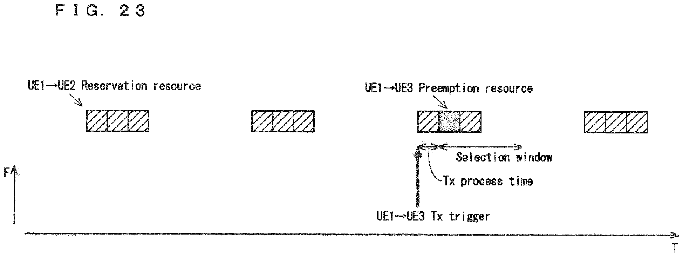

FIG. 23 illustrates an outline of the preemption in the SL communication. FIG. 23 illustrates a case where the transmission UE in the preempted communication is identical to the transmission UE in the preempting communication and the reception UE in the preempted communication is different from the reception UE in the preempting communication. The UE 1 is the transmission UE, the UE 2 is the reception UE in the preempted communication, and the UE 3 is the reception UE in the preempting communication. The communication from the UE 1 to the UE 3 is communication requiring lower latency characteristics.

The UE 1 reserves resources for the UE 2. Here, the UE 1 cyclically reserves the resources. The example of FIG. 23 illustrates that the UE 1 cyclically reserves resources of three slots. However, the UE 1 may reserve one slot or a plurality of slots. As such, while the UE 1 already reserves resources for the UE 2, the UE 1 triggers transmission to the UE 3 in the SL. The UE 1 performs the transmission process and selects the resources. The UE 1 selects the resources within a selection window.

As a period of the resource selection window is shorter, the time until the transmission is shortened, thus producing the low latency characteristics. However, as the period of the resource selection window is shorter, the selectable resources are reduced. Thus, the probability that the resources have already been reserved is increased. Enabling the preemption of the reserved resources can increase the selectable resources.

The UE 1 determines to preempt the resources already reserved for the UE 2 to communicate with the UE 3 which requires the lower latency characteristics. Here, the UE 1 preempts the second slot after the transmission process. The UE 1 performs transmission to the UE 3 with the preempted resource. The UE 1 need not perform transmission to the UE 2 with the preempted resource. Here, the UE 1 does not perform transmission to the UE 2 in the second slot.

As such, the UE 1 preempts, for the UE 3, the resource already reserved for the UE 2, and performs transmission to the UE 3 with the resource. This enables, with low latency, the communication with the UE 3 which requires the lower latency characteristics.

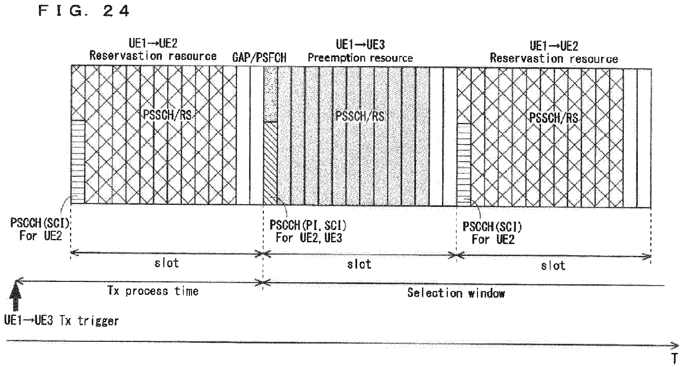

FIG. 24 illustrates the first example of the preemption method in the SL communication. FIG. 24 illustrates three slots including the resources to be preempted, similarly to FIG. 23. The PSCCH, the PSSCH, the GAP, and the PSFCH are mapped to each of the slots. The PSCCH and the PSSCH are transmitted from the transmission UE. The GAP is a non-transmission section. The PSFCH is a channel for feedback, includes, for example, the HARQ feedback (Ack and Nack), the CSI report, and the SRS, and is transmitted from the reception UE.

FIG. 24 illustrates preempting the second slot when the UE 1 has already reserved resources of three slots for the UE 2. The UE 1 triggers transmission to the UE 3 in the SL, and determines to preempt the resources in the second slot after the transmission process to communicate with the UE 3. Since the UE 1 performs transmission to the UE 2 in the first and third slots as usual, the UE 1 transmits the PSCCH and the PSSCH to the UE 2.

The SCI is mapped to the PSCCH. The SCI may include a slot configuration. The SCI may include a configuration such as the number of symbols to which the PSSCH, the GAP, and the PSFCH are mapped or the symbol numbers. This enables the reception UE to recognize the slot configuration to be transmitted from the transmission UE.

The UE 1 preempts the second slot after the transmission process for the UE 3 to communicate with the UE 3. The resources for the UE 2 are preempted in the second slot. The UE 1 transmits the PSCCH and the PSSCH to the UE 3 in the preempted second slot. The preempted slot may be configured so that the GAP and the PSFCH are mapped to the slot. The UE 1 includes, in the PSCCH in the preempted slot, the PI and the scheduling information such as the resource allocation information of the PSSCH, and transmits the pieces of information.

The UE 1 may include, in the SCI, the scheduling information such as the resource allocation information of the PSSCH, and transmit the SCI and the PI in the PSCCH. The UE 1 may include, in the SCI, the scheduling information such as the resource allocation information of the PSSCH and the PI, and transmit the pieces of information in the PSCCH. Furthermore, the SCI may include information for identifying the UE 3.

In the SL communication, any reception UE can receive the PSCCHs in the resource pool. Thus, both of the UE 2 and UE 3 can receive the PSCCHs in the second slot. The UE 2 can determine whether the resources are preempted, depending on whether the received PSCCH includes the PI. In the absence of the PI, the UE 2 determines that the information indicates the schedule for its own UE, and receives the PSSCH according to the scheduling information. In the presence of the PI, the UE 2 determines that the resources are preempted, and does not receive the resources allocated in the PSCCH.

This can avoid the UE 2 from incorrectly receiving the resources preempted for another UE. Upon receipt of the PSCCH in the second slot, the UE 3 can recognize that the PSSCH is addressed to its own UE, and receive the PSSCH according to the scheduling information included in the SCI.

Such a preemption method enables the preemption in the SL communication. The resources already allocated or reserved can be preempted for the communication requiring the low latency characteristics. Consequently, the requirements of the low latency characteristics can be satisfied.

The UE 1 may prevent transmission of only the preempted resources to the UE 2 to perform the preemption for the UE 3. This can minimize the data not to be transmitted to the UE 2. As another method, the UE 1 need not transmit, to the UE 2, the slot including the preempted resources. Alternatively, when a plurality of slots are scheduled, the UE 1 need not transmit, to the UE 2, the plurality of slots including the preempted resources. This can simplify the processes of the UE 1 and the UE 2.

The configuration appropriate for the reception process when the resources are preempted, which is disclosed as a specific example of the information included in the PI, may be used for the transmission process from the UE 1 to UE 2. The transmission processing method may be associated with the reception processing method in advance. Which transmission processing method or which reception processing method is used may be statically determined, for example, in a standard, or may be configured by the gNB and notified to the UE in the SL communication. Alternatively, which transmission processing method or which reception processing method is used may be preconfigured in the UE.

When preempting the first slot reserved or scheduled by the UE 1 for the UE 2, the UE 1 notifies the scheduling information for the UE 3 in the PSCCH in the first slot. Furthermore, the UE 1 notifies the PI for the UE 2 in the PSCCH in the first slot. Not the scheduling information for the UE 2 but the scheduling information for the UE 3 is mapped to the PSCCH in the first slot. Thus, the UE 2 cannot receive the scheduling information in the first slot. Here, the transmission process of the UE 1 may be a process of preventing transmission to the UE 2 in the first slot, and the reception process of the UE 2 may be a process of preventing reception in the first slot.

This can avoid the UE 2 from incorrectly receiving data for the UE 3 in the first slot. The UE 2 should receive the PSCCH in the second slot. When the UE 1 schedules the PSSCH for the UE 2 in the second slot, the UE 2 can receive the scheduling information and the PSSCH.

When preempting the first slot reserved or scheduled by the UE 1 for the UE 2, the UE 1 need not notify the PI for the UE 2 in the PSCCH in the first slot. The UE 1 may notify only the scheduling information for the UE 3 in the PSCCH in the first slot. When the UE 2 recognizes that the first slot is scheduled for the UE 3, the UE 2 need not perform reception in the first slot. This can avoid the UE 2 from incorrectly receiving data for the UE 3 in the first slot.

Processes on data of the resources preempted for the UE 2 are disclosed. The UE 1 may transmit the data of the resources preempted for the UE 2, with the remaining resources. The UE 1 may perform the rate matching to transmit the data with the remaining resources. Consequently, the UE 1 can transmit the preempted resources earlier.

As another method, the UE 1 may transmit the data of the resources preempted for the UE 2, with the resources next reserved. The number of reselections of the resources in the SL in NR may be configured. When transmission with the reserved resources is performed a predetermined number of reselection times, resources are reselected and reserved again. This can avoid a monopoly of the resources by its own UE.

When the transmission with the reserved resources does not reach the predetermined number of reselection times, the UE 1 transmits the data of the resources preempted for the UE 2, with the resources next reserved. When the transmission with the reserved resources reaches the predetermined number of reselection times, the UE 1 reselects and reserves again resources, and transmit the data with the newly reserved resources.

When the newly reserved resources are used for transmitting the data of the preempted resources, the number of reselection times need not be counted. The number of reselection times need not be decremented. This can avoid further increase in the latency in transmitting the data of the preempted resources.

The UE 1 may newly select and reserve resources to transmit the data of the resources preempted for the UE 2. The UE 1 need not cyclically select and reserve the resources, or may dynamically select and reserve the resources. The UE 1 may reserve the resources for a short period of time. Even when the preempted resources are cyclical, this method may be applied. Consequently, the UE 1 can transmit the preempted data earlier without waiting for the resources next reserved.

As another method, the UE 1 need not perform any special processes for the data of the resources preempted for the UE 2. When the HARQ feedback is applied, the UE 1 need not perform any special processes for the data of the resources preempted for the UE 2. When the HARQ feedback is applied, the UE 1 may follow the HARQ. The UE 2 transmits the Nack to the UE 1 when the UE 2 cannot receive the scheduled data. Upon receipt of the Nack, the UE 1 retransmits the data. In the HARQ retransmission, the UE 1 should include, in the SCI, information indicating for which data the retransmission is performed. The information indicating for which data the retransmission is performed may be, for example, a HARQ process identifier. Consequently, the UE 2 can receive the scheduled data.

When the repeated transmissions (repetitions) and the HARQ feedback are applied, the UE 1 need not perform any special processes for the data of the resources preempted for the UE 2. Even when one transmission out of the repeated transmissions is preempted, the UE 2 can receive the scheduled data with the other repeated transmissions.

As such, the absence of the special processes for the data of the preempted resources can simplify the preemption processes in the transmission UE and the reception UE.

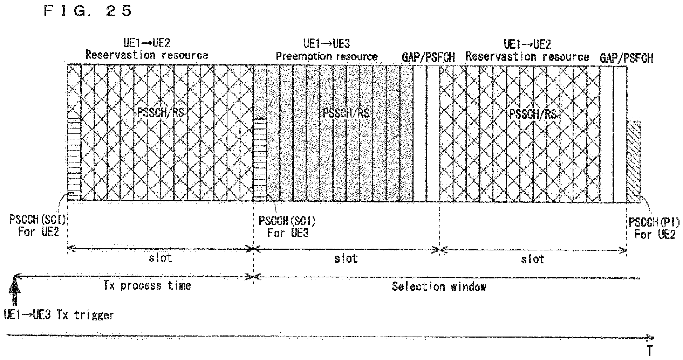

FIG. 25 illustrates the second example of the preemption method in the SL communication. Unlike FIG. 24, FIG. 25 exemplifies a preemption method when three slots including the resources to be preempted are contiguously scheduled. The PSCCHs, the PSSCHs, the GAPs, and the PSFCHs are mapped to the three contiguous slots. The PSCCH is mapped to the first slot of the three contiguous slots. The GAP and the PSFCH are mapped to the last slot of the three contiguous slots.

In the example of FIG. 24, the PSCCH in the second slot to be preempted includes the PI and the scheduling information such as the resource allocation information of the PSSCH. Since the UE 1 performs scheduling for the UE 2 using the three contiguous slots in the example of FIG. 25, the UE 1 does not transmit the PSCCH in the second slot. Thus, the UE 2 does not receive the PSCCH in the second slot. Even when the UE 1 transmits the PI in the PSCCH in the second slot, the UE 2 does not receive the PI.

To solve such a problem, the UE 1 includes the PI in the PSCCH in a slot next to the contiguously scheduled slots, and transmits the PI in the example of FIG. 25. The UE 2 receives the PSCCH in the slot next to the contiguously scheduled slots. Consequently, the UE 2 can determine whether the PSCCH includes the PI. Thus, the UE 2 can determine whether the resources are preempted.

The UE 2 should hold the received data until determining whether the resources are preempted in the contiguously scheduled slots. When the resources are preempted, the UE 2 receives the data except the preempted resources. When the resources are not preempted, the UE 2 receives the data from the three contiguous slots. This can avoid the UE 2 from incorrectly receiving the preempted data.

The UE 1 transmits the PSCCH in the second slot to the UE 3, and does not include the PI in the PSCCH. Upon receipt of the PSCCH in the second slot, the UE 3 can obtain the scheduling information of the PSSCH, and receive the PSSCH.

What is disclosed is that the UE 1 includes the PI in the PSCCH in the slot next to the contiguously scheduled slots and transmits the PI. Another method is disclosed. The UE 1 may include the PI in the PSCCH in a slot to be reserved or allocated next to the contiguously scheduled slots, and transmit the PI to the UE 2. The UE 2 receives the PSCCH in the slot reserved or allocated for its own UE which follows the contiguously scheduled slots. Consequently, the UE 2 can determine whether the PSCCH includes the PI. Thus, the UE 2 can determine whether the resources are preempted.

When preempting the first slot reserved or scheduled by the UE 1 for the UE 2, the UE 1 notifies the scheduling information for the UE 3 in the PSCCH in the first slot. Furthermore, the UE 1 may notify the PI for the UE 2 in the PSCCH in the first slot. Not the scheduling information for the UE 2 but the scheduling information for the UE 3 is mapped to the PSCCH in the first slot. Thus, the UE 2 cannot receive the scheduling information in the first slot. Here, the transmission process of the UE 1 may be a process of preventing transmission to the UE 2 in the three contiguous slots, and the reception process of the UE 2 may be a process of preventing reception in the three contiguous slots. This can avoid the UE 2 from incorrectly receiving data for the UE 3 in the first to third slots.

When preempting the first slot reserved or scheduled by the UE 1 for the UE 2, the UE 1 need not notify the PI for the UE 2 in the PSCCH in the first slot. The UE 1 may notify only the scheduling information for the UE 3 in the PSCCH in the first slot. When the UE 2 recognizes that the first slot is scheduled for the UE 3, the UE 2 need not perform reception in the three contiguous slots. This can avoid the UE 2 from incorrectly receiving data for the UE 3 in the first to third slots.

Such a preemption method enables the preemption in the SL communication even when the scheduling is performed in a plurality of contiguous slots.

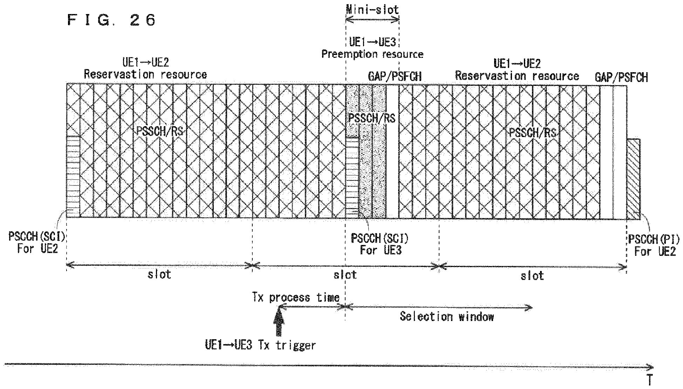

FIG. 26 illustrates the third example of the preemption method in the SL communication. FIG. 26 exemplifies the preemption method when three slots including the resources to be preempted are contiguously scheduled, similarly to FIG. 25. FIG. 26 illustrates a case where the resources to be preempted are in a mini-slot, unlike FIG. 25.

Even when the resources to be preempted are in a mini-slot, the UE 1 includes the PI in the PSCCH in the slot next to the contiguously scheduled slots and transmits the PI, similarly to the method disclosed in FIG. 25. The UE 2 receives the PSCCH in the slot next to the contiguously scheduled slots. Consequently, the UE 2 can determine whether the PSCCH includes the PI. Thus, the UE 2 can determine whether the resources are preempted.

The UE 1 transmits, to the UE 3, the PSCCH in the mini-slot which is preempted in the second slot, and does not include the PI in the PSCCH. Upon receipt of the PSCCH in the mini-slot, the UE 3 can obtain the scheduling information of the PSSCH, and receive the PSSCH.

When preempting, using the mini-slot, the resources including a PSCCH region in the first slot reserved or scheduled by the UE 1 for the UE 2, the UE 1 notifies the scheduling information for the UE 3 in the PSCCH in the mini-slot. Furthermore, the UE 1 may notify the PI for the UE 2 in the PSCCH in the mini-slot. Not the scheduling information for the UE 2 but the scheduling information for the UE 3 is mapped to the PSCCH in the mini-slot. Thus, the UE 2 cannot receive the scheduling information of the three contiguous slots. Here, the transmission process of the UE 1 may be a process of preventing transmission to the UE 2 in the three contiguous slots, and the reception process of the UE 2 may be a process of preventing reception in the three contiguous slots. This can avoid the UE 2 from incorrectly receiving data for the UE 3 in the first to third slots.

When preempting, using the mini-slot, the resources including the PSCCH region in the first slot reserved or scheduled by the UE 1 for the UE 2, the UE 1 need not notify the PI for the UE 2 in the PSCCH in the mini-slot. The UE 1 may notify only the scheduling information for the UE 3 in the PSCCH in the mini-slot. When the UE 2 recognizes that the scheduling is performed for the UE 3 with the resources in the mini-slot, the UE 2 need not perform reception in the three contiguous slots. This can avoid the UE 2 from incorrectly receiving data for the UE 3 in the first to third slots.

The reception UE needs to receive the PSCCH in the mini-slot in the SL communication. When data is scheduled in the mini-slot in the SL communication, the reception UE receives the PSCCH in the mini-slot. The reception UE cannot receive the PSCCH without knowing the transmission timing of the PSCCH in the mini-slot. Thus, the reception UE has a problem of failing to receive the PSSCH in the mini-slot. Here, a method for solving such a problem is disclosed.

A method for configuring a mini-slot in the SL is disclosed. The transmission UE configures the mini-slot in the SL. The transmission UE configures the mini-slot in the SL, and notifies the reception UE of the configuration. The transmission UE may give the notification using the PSCCH in a normal slot. Examples of information for configuring the mini-slot include the number of symbols in the mini-slot, the number of symbols and/or the symbol numbers of the PSCCH, the number of symbols and/or the symbol numbers of the PSSCH, and the number of symbols and/or the symbol numbers of the RS. The information for configuring the mini-slot may include the number of symbols and/or the symbol numbers of the GAP and the PSFCH.

The information for configuring the mini-slot may include information indicating a relationship with normal slots. Examples of the information indicating the relationship with normal slots include information indicating that a mini-slot extends from which symbol to which symbol in a normal slot. The target mini-slot should be configured using symbol numbers of the normal slot. The same is applied to the PSCCH, the PSSCH, the GAP, and the PSFCH in the mini-slot. In this manner, the mini-slot can be configured.

Another method for the transmission UE to notify the reception UE of the configuration of the mini-slot is disclosed. The transmission UE may notify information for configuring the mini-slot via the MAC signaling. The transmission UE may include the information for configuring the mini-slot in MAC control information. The transmission UE may notify the information for configuring the mini-slot via the PC5 signaling. Alternatively, when the RRC connection is established between the peer UEs in the unicast communication in the SL, the transmission UE may notify the information for configuring the mini-slot via the RRC signaling in the SL. The transmission UE may include the information for configuring the mini-slot, in the RRC information in the SL.

Another method for the transmission UE to notify the reception UE of the configuration of the mini-slot is disclosed. The transmission UE notifies the configuration of the mini-slot in the PSBCH. The transmission UE includes the configuration of the mini-slot in the broadcast information and maps the configuration to the PSBCH to notify the configuration. When a mini-slot is configured for each transmission UE, the transmission UE need not dedicatedly notify the reception UE of the configuration of the mini-slot. The amount of signaling in the SL communication can be reduced.

Information indicating activation and/or deactivation of the configuration of the mini-slot may be provided. The information is hereinafter referred to as activation/deactivation information for configuring the mini-slot. The transmission UE notifies the reception UE of the activation/deactivation information for configuring the mini-slot. The method for notifying the information for configuring the mini-slot should be applied to the notification of the information.

For example, the transmission UE notifies the reception UE of the information for configuring the mini-slot. The transmission UE subsequently notifies the activation information for configuring the mini-slot. An identifier may be provided for each configuration of a mini-slot. The transmission UE may notify the identifier together with the activation/deactivation information for configuring the mini-slot. In the presence of a plurality of configurations of mini-slots, the reception UE can recognize which configuration of a mini-slot should be activated.

Upon receipt of the activation information for configuring the mini-slot, the reception UE applies the configuration of the mini-slot. The transmission UE performs transmission in a mini-slot, and the reception UE performs reception in the mini-slot. The transmission UE notifies the reception UE of the deactivation information for configuring the mini-slot. Upon receipt of the deactivation information for configuring the mini-slot, the reception UE cancels the configuration of the mini-slot. The reception UE may perform reception in a normal slot. In this manner, configuring the mini-slot in the SL can be terminated.

This enables the configuration of a mini-slot in the SL and transmission and reception using the mini-slot.

Another method for configuring a mini-slot in the SL is disclosed. The gNB configures the mini-slot in the SL. The gNB configures the mini-slot in the SL, and notifies the transmission UE of the configuration. The transmission UE notifies the reception UE of the received configuration of the mini-slot in the SL. The transmission UE gives the notification via the Uu interface between the gNB and the UE.

The gNB should include, in the DCI, information for configuring the mini-slot in the SL, and notify the transmission UE in the SL communication of the information in the PDCCH. The dynamic configuration is possible. Alternatively, the gNB may notify the transmission UE in the SL communication of the mini-slot configuration information in the SL via the MAC signaling. Alternatively, the gNB may notify the mini-slot configuration information in the SL via the RRC signaling. This can reduce reception errors.

The aforementioned examples should be applied to the information for configuring the mini-slot. The aforementioned methods should be applied to the method for the transmission UE in the SL communication to notify the reception UE of the configuration of the mini-slot.

The transmission UE in the SL communication may configure the activation/deactivation of configuring the mini-slot. The transmission UE in the SL communication configures the activation/deactivation of configuring the mini-slot, and notifies the configuration to the reception UE. The aforementioned methods should be applied to this method. The transmission UE configures the activation/deactivation of configuring a mini-slot, so that a mini-slot corresponding to a service of transmitting data in the SL can be configured. This can shorten the configuration time until the activation/deactivation of configuring the mini-slot.

Another method for activating/deactivating the configuration of the mini-slot is disclosed. The gNB may configure the activation/deactivation of configuring the mini-slot. The gNB configures the activation/deactivation of configuring the mini-slot, and notifies the configuration to the transmission UE in the SL communication. Upon receipt of the activation/deactivation information for configuring the mini-slot, the transmission UE should notify the reception UE of the information. The aforementioned methods for notifying the information for configuring the mini-slot should be applied to these notification methods. The gNB configures the activation/deactivation of configuring the mini-slot, so that configurations for other UEs performing the SL communication can be considered. This can reduce the collision in the resources with which the mini-slots are configured.

Such a preemption method enables the preemption in the mini-slots in the SL communication.

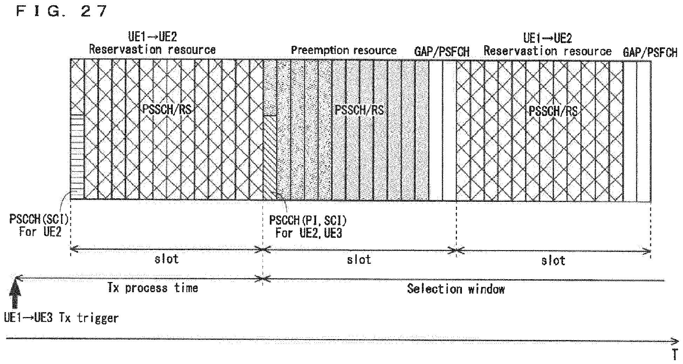

FIG. 27 illustrates the fourth example of the preemption method in the SL communication. FIG. 27 exemplifies the preemption method when three slots including the resources to be preempted are contiguously scheduled, similarly to FIG. 25. In the example of FIG. 27, the UE 3 receives the PSCCH region for each slot even when the three slot are contiguously scheduled. This may be statically determined, for example, in a standard.

Alternatively, the gNB may notify the UE that performs the SL communication of information indicating reception of the PSCCH region for each slot. The gNB may include the information in the SIB, and broadcast the information or notify the UE of the information via the RRC signaling. Alternatively, the information may be preconfigured in the UE.

Another method is described. The PSCCH in the first slot may include the information indicating reception of the PSCCH region for each slot or information indicating whether to receive the PSCCH region for each slot. The information may be included in the PSCCH including the scheduling information to be used when the scheduling is performed in a plurality of contiguous slots. Upon receipt of the schedule of the plurality of contiguous slots from the UE 1, the UE 2 can receive the information indicating reception of the PSCCH region for each slot. For example, when the UE 1 preempts the resources in the second slot for the UE 3, the UE 1 transmits, to the UE 2, the information indicating reception of the PSCCH region for each slot. This enables the UE 2 to receive the PSCCH in the second slot.

Furthermore, the UE 1 includes the PI for the UE 2 in the PSCCH in the second slot, and transmits the PI. In a similar way to the example of FIG. 24, the UE 1 transmits, in the PSCCH in the second slot, the PI for the UE 2, and the SCI including the scheduling information such as the resource allocation information of the PSSCH for the UE 3. This enables the UE 2 to receive the PI.

When preempting the first slot reserved or scheduled by the UE 1 for the UE 2, the UE 1 notifies the scheduling information for the UE 3 in the PSCCH in the first slot. Furthermore, the UE 1 notifies the PI for the UE 2 in the PSCCH in the first slot. Not the scheduling information for the UE 2 but the scheduling information for the UE 3 is mapped to the PSCCH in the first slot. Thus, the UE 2 cannot receive the scheduling information in the first slot. Here, the transmission process of the UE 1 may be a process of preventing transmission to the UE 2 in the first slot, and the reception process of the UE 2 may be a process of preventing reception in the first slot.

This can avoid the UE 2 from incorrectly receiving data for the UE 3 in the first slot. When the UE receives the PSCCH region for each slot, e.g., when reception of the PSCCH region for each slot is statically determined, for example, in a standard, or when the gNB notifies the reception, the UE 2 should receive the PSCCH in the second slot. When the UE 1 schedules the PSSCH in the second slot for the UE 2, the UE 2 can receive the scheduling information and the PSSCH.

When preempting the first slot reserved or scheduled by the UE 1 for the UE 2, the UE 1 need not notify the PI for the UE 2 in the PSCCH in the first slot. The UE 1 may notify only the scheduling information for the UE 3 in the PSCCH in the first slot. When the UE 2 recognizes that the first slot is scheduled for the UE 3, the UE 2 need not perform reception in the first slot. This can avoid the UE 2 from incorrectly receiving data for the UE 3 in the first slot.

The PI may include the information indicating reception of the PSCCH region for each slot. The UE 1 notifies the UE 2 of the PI in the PSCCH in the first slot. When the UE 1 schedules the PSSCH for the UE 2 in the second slot, the UE 2 can receive the scheduling information and the PSSCH.

According to the method disclosed in FIG. 27, the UE 1 need not transmit, to the UE 2, the PI in a slot next to a plurality of contiguously scheduled slots, unlike the method disclosed in FIG. 25 or 26. Thus, the earlier reception of the PI enables the UE 2 to determine much earlier whether the resources are preempted. The UE 2 can demodulate data except the preempted resources much earlier. Furthermore, the UE 2 need not perform an operation of holding the data until receiving the PI included in the next slot. Thus, the data buffer capacity in the UE 2 can be reduced.

Another example preemption method in the SL communication is disclosed. The resources for transmitting the PI are provided. The resources for transmitting the PI should be located within the resources reserved or to be allocated in the preempted communication, and located outside the resources to be preempted. The resources for transmitting the PI may be time-frequency resources. Examples of the time unit for the resources may include slot, mini-slot, symbol, and 1/n symbol. Examples of the frequency unit for the resources may include PRB and subcarrier.

Examples of the resource configuration for transmitting the PI should include the slot number, the number of symbols, the symbol numbers, the number of PRBs, and the PRB numbers. The resource configuration for transmitting the PI may be statically predetermined, for example, in a standard. Alternatively, the gNB may determine the resource configuration for transmitting the PI, and notify, in the SIB, the UE that performs the SL communication of the determined resource configuration. Alternatively, the gNB may determine the resource configuration for transmitting the PI, and notify, via the RRC signaling, the transmission UE in the SL communication of the determined resource configuration. The transmission UE may notify, in the PSCCH, the reception UE of the resource configuration for transmitting the PI.

Alternatively, the transmission UE in the SL communication may determine the resource configuration for transmitting the PI, and notify the reception UE of the determined configuration. The transmission UE may notify, in the PSCCH, the reception UE of the resource configuration for transmitting the PI. Upon receipt of the resource configuration for transmitting the PI, the transmission UE and/or the reception UE in the SL communication can transmit and receive the PI with the resource configuration for transmitting the PI.

The transmission UE transmits the PI with the resources for transmitting the PI. A channel including the PI may be provided, and mapped to the resources for transmitting the PI. The PI may be included in the PSCCH, and mapped to the resources for transmitting the PI. When notified of the resource configuration for transmitting the PI, the reception UE may receive the resources for transmitting the PI.

Alternatively, information indicating activation and/or deactivation of receiving the resources for transmitting the PI may be provided. The transmission UE transmits, to the reception UE in the PSCCH, the activation and/or deactivation information for receiving the resources for transmitting the PI. Upon receipt of the activation information for receiving the resources for transmitting the PI, the reception UE receives the resources for transmitting the PI, with the resource configuration for transmitting the PI. Upon receipt of the deactivation information for receiving the resources for transmitting the PI, the reception UE terminates the reception of the resources for transmitting the PI, with the resource configuration for transmitting the PI.

A specific example is disclosed. When performing the scheduling using a plurality of contiguous slots, the transmission UE uses a symbol immediately before the GAP in the last slot, as a resource for transmitting the PI. The transmission UE transmits the PI in the symbol. The transmission UE should transmit, to the reception UE in the PSCCH of the first slot, the resource configuration for transmitting the PI. This enables the reception UE to receive the resource configuration for transmitting the PI, and receive the PI with the configuration.

This method enables transmission of the PI in a plurality of contiguous slots even when the resources with which the scheduling in the plurality of contiguous slots has been performed are preempted. Thus, the transmission UE need not transmit the PI in the PSCCH of the slot next to the contiguous slots, unlike the examples of FIGS. 25 and 26. Furthermore, the reception UE has only to receive the configured resources for transmitting the PI to receive the PI. Thus, the reception UE need not receive the PSCCH for each slot, unlike the method illustrated in FIG. 27. Furthermore, the reception UE should receive the resources reserved or to be allocated in the preempted communication to receive the PI. The processes in the reception UE can be simplified.

What is disclosed in the aforementioned method is to provide the resources for transmitting the PI. The transmission UE transmits the PI with the resources for transmitting the PI. Here, the transmission UE does not transmit any data. Another example preemption method in the SL communication is disclosed.

With the resources for transmitting the PI, the transmission UE multiplexes the PI or a channel including the PI into data, and transmits the resulting data. The transmission UE may multiplex the PSCCH including the PI into data with the resources for the PSCCH. The multiplexing method may be code-multiplexing. The code-multiplexing method may be, for example, a method for multiplying the channel including the PI by a predetermined scrambling code. Alternatively, a predetermined Zadoff-Chu (ZC) sequence may be used as the channel including the PI.

The predetermined scrambling code or the predetermined ZC sequence may be statically predetermined, for example, in a standard, or may be notified from the transmission UE to the reception UE. This enables the reception UE to separate the PI from the data, demodulate the PI, and receive the PI.

Data or the RS for data demodulation and the channel including the PI may be multiplied by different scrambling codes. Alternatively, different ZC sequences may be used for the data or the RS for data demodulation and the channel including the PI. These scrambling codes or ZC sequences may be statically predetermined, for example, in a standard. Alternatively, the gNB may determine the scrambling codes or the ZC sequences and notify the UE that performs the SL communication of the determined scrambling codes or ZC sequences. Alternatively, the transmission UE may determine the scrambling codes or the ZC sequences and notify the reception UE of the determined scrambling codes or ZC sequences. This enables the reception UE to separately demodulate the data and the PI, and receive the data and the PI.

Another example preemption method in the SL communication is disclosed. The resources for transmitting the PI are located outside the resources reserved or to be allocated in the preempted communication. The resource configuration for transmitting the PI may be cyclical. The aforementioned example, that is, the disclosed example of locating the resources for transmitting the PI within the resources reserved or to be allocated in the preempted communication and outside the resources to be preempted should be applied to the resource configuration for transmitting the PI, the method for notifying the resource configuration for transmitting the PI, and the method for transmitting and receiving the PI between the transmission UE and the reception UE.

The transmission UE that performs the SL communication should select the resources for the SL communication except the resources for transmitting the PI, and reserve the resources. This can avoid the collision between the resources for the SL communication and the resources for transmitting the PI.

Consequently, candidates for the resources for transmitting the PI can be increased. Furthermore, the PI can be transmitted without reducing the resources for the preempted communication.

The resources for transmitting the PI may be located inside or outside the resources reserved or to be allocated in the preempted communication. The disclosed methods should be applied.

The example of FIG. 27 discloses a case where the UE 1 cyclically reserves the resources for the UE 2. The method disclosed in the fourth embodiment may be applied when the UE 1 does not cyclically reserve or schedule the resources for the UE 2, for example, when the UE 1 non-cyclically reserves or schedules the resources for the UE 2. The method disclosed in the fourth embodiment may be applied when the UE 1 dynamically reserves or schedules the resources for the UE 2. This can produce the same advantages as previously described.

The transmission UE should determine whether the preemption is possible. The transmission UE determines whether the resources already reserved or scheduled for the communication of a service can be preempted for the communication of another service. The transmission UE may make the determination using information on the service. Examples of the information on the service may include the QoS information, the QCI, the PPPP, the required latency, and a required slew rate.

The preemption is possible, for example, when a service of data whose transmission is required later is lower in required latency than the already reserved or scheduled service.

A specific example is disclosed. The transmission UE reserves the resources for the communication of a service whose required latency is L1. Under such a circumstance, the transmission UE needs to transmit data of a service whose required latency is L2. It is assumed herein that the required latency of L2 is lower than the required latency of L1 (L1 > L2). When the required latency of the service later required is lower, the preemption is possible. The transmission UE compares the required latencies of these services, and determines that the preemption is possible when the required latency of the service later required is lower.

The MAC in the SL may make these determinations. The MAC in the SL should determine whether the preemption is possible, using information on a service. The MAC in the SL should obtain the information on the service from the upper layer. The MAC in the SL determines whether the preemption is possible. This can facilitate the coordination process between the scheduling for the preempting communication and the scheduling for the preempted communication.

The method disclosed in the fourth embodiment enables the preemption in the SL. Thus, even when the transmission UE transmits pieces of data of a plurality of services and the reception UEs are different for the respective services, the preemption can be performed in the SL communication for the services requiring the low latency characteristics. This can satisfy the low latency characteristics required for the communication.

### The First Modification of the Fourth Embodiment

The fourth embodiment discloses the preemption method when the transmission UE in the preempted communication is identical to the transmission UE in the preempting communication. This first modification discloses a preemption method when the transmission UE in the preempted communication is different from the transmission UE in the preempting communication.

When the transmission UE in the preempted communication is different from the transmission UE in the preempting communication, the problem is how to notify not only the reception UE in the preempted communication but also the transmission UE in the preempted communication that the preemption has been performed. This is because if the transmission UE in the preempted communication does not recognize that the preemption has been performed, the transmission UE transmits data with the preempted resources and causes a collision with the preempting communication. The collision disables both of the reception UE in the preempted communication and the reception UE in the preempting communication from receiving the data. The first modification discloses a method for solving the problem.

The transmission UE in the preempting communication transmits the PI2, with the resources in a slot before the resources to be preempted which can be received by the transmission UE to be preempted. The transmission UE in the preempting communication may map a channel including the PI2 to the resources in the slot before the resources to be preempted which can be received by the transmission UE to be preempted to transmit the PI2. The transmission UE in the preempting communication may transmit the PI2 in the PSFCH in the slot before the resources to be preempted.

The PI2 is information indicating the preemption. The following five specific examples of the information included in the PI2 are disclosed.
(1) Information indicating the preemption
(2) Information on the resources to be preempted
(3) Information indicating a transmission process when the resources are preempted
(4) Information on the transmission UE in the preempting communication
(5) Combinations of (1) to (4) above

(1) and (2) are identical to those of the PI.

In (3), the transmission process when the resources are preempted may be a process of preventing transmission of only the preempted resources or a process of preventing transmission of predetermined resources including the preempted resources. Examples of the predetermined resources include a slot. Alternatively, the predetermined resources may be a plurality of contiguous slots. As another example, the transmission process when the resources are preempted may be a process of preventing transmission of all pieces of data for which a part of the resources are preempted. This can simplify the transmission process. Furthermore, the transmission process may be a process of stopping transmission or a process of turning off or reducing the transmission power.

In (4), the information on the transmission UE in the preempting communication should be information for identifying the transmission UE. The information may be, for example, an identifier of the UE. This can explicitly indicate the preempting transmission UE, and reduce malfunctions.

Consequently, the transmission UE in the preempted communication can receive the PI2 from the transmission UE in the preempting communication, in a reception symbol in the slot before the resources to be preempted. Upon receipt of the PI2, the transmission UE in the preempted communication can recognize the resources to be preempted. This enables, for example, the transmission UE to perform a process of stopping transmission with the resources to be preempted.

The methods disclosed in the fourth embodiment should be applied to, for example, the method for transmitting the scheduling information including the resource allocation from the transmission UE in the preempting communication to the reception UE in the preempting communication, and the method for transmitting the PI from the transmission UE in the preempting communication to the reception UE in the preempted communication.

This enables the preemption when the transmission UE in the preempted communication is different from the transmission UE in the preempting communication.

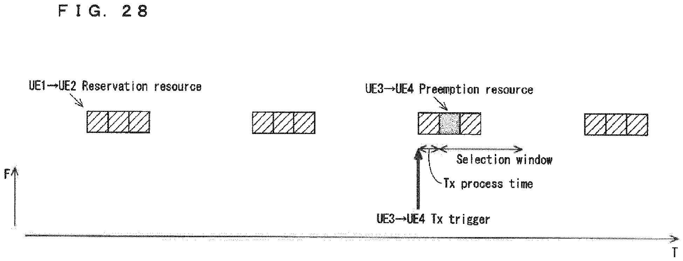

FIG. 28 illustrates an outline of the preemption in the SL communication. FIG. 28 illustrates a case where the transmission UE in the preempted communication is different from the transmission UE in the preempting communication. The UE 1 is the transmission UE in the preempted communication, the UE 2 is the reception UE in the preempted communication, the UE 3 is the transmission UE in the preempting communication, and the UE 4 is the reception UE in the preempting communication. The communication from the UE 3 to the UE 4 is communication requiring lower latency characteristics.

The UE 1 reserves resources for the UE 2. Here, the UE 1 cyclically reserves the resources, similarly to FIG. 23. As such, while the UE 1 already reserves the resources for the UE 2, the UE 3 triggers transmission to the UE 4 in the SL. The UE 3 performs the transmission process and selects resources. The UE 3 selects the resources within a selection window.

The UE 3 determines to preempt the resource already reserved by the UE 1 for the UE 2 to communicate with the UE 4 which requires the low latency characteristics. Here, the UE 3 preempts the second slot after the transmission process. The UE 3 performs transmission to the UE 4 with the preempted resource. The UE 1 need not perform transmission to the UE 2 with the preempted resource. Here, the UE 1 does not perform transmission to the UE 2 in the second slot.

As such, the UE 3 preempts, for the UE 4, the resource already reserved by the UE 1 for the UE 2, and performs transmission to the UE 4 with the resource. Consequently, the UE 3 can perform, with low latency, the communication with the UE 4 which requires the lower latency characteristics.

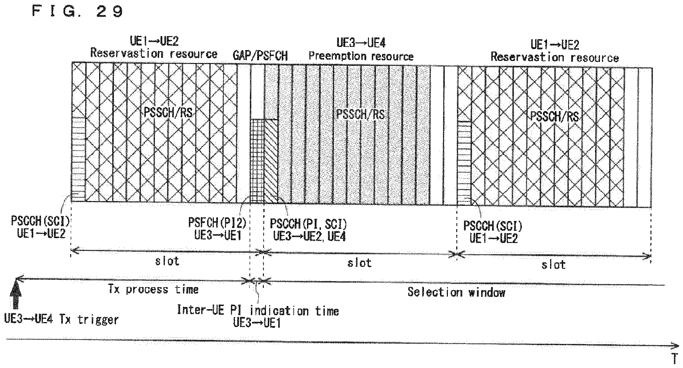

FIG. 29 illustrates the first example of the preemption method in the SL communication. FIG. 29 illustrates three slots including resources to be preempted, similarly to FIG. 28. The PSCCH, the PSSCH, the GAP, and the PSFCH are mapped to each of the slots.

FIG. 29 illustrates preempting the second slot when the UE 1 has already reserved resources of the three slots for the UE 2. The UE 3 triggers transmission to the UE 4 in the SL, and determines to preempt the resources in the second slot after the transmission process to communicate with the UE 4. Since the UE 1 performs transmission to the UE 2 in the first and third slots as usual, the UE 1 transmits the PSCCH and the PSSCH to the UE 2.

The UE 3 transmits the PI2 in a symbol which can be received by the UE 1, in a slot immediately before the second slot to be preempted (i.e., the first slot). Here, the UE 3 includes the PI2 in the PSFCH and transmits the PI2 in the symbol which can be received by the UE 1.

This enables the UE 1 to receive the PI2 before the second slot to be preempted. Upon receipt of the PI2, the UE 1 can recognize the preempted resources. Thus, the UE 1 can, for example, terminate transmission with the preempted resources. Here, the UE 1 terminates the transmission in the preempted second slot. This can prevent the UE 1 from interfering with the communication from the UE 3 to the UE 4 in the second slot to be preempted.

The UE 3 preempts the second slot after the transmission process on the UE 4 to communicate with the UE 4. The resources for the UE 2 are preempted in the second slot. The UE 3 transmits the PSCCH and the PSSCH to the UE 4 in the preempted second slot. The preempted slot may be configured so that the GAP and the PSFCH are mapped to the slot. The UE 3 includes, in the PSCCH in the preempted slot, the PI for the UE 2 and the scheduling information such as the resource allocation information of the PSSCH for the UE 4, and transmits the pieces of information. Since the UE 2 can receive the PSCCH, the UE 2 can receive the PI included in the PSCCH transmitted from the UE 3.

This can avoid the UE 2 from incorrectly receiving the resources preempted for another UE. Upon receipt of the PSCCH in the second slot, the UE 4 can recognize that the PSSCH is addressed to its own UE, and receive the PSSCH according to the scheduling information included in the SCI.

The PI2 or a channel including the PI2 may be multiplexed with the PSFCH. The transmission UE in the preempting communication may multiplex the PI2 or the channel including the PI2 with the PSFCH with the resources which can be received by the transmission UE to be preempted and transmit the resulting signal.

A method for multiplexing the PI2 with the PSFCH is disclosed. The time-division multiplexing should be used. The multiplexing should be performed using symbols that can be received by the UE 1. In the symbols that can be received by the UE 1, the symbol to which the PI2 is mapped is made different from the symbol to which the PSFCH is mapped. This enables the UE 1 to receive the PI2 and the PSFCH.

The configuration of a slot format may vary depending on the presence or absence of the PI2. For example, the reception symbol in the slot in the presence of the PI2 is numbered 2, whereas the reception symbol in the slot in the absence of the PI2 is numbered 1. Consequently, there is no need to reserve the symbol for the PI2 in the absence of the PI2. The symbol is available for another use (e.g., transmission). This can increase the use efficiency of the resources.

Another method for multiplexing the PI2 with the PSFCH is disclosed. The frequency-division multiplexing should be used. The multiplexing should be performed using a frequency domain of the symbols that can be received by the UE 1. In the symbols that can be received by the UE 1, the frequency domain (e.g., the PRB) to which the PI2 is mapped is made different from the frequency domain (e.g., the PRB) to which the PSFCH is mapped. This enables the UE 1 to receive the PI2 and the PSFCH.

Another method for multiplexing the PI2 with the PSFCH is disclosed. The code-division multiplexing should be used. In the symbols that can be received by the UE 1, the multiplexing should be performed using a scrambling code or a ZC sequence. In the symbols that can be received by the UE 1, the scrambling code by which the PI2 is multiplied is made different from the scrambling code by which the PSFCH is multiplied. This enables the UE 1 to receive the PI2 and the PSFCH. The multiplexing may be performed using the cyclic shift (CS) of the ZC sequence. This can produce the same advantages as previously described.

The PSFCH may include the PI2. For example, the PSFCH may include the HARQ feedback information and information on the PI2. For example, the Sidelink (SL) Feedback Control information (SFCI) is provided, and the information is mapped to the PSFCH. The SFCI may include the HARQ feedback information and the information on the PI2.

The PSFCH may include the PI2, and be multiplexed with the PSFCH from another UE. The aforementioned methods should be applied to the multiplexing method. This enables the UE 1 to receive the PI2 and the PSFCH.

Such a preemption method enables the preemption in the SL communication even when the transmission UE in the preempted communication is different from the transmission UE in the preempting communication. The resources already allocated or reserved can be preempted for the communication requiring the low latency characteristics. Consequently, the requirements of the low latency characteristics can be satisfied.

The methods disclosed in the fourth embodiment should be appropriately applied to the transmission process in the UE 1 and the reception process in the UE 2 with the preempted resources. For example, the method disclosed in the example of FIG. 24 should be appropriately applied. This can produce the same advantages as previously described. Furthermore, the methods disclosed in the fourth embodiment should be appropriately applied to the processes on data of the resources preempted for the UE 2. For example, the method disclosed in the example of FIG. 24 should be appropriately applied. This can produce the same advantages as previously described.

The method disclosed in the fourth embodiment should be appropriately applied to the process of preempting the first slot reserved or scheduled by the UE 1 for the UE 2. For example, the method disclosed in the example of FIG. 24 should be appropriately applied. This can produce the same advantages as previously described.

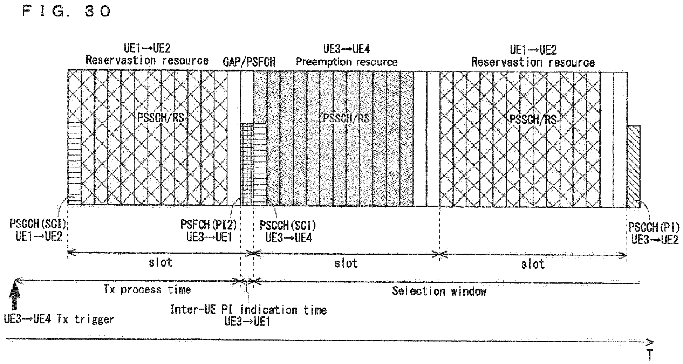

FIG. 30 illustrates the second example of the preemption method in the SL communication. Unlike FIG. 29, FIG. 30 exemplifies the preemption method when three slots including the resources to be preempted are contiguously scheduled. The PSCCHs, the PSSCHs, the GAPs, and the PSFCHs are mapped to the three contiguous slots. The PSCCH is mapped to the first slot of the three contiguous slots.

The GAP and the PSFCH are conventionally mapped to the last slot of the three contiguous slots. In the first modification, a reception symbol is mapped to each of the slots. Here, the PSFCH is mapped to each of the reception symbols.

The UE 3 transmits the PI2 in a symbol which can be received by the UE 1, in a slot immediately before the second slot to be preempted (i.e., the first slot). Here, the UE 3 includes the PI2 in the PSFCH and transmits the PI2 in the symbol which can be received by the UE 1.

This enables the UE 1 to receive the PI2 before the second slot to be preempted. Upon receipt of the PI2, the UE 1 can recognize the preempted resources. Thus, the UE 1 can, for example, terminate the transmission with the preempted resources. Here, the UE 1 terminates the transmission in the second slot preempted. This can prevent the UE 1 from interfering with the communication from the UE 3 to the UE 4 in the second slot to be preempted.

In the example of FIG. 29, the PSCCH in the second slot to be preempted includes the PI from the UE 3 to the UE 2 and the scheduling information such as the resource allocation information of the PSSCH from the UE 3 to the UE 4. Since the UE 1 performs scheduling for the UE 2 using the three contiguous slots in the example of FIG. 30, the PSCCH is not transmitted in the second slot. Thus, the UE 2 does not receive the PSCCH in the second slot. Even when the PI is transmitted in the PSCCH in the second slot, the UE 2 does not receive the PI.

To solve such a problem, the UE 3 includes the PI in the PSCCH in a slot next to the contiguously scheduled slots and transmits the PI, according to the first modification. The UE 2 receives the PSCCH in the slot next to the contiguously scheduled slots. Consequently, the UE 2 can determine whether the PSCCH includes the PI. Thus, the UE 2 can determine whether the resources are preempted.

The UE 2 should hold the received data until determining whether the resources are preempted in the contiguously scheduled slots. When the resources are preempted, the UE 2 receives the data except the preempted resources. When the resources are not preempted, the UE 2 receives the data from the three contiguous slots. This can avoid the UE 2 from incorrectly receiving the preempted data.

The UE 3 transmits the PSCCH in the second slot to the UE 4, and does not include the PI in the PSCCH. Upon receipt of the PSCCH in the second slot, the UE 4 can obtain the scheduling information of the PSSCH, and receive the PSSCH.

The method disclosed in the fourth embodiment should be appropriately applied to the transmission process in the UE 1 and the reception process in the UE 2 with the preempted resources. For example, the method disclosed in the example of FIG. 25 should be appropriately applied. This can produce the same advantages as previously described. Furthermore, the methods disclosed in the fourth embodiment should be appropriately applied to the processes on data of the resources preempted for the UE 2. For example, the method disclosed in the example of FIG. 25 should be appropriately applied. This can produce the same advantages as previously described.

The method disclosed in the fourth embodiment should be appropriately applied to the process of preempting the first slot reserved or scheduled by the UE 1 for the UE 2. For example, the method disclosed in the example of FIG. 25 should be appropriately applied. This can produce the same advantages as previously described.

Such a preemption method enables the preemption in the SL communication even when the scheduling is performed in a plurality of contiguous slots.

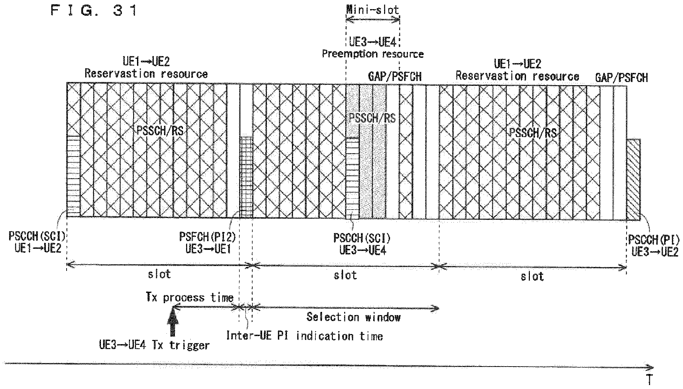

FIG. 31 illustrates the third example of the preemption method in the SL communication. FIG. 31 exemplifies the preemption method when three slots including the resources to be preempted are contiguously scheduled, similarly to FIG. 30. FIG. 31 illustrates a case where the resources to be preempted are in a mini-slot, unlike FIG. 30.

Even when the resources to be preempted are in a mini-slot, the UE 3 includes the PI in the PSCCH in the slot next to the contiguously scheduled slots and transmits the PI, similarly to the method disclosed in FIG. 30. The UE 2 receives the PSCCH in the slot next to the contiguously scheduled slots. Consequently, the UE 2 can determine whether the PSCCH includes the PI. Thus, the UE 2 can determine whether the resources are preempted.

The UE 3 transmits, to the UE 4, the PSCCH in the mini-slot which is preempted in the second slot, and does not include PI in the PSCCH. Upon receipt of the PSCCH in the mini-slot, the UE 4 can obtain the scheduling information of the PSSCH, and receive the PSSCH.

After receiving the PI2, the UE 1 may transmit the PI to the UE 2 in the PSCCH. Upon receipt of the PI2, the UE 1 can recognize the resources to be preempted. Thus, the UE 1 can transmit the PI to the UE 2.

For example, after receiving the PI2, the UE 1 includes the PI in the PSCCH in the slot next to the contiguously scheduled slots, and transmits the PI to the UE 2. The PSCCH in the slot may include information indicating from which UE the PI has been transmitted, for example, the identifier of the UE. The PSCCH in the slot may include information included in the PI. This enables the UE 2 to recognize from which UE the PI has been transmitted.

The methods disclosed in the fourth embodiment should be appropriately applied to the transmission process in the UE 1 and the reception process in the UE 2 with the preempted resources. For example, the method disclosed in the example of FIG. 26 should be appropriately applied. This can produce the same advantages as previously described. Furthermore, the methods disclosed in the fourth embodiment should be appropriately applied to the processes on data of the resources preempted for the UE 2. For example, the method disclosed in the example of FIG. 26 should be appropriately applied. This can produce the same advantages as previously described.

The method disclosed in the fourth embodiment should be appropriately applied to the process of preempting, in a mini-slot, the resources including a PSCCH region in the first slot reserved or scheduled by the UE 1 for the UE 2. For example, the method disclosed in the example of FIG. 26 should be appropriately applied. This can produce the same advantages as previously described.

Another example preemption method in the SL communication, which is disclosed in the fourth embodiment, may be appropriately applied. For example, the method for providing the resources for transmitting the PI may be appropriately applied. Although the UE 1 transmits the PI to the UE 2 in the fourth embodiment, the UE 3 transmits the PI to the UE 2 in the first modification. The UE 3 needs to recognize the resource configuration for transmitting the PI. Thus, the gNB may notify, in the SIB, the UE that performs the SL communication of the resource configuration for transmitting the PI. Alternatively, the gNB may determine the resource configuration for transmitting the PI, and notify, via the RRC signaling, the transmission UE in the SL communication of the determined resource configuration. With application of these methods, the UE 3 can recognize the resource configuration for transmitting the PI.

As another method, the UE 1 may notify the UE 3 of the resource configuration for transmitting the PI. For example, the UE 1 notifies the UE 3 of the resource configuration for transmitting the PI via the RRC signaling or the MAC signaling. Alternatively, the UE 1 may notify, in the PSCCH, the resource configuration for transmitting the PI. Upon receipt of the PSCCH, the UE 3 can recognize the resource configuration for transmitting the PI. Consequently, the UE 3 can transmit the PI to the UE₂.

The example of FIG. 31 discloses a case where the UE 1 cyclically reserves the resources for the UE 2. The method disclosed in the first modification may be applied when the UE 1 does not cyclically reserve or schedule the resources for the UE 2, for example, when the UE 1 non-cyclically reserves or schedules the resources for the UE 2. The method disclosed in the first modification may be applied when the UE 1 dynamically reserves or schedules the resources for the UE 2. This can produce the same advantages as previously described.

The PSCCH should include information on a service in the SL communication. The transmission UE in the SL communication includes, in the PSCCH, the information on the service and transmits the information. The transmission UE in the SL communication may include, in the SCI, the information on the service and transmit the information in the PSCCH. The transmission UE in the SL communication may include, in the SCI1, the information on the service and transmit the information in the PSCCH. Upon receipt of the PSCCH, the UE in the SL communication can obtain the information on the service.

The transmission UE in the preempting communication should determine whether the preemption is possible. The transmission UE determines whether the resources reserved or scheduled for the communication of another UE can be preempted for the communication of a service for its own UE. The transmission UE may make the determination using information on the service.

The transmission UE receives the PSCCH with the resources reserved or scheduled for the communication of another UE to obtain the information on the service. The transmission UE may receive the PSCCH with the resources before the resources to be preempted to obtain the information on the service. The transmission UE compares information on a service for another UE with information on the service for its own UE and determines whether the preemption is possible. The method disclosed in the fourth embodiment should be applied to a method for determining whether the preemption is possible, using the pieces of information on the services.

As another method, information on whether the preemption is possible may be provided as the information on the service. For example, a service requiring the lowest latency characteristics includes information indicating that the preemption is possible, as the information on the service. The UE for which the information indicating that the preemption is possible has been configured can preempt the resources reserved or scheduled for the communication of another UE.

Consequently, the preemption in the SL is possible for the communication of a service requiring the preemption, for example, requiring the lower latency characteristics in the SL.

Such a method disclosed in the first modification enables the preemption in the SL even when the transmission UE in the preempted communication is different from the transmission UE in the preempting communication. Thus, the reception UE in the preempting communication can receive data earlier. Consequently, the preemption in the SL communication for the service requiring the low latency characteristics can satisfy the low latency characteristics required for the communication.

### The Fifth Embodiment

Resources for the SL communication are configured as a resource pool (hereinafter referred to as an SLRP). The SLRP is preconfigured in the UE. Alternatively, the gNB notifies the UE of the SLRP in the SIB or via the RRC signaling.

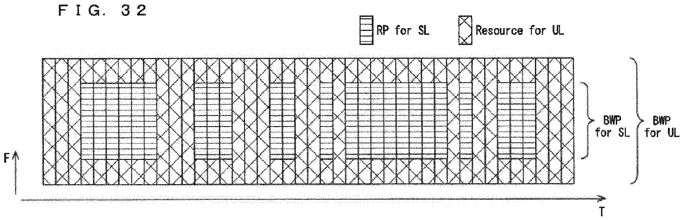

FIG. 32 illustrates a case where the SLRPs are configured in a UL carrier in the Uu. Resources are illustrated per slot. The cross-hatched portions represent resources to be used for the UL communication in the Uu, and horizontally hatched portions represent the SLRPs to be used for the SL communication. The SLRPs are configured within the bandwidth part (BWP) configured in the UL in the Uu. The SLRPs are configured within the SL BWP. In FIG. 32, the frequency range of the SLRPs is identical to that of the SL BWP.

In such a case, the preemption between the UL communication in the Uu and the SL communication is probable. However, none discloses the preemption between the UL communication in the Uu and the SL communication. Here, how to deal with the preemption between the UL communication in the Uu and the SL communication is disclosed.

The resources to be used for the UL communication in the Uu are not preempted for the SL communication. Preempting, for the SL communication, the resources to be used for the UL communication in the Uu may be inhibited or need not be permitted. The resources outside the SLRPs are not preempted for the SL communication. Preempting the resources outside the SLRPs for the SL communication may be inhibited or need not be permitted.

The resources within the SLRPs are not preempted for the UL communication in the Uu. Preempting the resources within the SLRPs for the UL communication in the Uu may be inhibited or need not be permitted. The resources outside the resources for the UL communication in the Uu are not preempted for the UL communication in the Uu. Preempting, for the UL communication in the Uu, the resources outside the resources for the UL communication in the Uu may be inhibited or need not be permitted.

These configurations may be made for each service. Alternatively, only one of the configurations may be made.

Consequently, the SL communication is not performed with the resources for the UL communication in the Uu. Furthermore, the communication in the Uu is not performed in the SLRPs. When the UL communication in the Uu and the SL communication are performed in the same carrier by dividing the communication resources between the UL communication in the Uu and the SL communication, the UL communication in the Uu can be easily multiplexed with the SL communication. Consequently, the network devices and the terminals can easily perform the communication processes.

However, when data requiring the low latency characteristics is generated in the SL, the devices sometimes cannot transmit such data outside the SLRPs, and have to wait to transmit the data until the timing of the SLRPs. Thus, the low latency requirements sometimes cannot be satisfied. The same is applied to the opposite case. When data requiring the low latency characteristics in the UL in the Uu is generated, the devices sometimes cannot transmit such data in the SLRPs and have to wait to transmit the data until the resource timing for the UL in the Uu. Thus, the low latency requirements sometimes cannot be satisfied. A method for solving such problems is disclosed.

To solve the problems, the preemption may be performed between the UL communication in the Uu and the SL communication. The resources to be used for the UL communication in the Uu may be preempted for the SL communication. Preempting, for the SL communication, the resources to be used for the UL communication in the Uu may be permitted. The resources outside the SLRPs may be preempted for the SL communication. Preempting the resources outside the SLRPs for the SL communication may be permitted.

The resources to be preempted for the UL communication in the Uu may be limited within the BWP including the SLRPs. The resource to be preempted for the UL in the Uu may be limited within the same slot as that of the SLRP.

As another method, a resource pool for the preemption in the SL communication may be provided for the UL resources in the Uu. The RP for the SL preemption is configured for the UE in the SL communication. The reception UE in the SL communication receives not only the SLRP but also the RP for the SL preemption, using the configuration of the configured RP for the SL preemption. The transmission UE in the SL communication can perform transmission not only with the SLRP but also with the RP for the SL preemption, using the configuration of the configured RP for the SL preemption.

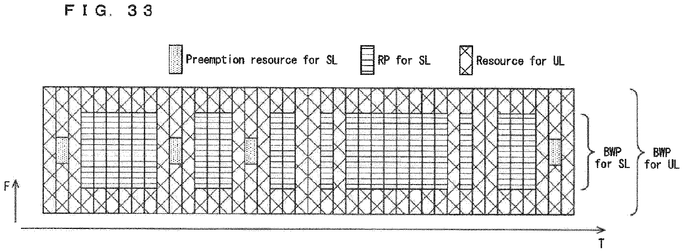

FIG. 33 illustrates a case where preempting the UL resources in the Uu is permitted for the SL communication. Resources are illustrated per slot. The dot-hatched portions represent resources preempted for the SL communication. The UL resources in the Uu are used for the preemption. The resources to be preempted for the SL communication are configured within the BWP including the SLRPs.

Consequently, when data requiring the low latency characteristics in the SL is generated, preempting the UL resources in the Uu for the SL communication enables the SL communication. Particularly, even when there is a time interval until the timing of the next SLRP, the SL communication can be performed without waiting for the timing. This can produce the low latency characteristics.

The resources within the SLRPs may be preempted for the UL communication in the Uu. Preempting the resources within the SLRPs for the UL communication in the Uu may be permitted. The resources outside the resources for the UL communication in the Uu may be preempted for the UL communication in the Uu. Preempting, for the UL communication in the Uu, the resources outside the resources for the UL communication in the Uu may be permitted.

The resources to be preempted for the SL communication may be limited within the BWP including the resources for the UL communication in the Uu. The resource for the SL communication to be preempted may be limited within the same slot as that of the resource for the UL communication in the Uu.

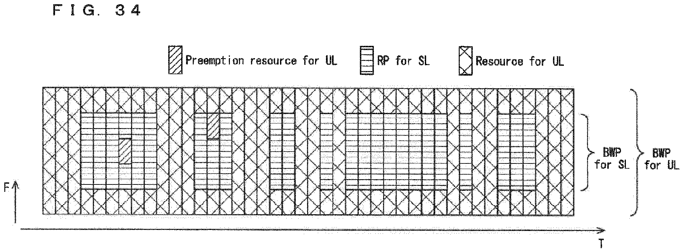

FIG. 34 illustrates a case where preempting the resources within the SLRPs for the UL communication in the Uu is permitted. Resources are illustrated per slot. The diagonally hatched portions represent the resources preempted for the UL communication in the Uu. The resources for the SL communication are used for the preemption. The resources to be preempted for the UL communication in the Uu are configured within the BWP for the UL communication in the Uu.

Consequently, when data requiring the low latency characteristics in the UL in the Uu is generated, preempting, for the UL communication in the Uu, the resources for the SL communication enables the UL communication in the Uu. Particularly, even when there is a time interval until the timing of the next resources for the UL communication in the Uu, the UL communication in the Uu can be performed without waiting for the timing. Even when the load on the use of the resources for the UL communication in the Uu is high, the resources for the SL communication can be preempted. This can produce the low latency characteristics.

### The Sixth Embodiment

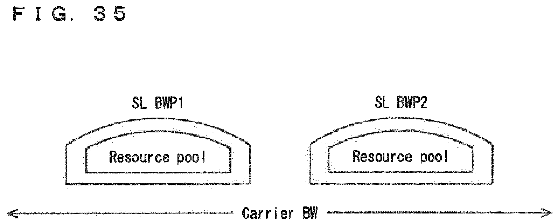

The use of the BWP in the SL in NR has been agreed (Non-Patent Document 29 (Draft Report of 3GPP TSG RAN WG1 #95 v0.2.0 (Spokane, USA, 12th-16th November 2018)). Each resource pool (RP) in the SL is (pre)configured within one SLBWP. FIG. 35 illustrates a case where two SLRPs and two SLBWPs are configured within the same carrier. Each of the SLRPs is configured within the frequency range of a corresponding one of the SLBWPs. However, none discloses a specific method for configuring the SLBWP. The sixth embodiment discloses a method for configuring the SLBWP.

The SLBWP is different from the BWP in the UL in the Uu. The SLBWP is configured separately from the BWP configured in the UL in the Uu. Consequently, the SLRPs can be provided in a frequency band different from that for the BWP in the UL in the Uu. This enables the SL communication in the frequency band different from that for the BWP in the UL in the Uu.

The frequency range in which the SLRPs are configured may be the SLBWP. The configuration of the BWP is used in the communication in the Uu for limiting the frequency range in which the UE can communicate. In the SL, the frequency range in which the UE can communicate need not be wider than the frequency range of the SLRPs by configuring the SLBWP within the frequency range in which the SLRPs are configured. The UE that performs the SL communication can be easily configured.

When a plurality of SLRPs are configured within one SLBWP, the minimum frequency range including frequency ranges of the plurality of SLRPs may be the SLBWP. Similarly, the frequency range in which the UE can communicate need not be wider than the minimum frequency range including the frequency ranges of the plurality of configured SLRPs. The UE that performs the SL communication can be easily configured.

A method for notifying the UE of the SLBWP is disclosed. The SLRPs and the SLBWP may be configured separately for the UE. As described above, the SLRPs are reconfigured in the UE. Alternatively, the gNB notifies the UE of the configuration of the SLRPs in the SIB or via the RRC signaling. Similarly, the SLBWP is preconfigured in the UE. Alternatively, the gNB notifies the UE of the configuration of the SLBWP in the SIB or via the RRC signaling. The gNB may include the configuration of the SLBWP in the configuration of the BWP in the UL in the Uu, and notify the configuration. When the SLRPs and the SLBWP are dedicatedly configured for the UE, association indicating which SLRP corresponds to which SLBWP needs to be established.

An SLRP identifier for identifying an SLRP is provided. The SLRP identifier should be included in information for configuring the SLBWP. The SLRP identifier of the SLRP corresponding to the SLBWP to be configured is included in the information for configuring the SLBWP. This enables the UE to recognize the association between the SLRP and the SLBWP. Furthermore, the configurations of the SLRP and the SLBWP can be dedicatedly and flexibly changed. The amount of information in the SIB or the RRC signaling for change can be reduced.

The configuration of the SLRPs may include the configuration of the SLBWP for the UE. The configuration of the SLRPs should include the configuration of the SLBWP, for example, by associating the information for configuring the SLBWP with the SLRPs to be configured. This can reduce the amount of signaling to be configured for the UE.

The information for configuring the SLBWP may include information on the numerology. The UE can recognize the numerology of the resources of the SLBWP. The numerology of the SLRPs should be identical to the numerology of the corresponding SLBWP. The UE can also recognize the numerology of the SLRPs.

The UE may notify the gNB of information on the frequency range in which its own UE can perform the SL communication. The UE capability may include the information on the frequency range. The UE may notify the gNB of the UE capability. The gNB configures the SLBWP for the UE, using the information on the frequency range in which the UE can perform the SL communication. The gNB notifies the UE of the configuration of the SLBWP. Consequently, the UE need not communicate in a frequency range beyond its own UE capability. This can reduce malfunctions or interruption of communication in the UE.

The UE may notify the transmission UE in the SL communication of the information on the frequency range in which its own UE can perform the SL communication. The UE capability information may include the information on the frequency range. The UE capability may be notified between the UEs in the SL communication. The transmission UE configures the SLBWP, using the information on the frequency range in which the reception UE can perform the SL communication. For example, the transmission UE may configure other SLBWPs in the PSCCH. The transmission UE may notify the configurations of the other SLBWPs and the SLRPs. Consequently, the transmission UE need not communicate in a frequency range beyond the capability of the reception UE. This can reduce malfunctions or interruption of communication between the UEs.

The UE that performs the SL communication may be able to communicate in a preconfigured frequency range. The preconfigured frequency range may be a default SLBWP. Unless the BWP is dedicatedly configured for each UE, the default SLBWP may be configured. The SLRPs are configured within the frequency range of the default SLBWP. This can save the signaling for the UE when the dedicated configuration for each UE is unnecessary. Furthermore, the default SLBWP is available when the UE is outside the coverage of a cell and cannot receive the SLBWP from the gNB.

The SLBWP may be configured for each service. The SLRPs are configured within the frequency range of the SLBWP for each service. Alternatively, the SLBWP may be configured for each QCI. The SLRPs are configured within the frequency range of the SLBWP for each QCI. Not the QCI but a QoS indicator for the SL may be used. The SLBWP may be the default SLBWP or the SLBWP dedicatedly configured for each UE. This enables the configuration of the SLRPs appropriate for each service.

The method for configuring the SLBWP as disclosed in the sixth embodiment enables the UE to recognize the configuration of the SLBWP and apply the BWP in the SL communication. The UE should be able to communicate within the SLBWP in the SL communication. Furthermore, the gNB can configure the SLBWP according to the UE capability for enabling the SL communication, and configure the SLRPs within the SLBWP.

### The Seventh Embodiment

Operating the Supplementary UpLink (SUL) is supported in the Uu in NR (Non-Patent Document 16 (TS38.300)). In the Uu, the SUL is configured for each cell, and the non-SUL and the SUL are configured in the same cell. Furthermore, the gNB can dynamically configure the SUL in the PDCCH for the UE. The gNB dynamically configures the SUL for each slot for each UE.

The SUL is provided in the SL communication. The SL communication may be performed using the SUL. When the communication quality of the SL communication in a normal UL, that is, the non-SUL deteriorates, the use of the SUL can increase the communication quality.

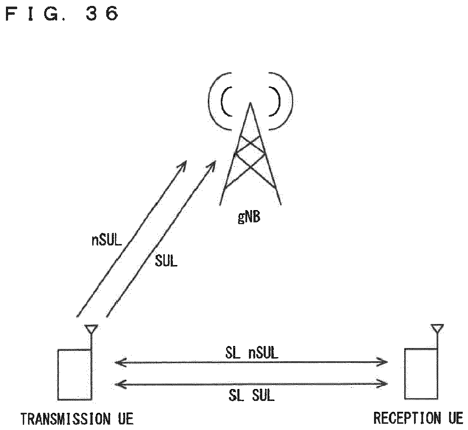

FIG. 36 is a conceptual diagram illustrating the support of not only the non-SUL but also the SUL in the SL. The non-SUL and the SUL are supported in the UL in the Uu. The transmission UE can perform transmission to the gNB, using both of the non-SUL and the SUL. Both of the non-SUL and the SUL are supported in the SL communication. The transmission UE in the SL communication can perform transmission to the reception UE, using both of the non-SUL and the SUL.

The SUL in the SL may be identical to the SUL configured in the Uu. Consequently, a separate SUL for the SL is unnecessary. Moreover, the UE need not communicate in a plurality of SULs. This can simplify the processes in the UE.

The SUL in the SL may be different from the SUL configured in the Uu. A SUL in the SL may be configured, and the SL communication may be performed using the SUL. Consequently, the SUL for the SL can be separately configured, irrespective of the SUL in the Uu. The SUL in the SL can be flexibly configured. For example, the SUL can be configured according to the communication quality in the SL communication. This can increase the communication quality in the SL communication.

The SLRP configuration in the SUL may be identical to that in the non-SUL. Consequently, the resources for the SL communication can be consistently allocated in the SUL and the non-SUL.

### The SLRP configuration in the SUL may be different from that in the non-SUL. Consequently, the SLRPs in the SUL can be appropriately configured to meet the communication load in the SUL.

The numerologies in the SUL and the non-SUL may be the same. Consequently, the timing of the SLRPs can be consistent. Alternatively, the numerologies in the SUL and the non-SUL may be different. Consequently, the numerology can suit each carrier frequency in the SUL and the non-SUL.

The configuration of the time domain of the SLRPs in the SUL may be identical to that of the time domain of the SLRPs in the non-SUL. The SLRP may be configured per symbol or per 1/n symbol. Consequently, even when the numerologies of the SUL and the non-SUL are different, the configuration of the time domain can be consistent.

The use of the same configuration of the time domain is effective, for example, when the transmission UE schedules the PSSCH in the SUL using the PSCCH in the non-SUL, which is described later. Since the configuration of the time domain of the SLRPs in the non-SUL is the same as that of the SLRPs in the SUL, the scheduling information of the time domain of the PSSCH in the non-SUL can be identical to that of the PSSCH in the SUL. This can simplify the scheduling control using the SLRPs in the SUL.

The configuration of the time domain of the SLRPs in the SUL may be different from that of the time domain of the SLRPs in the non-SUL. The transmission UE performs transmission in the non-SUL and the SUL at different timings, using the different configurations of the time domains. Thus, the transmission power with which the UE can perform transmission need not be distributed to the transmission in the non-SUL and the transmission in the SUL, and the reception quality in each of the links can be increased. Furthermore, the reception UE need not simultaneously receive the SLRPs in the non-SUL and the SUL. This can simplify the reception processes in the reception UE.

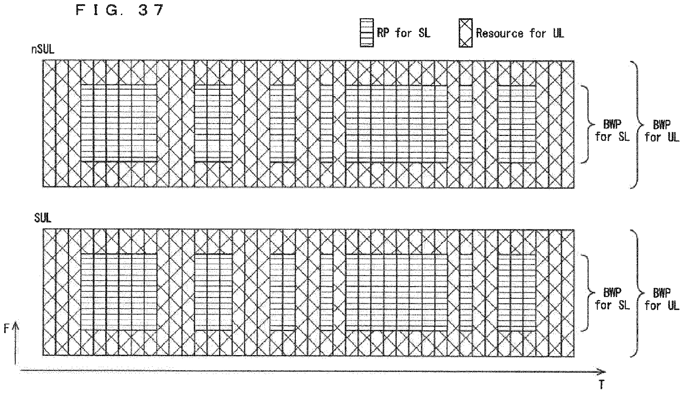

FIG. 37 illustrates a case where the numerologies in the non-SUL and the SUL are the same. In an example of FIG. 37, the SLRP configuration in the non-SUL is the same as that in the SUL. Since the frequencies in the non-SUL and the SUL are different, the frequencies of the SLRPs in the non-SUL are different from those in the SUL. FIG. 37 illustrates a case where the SLRPs are configured in the UL carrier in the Uu. Resources are illustrated per slot.

The cross-hatched portions represent resources to be used for the UL communication in the Uu, and horizontally hatched portions represent the SLRPs to be used for the SL communication. The SLRPs in the non-SUL and the SUL are configured within the BWPs configured in the UL in the Uu. The SLRPs are configured within the SL BWPs. In FIG. 37, the frequency ranges of the SLRPs are identical to those of the SL BWPs.

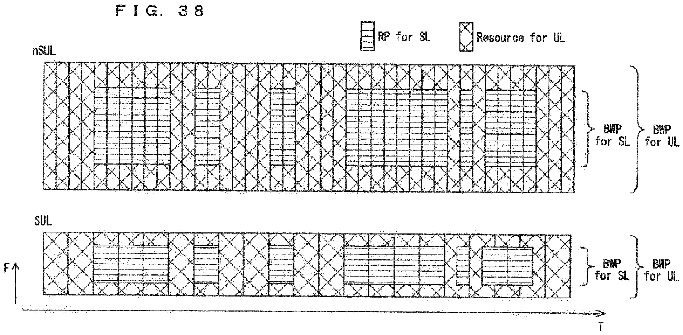

FIG. 38 illustrates a case where the numerologies in the non-SUL and the SUL are different. FIG. 38 illustrates a case where the configurations of the time domains of the SLRPs in the non-SUL and the SUL are the same. Resources are illustrated per slot. The symbol spacing in the SUL is half the symbol spacing in the non-SUL. The subcarrier spacing (SCS) in the SUL is double the subcarrier spacing in the non-SUL. The SLRP is configured per 1/2 symbol in the numerology of the SUL. Consequently, even when the numerologies of the SUL and the non-SUL are different, the configurations of the time domains of the SLRPs can be consistent.

A method for configuring the SUL in the SL (hereinafter may be referred to as SL SUL) is disclosed. The SUL may be preconfigured in the UE. Alternatively, the gNB may notify the UE of the configuration of the SUL in the SIB or via the RRC signaling. A method for configuring the SLRPs in the SUL in the SL is disclosed. One or more SLRPs may be configured in one SUL. One SLRP configuration may be made in one or more SULs. The SUL and the SLRPs in the SUL may be configured in association with each other. The SLRP configuration in the SUL may be preconfigured in the UE. Alternatively, the gNB may notify the UE of the SLRP configuration in the SUL in the SIB or via the RRC signaling.

The SUL and the SLRPs in the SUL may be configured separately. In such a case, information for identifying the SUL may be provided. The information may be an identifier of the SUL. Alternatively, the information may be a carrier identifier of the SUL. Information for configuring the SLRPs in the SUL should include information for identifying the SUL with which the SLRPs in the SUL are associated. Even when the SUL and the SLRPs in the SUL are configured separately, the UE can recognize which SLRP configuration is made in which SUL.

Information for identifying an SLRP may be provided. The information may be an identifier of the SLRP. Information for configuring the SUL should include information for identifying the SLRP with which the SUL is associated. Even when the SUL and the SLRPs in the SUL are configured separately, the UE can recognize which SLRP configuration is made in which SUL.

The SL communication is performed inside or outside the cell coverage, unlike the communication in the Uu. The SUL in the SL need not be configured for each cell. For example, the same SUL may be configured within a tracking area (TA). The UE in RRC_IDLE state can use the SUL when performing the SL communication. The same SUL may be configured within a RAN-based notification area (RNA). The UE in RRC_INACTIVE state can use the SUL when performing the SL communication.

The SUL in the SL may be configured for each cell. The UE in RRC_CONNECTED state can use the SUL when performing the SL communication. The SUL in the SL may be identical to the SUL in the Uu. Consequently, the SL communication can be performed at the carrier frequencies identical to those of the non-SUL and the SUL in the Uu. This can simplify the SL communication processes in the UE.

A scheduling method in the SL SUL is disclosed. A case where the gNB performs the scheduling is disclosed. Information indicating the SL SUL or a non-SL SUL is provided. The gNB includes, in the DCI, the information indicating the SL SUL or a non-SL SUL and notifies the transmission UE in the SL communication of the information. The gNB may include an identifier of the SL SUL in the DCI, and notify the transmission UE of the identifier. The gNB may include the scheduling information in the DCI, and notify the transmission UE of the information. The transmission UE in the SL communication can select resources for the SL communication in the SL SUL, using these pieces of information. The transmission UE transmits the PSCCH and the PSSCH for the SL communication with the resources.

The UE has a transmission function and/or a reception function (hereinafter may be referred to as a transmission/reception function) in the SL SUL. The UE may notify the gNB of information on the SL SUL. The information on the SL SUL may include information on the transmission/reception function in the SL SUL. Examples of the information on the transmission/reception function in the SL SUL include the carrier frequency, the band, the numerology, and the MIMO multiplexing order for enabling transmission and/or reception in the SL SUL.

The UE capability may include the information on the SL SUL. The UE may notify the gNB of the UE capability. The gNB configures the SL SUL for the UE, using the information on the SL SUL of the UE. The gNB notifies the UE of the configuration of the SL SUL. Consequently, the UE need not communicate in the SL SUL beyond its own UE capability. This can reduce malfunctions or interruption of communication in the UE.

The UE may notify the transmission UE in the SL communication of the information on the SL SUL of its own UE. The UE capability information may include the information on the SL SUL. The UE capability may be notified between the UEs in the SL communication. The transmission UE configures the SL SUL, using the information on the SL SUL of the reception UE. For example, the transmission UE may configure the SL SUL in the PSCCH. The transmission UE may notify the configurations of the SLRPs in the SL SUL and the SUL. Consequently, the transmission UE need not communicate in the SL SUL beyond the capability of the reception UE. This can reduce malfunctions or interruption of communication between the UEs.

The UE whose SLRPs have been configured in the SL SUL searches for the SLRPs in the SL SUL when receiving the SL communication. The UE may receive the PSCCH in the SLRPs in the SL SUL. The UE activates searching for the SLRPs upon receipt of the notification of the configuration of the SLRPs in the SL SUL. The UE deactivates searching for the SLRPs upon receipt of the notification of the configuration for releasing the SLRPs in the SL SUL.

Information indicating activation or deactivation of the SL SUL may be provided. Upon receipt of the activation/deactivation information of the SL SUL, the UE activates or deactivates searching for the SLRPs in the SL SUL. The gNB may notify the reception UE of the activation/deactivation information of the SL SUL via the RRC signaling.

The use of the activation/deactivation information of the SL SUL may be limited to the unicast communication or the groupcast communication in the SL. The reception UE is identified in the unicast communication or the groupcast communication in the SL, unlike the broadcast communication. Thus, the gNB can notify the reception UE of the activation/deactivation information of the SL SUL via the RRC signaling. In the broadcast communication, the gNB may notify the activation/deactivation information as common information in the SIB or via the RRC signaling. This is effective when the reception UE cannot be identified.

As such, provision of the activation/deactivation information of the SL SUL and the notification to the reception UE save the UE from continuing to search for the SLRPs in the SL SUL from when the SLRPs are configured in the SL SUL until when the configuration is released. The UE has only to search for the SLRPs in the SL SUL from receipt of the activation information of the SL SUL until receipt of the deactivation information of the SL SUL. This reduces the power consumption in the UE.

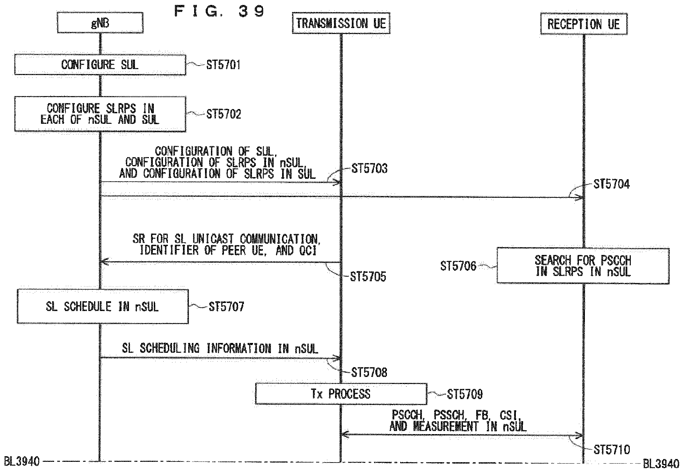

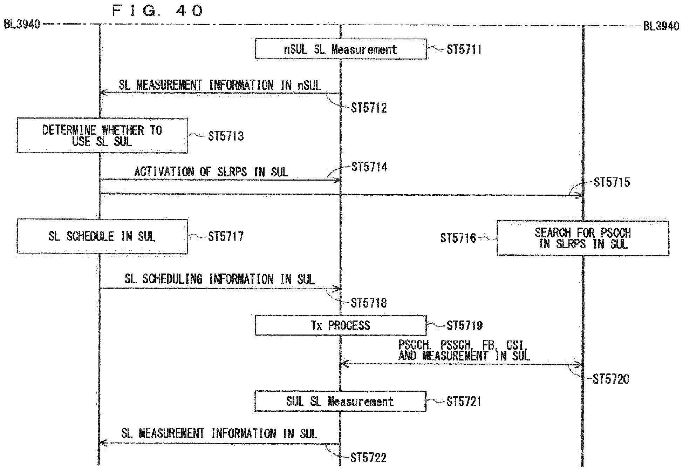

FIGS. 39 and 40 illustrate an example sequence for performing the SL communication in the SL SUL. FIGS. 39 and 40 are connected across a location of a border BL3940. FIGS. 39 and 40 illustrate a case where the gNB configures the SL SUL and the SLRPs. Furthermore, FIGS. 39 and 40 illustrate the gNB, and the transmission UE and the reception UE that perform the SL communication. In Step ST5701, the gNB configures the SL SUL. In Step ST5702, the gNB configures the SLRPs in each of the non-SUL (nSUL) and the SUL. In Steps ST5703 and ST5704, the gNB notifies the UEs of the configuration of the SUL, the configuration of the SLRPs in the non-SUL, and the configuration of the SLRPs in the SUL. For example, the gNB includes these configurations in the SIB, and broadcasts the configurations. Both of the transmission UE and the reception UE that perform the SL communication can receive these pieces of information.

In Step ST5706, the UE that receives the SL communication receives the PSCCH in the SLRPs in the non-SUL, and starts searching for the PSCCH for its own UE. In the example of FIGS. 39 and 40, the reception UE does not start searching for the PSCCH in the SLRPs in the SUL. In Step ST5705, the UE that performs transmission in the SL communication transmits a scheduling request (SR) to the gNB to perform unicast communication in the non-SUL. The UE may notify, together with the SR or as information on the SR, for example, an identifier of the peer UE in the communication (reception UE), the BSR of the SL communication, and information on a service in which communication is performed in the SL. Examples of the information on the service may include the QoS information, the QCI, the PPPP, the required latency, and a required slew rate.

The transmission UE notifies the gNB of the SR and these pieces of information in the UL in the Uu. The transmission UE may notify the gNB of the SR and these pieces of information in the PUCCH. This can expedite the notification. Alternatively, the transmission UE may give the notification via the MAC signaling or the RRC signaling. Since the HARQ is supported in the MAC signaling or the RRC signaling, the transmission UE can give the notification at a lower error rate.

In Step ST5707, the gNB determines a schedule for the SL communication in the non-SUL. In Step ST5708, the gNB notifies the transmission UE of scheduling information for the SL communication in the non-SUL. In Step ST5709, the transmission UE performs a transmission process according to the received scheduling information. In Step ST5710, the transmission UE performs transmission to the reception UE in the SL, according to the scheduling information received from the gNB. The UE transmits the PSCCH and the PSSCH.

The transmission UE may include, in the PSCCH, the identifier of the reception UE with which the SL communication is performed. Consequently, the reception UE that searches for the PSCCH in Step ST5706 can receive the PSCCH from the transmission UE, and determine that the PSCCH is addressed to its own UE. Upon receipt of the PSCCH from the transmission UE, the reception UE receives the PSSCH according to the scheduling information of the PSSCH that is included in the PSCCH. Consequently, the reception UE can receive data from the transmission UE.

The reception UE may transmit, to the transmission UE, whether to have received the data. The reception UE may transmit whether to have received the data, as the HARQ feedback information (Ack/Nack). Furthermore, the reception UE may transmit the channel state information (CSI) to the transmission UE. Furthermore, the reception UE may transmit the SRS to the transmission UE. Furthermore, the reception UE may perform measurement, and transmit the measurement result to the transmission

UE. The reception UE may measure, as the measurement, the RSRP and the RSRQ of the RS received from the transmission UE. Alternatively, the reception UE may measure not only the RSRP and the RSRQ of the RS from the transmission UE but also the RSRP and the RSRQ of the RS in one or more PRBs or a sub-channel. The reception UE transmits the measurement result to the transmission UE.

In Step ST5711, the transmission UE measures the SL communication in the non-SUL. The transmission UE measures the communication quality using the channel or signal transmitted from the reception UE. Alternatively, the transmission UE may use the measurement result transmitted from the reception UE, instead of performing the measurement. Consequently, the transmission UE can obtain measurement information in the SL communication in the non-SUL. Furthermore, the transmission UE can recognize the communication quality in the SL communication in the non-SUL.

In Step ST5712, the transmission UE transmits, to the gNB, the measurement information in the SL communication in the non-SUL. In Step ST5713, the gNB determines whether to use the SUL in the SL communication, using the measurement information received from the transmission UE. A predetermined threshold may be provided for the communication quality. For example, when the communication quality falls below the threshold, the gNB may determine to use the SUL in the SL communication.

The gNB may notify, in advance, the transmission UE of the predetermined threshold. The transmission UE determines whether it is better to use the SUL in the SL communication, using the measurement result obtained in Step ST5711. When the communication quality falls below the threshold, the transmission UE may determine that the SUL is necessary for the SL communication, and request the gNB to use the SUL in the SL communication in Step ST5712. In response to the request from the transmission UE, the gNB may determine to use the SUL in the SL communication in Step ST5713.

In Steps ST5714 and ST5715, the gNB notifies the activation information of the SL SUL. The gNB may notify the activation information of the SLRPs in the SL SUL. The notification of the activation information of the SLRPs in the SL SUL activates the SL SUL. In the example of FIGS. 39 and 40, the gNB notifies the transmission UE and the reception UE of the activation information of the SLRPs in the SUL via the RRC signaling. The transmission UE and the reception UE may notify the gNB of the completion of receiving the activation information of the SLRPs in the SUL. The transmission UE and the reception UE may give the notification via the RRC signaling. Upon receipt of the activation information of the SLRPs in the SUL, the reception UE starts searching for the PSCCH in the SLRPs in the SUL in Step ST5716, using the configuration of the SLRPs in the SUL which has been received in Step ST5704.

The gNB performs scheduling for the SL communication in the SUL in Step ST5717, and notifies the transmission UE of the SL scheduling information in the SUL in Step ST5718. In Step ST5719, the transmission UE performs a transmission process. In Step ST5720, the transmission UE performs transmission to the reception UE in the SL SUL, according to the scheduling information received from the gNB. The transmission UE transmits the PSCCH and the PSSCH.

The transmission UE may include, in the PSCCH, the identifier of the reception UE with which the SL communication is performed. Consequently, the reception UE that searches for the PSCCH in Step ST5716 can receive the PSCCH from the transmission UE and determine that the PSCCH is addressed to its own UE. Upon receipt of the PSCCH from the transmission UE, the reception UE receives the PSSCH according to the scheduling information of the PSSCH that is included in the PSCCH. Consequently, the reception UE can receive data from the transmission UE.

The reception UE may apply the method disclosed in Step ST5710 to the communication in the SUL. The reception UE may transmit, to the transmission UE, whether to have received the data as the feedback information. The reception UE may transmit whether to have received the data, as the HARQ feedback information (Ack/Nack). Furthermore, the reception UE may transmit the channel state information (CSI) to the transmission UE. Furthermore, the reception UE may transmit the SRS to the transmission UE. Furthermore, the reception UE may perform measurement, and transmit the measurement result to the transmission UE. The reception UE may measure, as the measurement, the RSRP and the RSRQ of the RS received from the transmission UE. Alternatively, the reception UE may measure not only the RSRP and the RSRQ of the RS from the transmission UE but also the RSRP and the RSRQ of the RS in one or more PRBs or a sub-channel. The reception UE transmits the measurement result to the transmission UE.

In Step ST5721, the transmission UE measures the SL communication in the SUL. The transmission UE measures the communication quality using the channel or signal transmitted from the reception UE. Alternatively, the transmission UE may use the measurement result transmitted from the reception UE, instead of performing the measurement. Consequently, the transmission UE can obtain measurement information in the SL communication in the SUL. Furthermore, the transmission UE can recognize the communication quality in the SL communication in the SUL.

In Step ST5722, the transmission UE transmits, to the gNB, the measurement information in the SL communication in the SUL. The gNB determines whether to use the non-SUL in the SL communication, using the measurement information received from the transmission UE. A predetermined threshold may be provided for the communication quality. For example, when the communication quality falls below the threshold, the gNB may determine to use the non-SUL in the SL communication.

This enables the SL communication in the SUL.

The same is applied to the deactivation in the SUL. For example, upon receipt of the measurement information in the SL communication in the SUL in Step ST5722, the gNB determines whether to terminate the use of the SUL for the SL communication. For example, when the communication quality of the SL communication in the SUL falls below the predetermined threshold, the gNB determines to terminate the use of the SUL for the SL communication. After the gNB determines to terminate the use of the SUL for the SL communication in the SUL, the gNB notifies the transmission UE and the reception UE of the deactivation information of the SLRPs in the SUL. The gNB should notify the deactivation information via the RRC signaling. The transmission UE and the reception UE may notify the gNB of the completion of receiving the deactivation information of the SLRPs in the SUL. The transmission UE and the reception UE may notify the completion of reception via the RRC signaling. Upon receipt of the deactivation information of the SLRPs in the SUL, the reception UE finishes searching for the PSCCH in the SLRPs in the SUL.

This enables the configuration of the SUL in the SL, and activation or deactivation of the use of the SUL. Thus, the reception UE has only to search for the SLRPs in the SL SUL from receipt of the activation information of the SL SUL until receipt of the deactivation information of the SL SUL. This reduces the power consumption in the UE.

In the example of FIGS. 39 and 40, neither the transmission UE nor the reception UE terminates the SL communication in the non-SUL, even after receiving the activation of the SLRPs in the SUL. The transmission UE and the reception UE may perform the SL communication in both of the non-SUL and the SUL. Furthermore, activation/deactivation information indicating the use of the non-SUL in the SL may be provided for the non-SUL. Application of the same method as that for notifying the activation/deactivation information in the SUL enables activation or deactivation of the use of the non-SUL in the SL.

What is disclosed in Step ST5710 is that the reception UE measures the SL communication in the non-SUL and transmits the measurement result to the transmission UE. Furthermore, what is disclosed in Step ST5720 is that the reception UE measures the SL communication in the SUL and transmits the measurement result to the transmission UE. The measurement need not be limited to one of the non-SUL and the SUL. The reception UE may perform the measurement in both of the non-SUL and the SUL. The reception UE should transmit the measurement results in the non-SUL and the SUL, in the UL where the SL communication is performed with the transmission UE.

The gNB may determine whether to perform the SL communication in the non-SUL or the SUL, using the measurement results in the non-SUL and the SUL obtained by the transmission UE or the reception UE. For example, the gNB may determine to perform the SL communication in the non-SUL when the SL communication quality in the non-SUL is better than that in the SUL, and determine to perform the SL communication in the SUL when the SL communication quality in the SUL is better than that in the non-SUL. This enables the SL communication with better communication quality.

Upon receipt of the activation of the SLRPs in the SUL on the use of the non-SUL in the SL, the transmission UE and the reception UE may terminate the transmission and the reception in the non-SUL. Furthermore, upon receipt of the deactivation of the SLRPs in the SUL, the transmission UE and the reception UE may start the transmission and the reception in the non-SUL. This enables the SL communication using one UL out of the non-SUL and the SUL. The UE need not perform the SL communication using both of the non-SUL and the SUL. The reception UE has only to search for the PSCCH in one of the non-SUL and the SUL. This can reduce the power consumption in the reception UE.

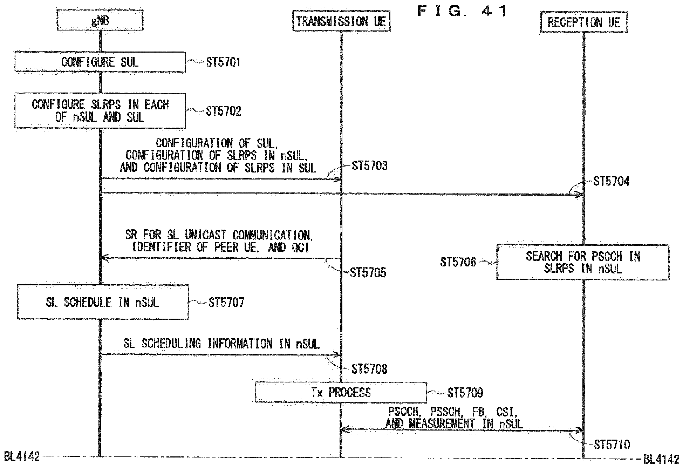

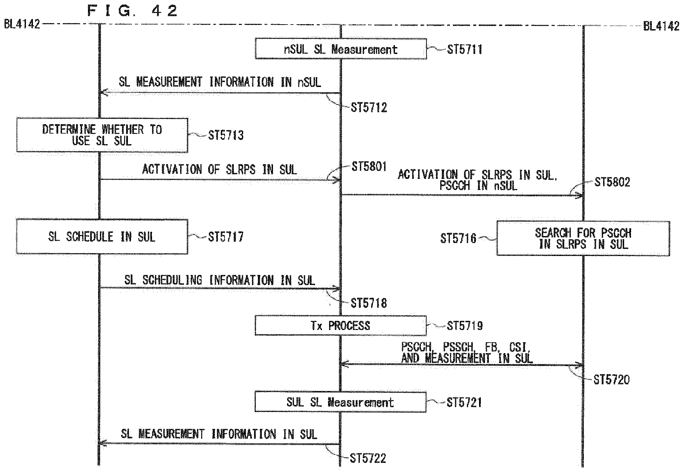

FIGS. 41 and 42 illustrate an example sequence for performing the SL communication in the SL SUL. FIGS. 41 and 42 are connected across a location of a border BL4142. In FIGS. 41 and 42, the same step numbers are applied to the steps common to those in FIGS. 39 and 40, and the common description thereof is omitted. The example of FIGS. 41 and 42 differs from that of FIGS. 39 and 40 in the method for notifying the activation information of the SLRPs in the SUL. In the example of FIGS. 41 and 42, the gNB transmits, to the transmission UE, the activation information of the SLRPs in the SUL in Step ST5801. The gNB includes, in the DCI, the activation information of the SLRPs in the SUL, and notifies the information in the PDCCH. Upon receipt of this activation information of the SLRPs in the SUL, the transmission UE transmits the activation information of the SLRPs in the SUL to the reception UE in Step ST5802. The transmission UE includes, in the SCI, the activation information of the SLRPs, and notifies the information in the PSCCH to be transmitted in the non-SUL.

Since the reception UE receives the PSCCH from the transmission UE in the non-SUL, the reception UE can receive the activation information of the SLRPs in the SUL which is included in the PSCCH. Upon receipt of the activation information of the SLRPs in the SUL, the reception UE can start searching for the PSCCH in the SLRPs in the SUL in Step ST5716.

This can expedite the activation/deactivation of the SL SUL. The dynamic SL communication in the SL SUL is possible. This further reduces the power consumption in the UE.

In the example of FIGS. 41 and 42, the transmission UE notifies the reception UE of whether to activate/deactivate the SL SUL. As another example, the gNB may include, in the DCI, the activation/deactivation information of the SLRPs, and notify the reception UE of the information in the PDCCH. This can produce the same advantages as previously described.

In the example of FIGS. 39 and 40 and the example of FIGS. 41 and 42, the transmission UE performs the scheduling for the reception UE using the PSCCH in the SUL, in the SL communication in the SUL. Another example is disclosed.

In the SL communication, the transmission UE may perform the scheduling for the reception UE in the SUL, using the PSCCH of the non-SUL. In the SL communication, the transmission UE may schedule, for the reception UE, the PSSCH in the SUL using the PSCCH in the non-SUL. The reception UE receives the PSCCH in the non-SUL. When the PSSCH in the SUL is scheduled, the reception UE receives the PSSCH in the SUL according to the schedule.

Information indicating in which one of the non-SUL and the SUL the scheduling is performed may be provided. When the SL communication is performed in one or more non-SULs and one or more SULs, information indicating in which one of the non-SULs and the SULs the scheduling is performed may be provided. Alternatively, information indicating that the scheduling is performed in the SUL may be provided. The information may be included in the SCI. The information may be included in the SCI, and mapped to the PSCCH.

When the numerologies of the non-SUL and the SUL are different, conversion using a rate of a symbol duration or the SCS in each of the numerologies may be performed for deriving the scheduling information in the SUL from the scheduling information in the non-SUL.

This enables the transmission UE to transmit the PSCCH only in the non-SUL. Thus, the process of transmitting the PSCCH can be simplified. Furthermore, the reception UE has only to search for and receive the PSCCH only in the non-SUL. This can simplify the process of receiving the PSCCH by the reception UE, and reduce the power consumption.

The information indicating in which one of the non-SUL and the SUL the scheduling is performed may be used together with the activation/deactivation information of the SL SUL. The transmission UE includes, in the SCI, the activation information of the SL SUL and the scheduling information of the PSSCH in the SUL, and notifies the reception UE of the information in the PSCCH in the non-SUL. Upon receipt of the PSCCH in the non-SUL, the reception UE can recognize that the SL SUL has been activated and the PSSCH is scheduled in the SUL. The reception UE can receive the PSSCH in the SUL earlier.

The transmission UE includes, in the SCI, the deactivation information of the SL SUL and the scheduling information of the PSSCH in the non-SUL, and notifies the reception UE of the information in the PSCCH in the non-SUL. Alternatively, the transmission UE does not notify the information in the presence of information indicating that the scheduling is performed in the SUL. Upon receipt of the PSCCH in the non-SUL, the reception UE can recognize that the SL SUL has been deactivated and the PSSCH is scheduled in the non-SUL. The reception UE can receive the PSSCH in the non-SUL earlier.

The information indicating in which one of the non-SUL and the SUL the scheduling is performed may indicate whether to activate/deactivate the SL SUL. When the information indicates the scheduling in the SUL, the SUL may be activated. Alternatively, when the information indicates the scheduling in the non-SUL, the SUL may be deactivated. Transmitting and receiving, for each schedule, the information indicating in which one of the non-SUL and the SUL the scheduling is performed enable the activation/deactivation of the SL SUL.

What is disclosed is that the transmission UE performs the scheduling for the reception UE in the SUL, using the PSCCH in the non-SUL in the SL communication. Conversely, the transmission UE may perform the scheduling for the reception UE in the non-SUL, using the PSCCH in the SUL. The aforementioned methods should be appropriately applied.

One of the non-SUL and the SUL may be configured as a main link in the SL communication, and the transmission UE and the reception UE may transmit and receive the PSCCH for the SL communication in the main link. The main link may be configured simultaneously when the SL SUL is configured. Alternatively, the main link may be configured simultaneously when the activation/deactivation of the SL SUL is configured.

Consequently, the transmission UE has only to transmit the PSCCH in one of the non-SUL and the SUL. Thus, the transmission process can be simplified. Furthermore, the reception UE has only to search for and receive the PSCCH only in the non-SUL. This can simplify the process of receiving the PSCCH by the reception UE, and reduce the power consumption. Furthermore, the main link can be changed according to, for example, the communication quality, the communication range, or the communication load. Thus, the communication quality and the use efficiency of the resources can be increased. Moreover, reduction in the collision in the use resources with other UEs can reduce the latency in the SL communication.

Switching between the non-SUL and the SUL in the UL in the Uu and switching between the non-SUL and the SUL in the SL may be performed in a coordinated manner. For example, when the gNB configures the SUL in the UL in the Uu, the transmission UE configures the SL SUL in the SL communication. For example, when the frequency band of the SUL in the UL in the Uu and the frequency band of the SUL in the SL are configured the same, whether it is better to use the frequency band can be determined in the UL in the Uu.

What is disclosed in the example of FIGS. 39 and 40 and the example of FIGS. 41 and 42 is transmission of the HARQ feedback in the SUL in response to transmission of data in the SUL. When one slot includes a symbol from the transmission UE to the reception UE and a symbol from the reception UE to the transmission UE, the HARQ feedback should be transmitted in the symbol from the reception UE to the transmission UE with the resources reserved in the SUL for the SL communication. The transmission UE receives, from the reception UE in the SUL, the HARQ feedback on the transmission of data in the SUL.

The scheduling information for transmitting the HARQ feedback by the reception UE may be included in the SCI, and mapped to the PSCCH. For example, the scheduling information may be a time interval from transmission of the PSCCH to transmission of the HARQ feedback. Examples of the time unit may include slot, mini-slot, subframe, symbol, and TTI.

Transmission of the PSSCH and the HARQ feedback in the same SUL can facilitate the scheduling of the HARQ feedback on the PSSCH, particularly, the scheduling of the time domain. This can facilitate the scheduling control on the transmission UE, and facilitate the processes for the reception UE from the PSSCH to the HARQ feedback.

As another example of the method for transmitting the HARQ feedback, the HARQ feedback on the transmission of data in the SUL may be transmitted in the non-SUL. The HARQ feedback should be transmitted in the symbol from the reception UE to the transmission UE with the resources reserved in the non-SUL for the SL communication. The transmission UE receives, from the reception UE in the non-SUL, the HARQ feedback on the transmission of data in the SUL.

Consequently, the transmission UE and the reception UE can transmit and receive a control channel in the non-SUL. The transmission UE and the reception UE can transmit and receive only data in the SUL. The data can be offloaded to the SUL, and the communication load in the non-SUL can be reduced.

As another example, the HARQ feedback on the transmission of data in the non-SUL may be transmitted in the SUL. This can produce the same advantages as previously described.

In which one of the non-SUL or the SUL the HARQ feedback is transmitted may be configurable. Information indicating in which one of the non-SUL or the SUL the HARQ feedback is transmitted may be provided. The transmission UE may include the information in the SCI, map the information to the PSCCH, and notify the information to the reception UE. The transmission UE may notify the information together with the scheduling information of the PSSCH. Furthermore, the transmission UE may include the information in the scheduling information for transmitting the HARQ feedback.

Since the link for transmitting the HARQ feedback can be changed according to, for example, the communication quality, the communication range, or the communication load, the communication quality and the use efficiency of the resources can be increased. Moreover, reduction in the collision in the use resources with other UEs can reduce the latency in the SL communication.

As a method for notifying the information indicating in which one of the non-SUL or the SUL the HARQ feedback is transmitted, the transmission UE may notify the reception UE via the PC5 control signaling. The transmission UE may give the notification via the RRC signaling. Alternatively, the transmission UE may give the notification via the MAC signaling. These can reduce the reception error rate.

The gNB may determine in which one of the non-SUL or the SUL the HARQ feedback is transmitted. The gNB includes the information in the DCI, and notifies the transmission UE of the information in the PDCCH. Alternatively, the gNB may notify the information via the RRC signaling or the MAC signaling. This can reduce the reception error rate. Upon receipt of the information, the transmission UE should notify the reception UE in the SL communication of the information in the aforementioned methods.

The gNB may notify the reception UE of the information. The gNB should give the notification in the aforementioned methods.

The gNB notifies the transmission UE of the information indicating in which one of the non-SUL or the SUL the HARQ feedback is transmitted, so that reduction in the collision in the use resources with other UEs can reduce the latency in the SL communication.

What is disclosed in the example of FIGS. 39 and 40 and the example of FIGS. 41 and 42 is that the gNB performs the SL scheduling in the SUL. Another example is disclosed. The transmission UE in the SL communication may perform the SL scheduling in the SUL. The transmission UE should select the resources for the SL communication from the SLRPs in the SUL. The transmission UE senses the available resources from the SLRPs in the SUL, and selects and reserves the resources for the SL communication from the available resources.

When the SLRPs are configured in the SUL or the SLRPs in the SUL are activated in the aforementioned methods, the reception UE searches for the PSCCH in the SLRPs in the SUL. Consequently, the reception UE can receive the PSCCH from the transmission UE.

Thus, the transmission UE can perform the SL scheduling in the SUL. Since the transmission UE can perform the SL scheduling in the SUL without waiting for the schedule from the gNB, the transmission UE can perform the SL communication earlier. The transmission UE can perform the SL communication with low latency.

The UE that performs the SL communication may transmit a synchronization signal (SS) in the SL SUL. When the SUL in the Uu coincides in carrier frequency with the SL SUL, the UE that performs the SL communication should receive the SS from the gNB to establish synchronization. When the UE that performs the SL communication is outside the coverage of the gNB, the UE that performs the SL communication should receive the SS from the UE that transmits the SS in the close SL SUL to establish synchronization. The UE that performs the SL communication should determine whether to be located inside or outside the coverage of the gNB or whether the UE that transmits the SS is close by, using the received power or the reception quality.

A predetermined threshold of the received power or the reception quality may be provided for making the determination. For example, when the UE that performs the SL communication receives the received power higher than or equal to the predetermined threshold from the gNB or the UE that transmits the SS, the UE synchronizes with the gNB or the UE that transmits the SS. Consequently, the frame timings in the non-SUL and the SUL need not be synchronized. Thus, the synchronization in the SUL is possible.

The method for configuring the SUL as disclosed in the seventh embodiment enables the use of the SUL in the SL communication. Even when the communication quality of the SL communication in the non-SUL deteriorates, the use of the SUL can increase the communication quality.

### The Eighth Embodiment

In the communication in the Uu in NR, a Radio Link Failure (RLF) process is defined (Non-Patent Document 16 (TS38.300)). The RLF process is performed when the UE is out of synchronization with the gNB for the communication in the Uu. The UE declares the RLF when the UE cannot resynchronize with the gNB. The UE reselect a cell, and performs the RRC reconfiguration (RRC_re-establishment). The UE transitions to RRC_IDLE when the UE cannot perform the RRC reconfiguration.

Support of unicasts and groupcasts in the SL communication in NR has been studied. Thus, a processing method on the RLF in the SL communication has been sought. However, the SL communication is not communication between the UE and the gNB, but communication between two UEs. Thus, the conventional RLF process for the RLF in the communication between the UE and the gNB is not applicable without any ingenuity.

There are some questions on the processing methods when the transmission UE and the reception UE cannot perform the SL communication. Examples of the questions include what state is determined as a communication failure or what processing method is used when it is determined that the communication has failed. If these methods are unknown, the transmission UE or the reception UE cannot perform any process or any coordination process. Thus, the normal communication cannot be performed. The eighth embodiment discloses a method for solving such problems.

A method for determining whether the UE is in a synchronized state in the unicast or groupcast communication is disclosed. The reception UE determines whether its own UE is in a synchronized state. Not the PDCCH received from the gNB but the PSCCH is used for determining whether the reception UE is in a synchronized state. When the reception UE can receive the PSCCH transmitted from the transmission UE continuously a predetermined number of times, the reception UE should determine that its own UE is in a synchronized state (In-Sync).

The reception UE may determine that its own UE is in a synchronized state when the reception UE can receive the PSCCH continuously for a predetermined period. The reception UE may determine that its own UE is in a synchronized state when the reception UE can receive the PSCCH continuously a predetermined number of times within a predetermined period.

When the reception UE cannot receive the PSCCH transmitted from the transmission UE continuously a predetermined number of times, the reception UE should determine that its own UE is out of synchronization (Out-of-Sync). The reception UE may determine that its own UE is out of synchronization when the reception UE cannot receive the PSCCH transmitted from the transmission UE continuously for a predetermined period. The reception UE may determine that its own UE is out of synchronization when the reception UE cannot receive the PSCCH transmitted from the transmission UE continuously a predetermined number of times within a predetermined period.

The gNB may notify the UE that performs the SL communication of information including the predetermined number of times and the predetermined period to be used for determining whether its own UE is in a synchronized state. The gNB may include the information in the broadcast information, and broadcast the information. The gNB can determine a predetermined value for each cell. Alternatively, the gNB may dedicatedly notify each UE of the information via the RRC signaling. Alternatively, the information may be statically predetermined, for example, in a standard. Alternatively, the information may be preconfigured in the UE in the SL communication.

The information including the predetermined number of times and the predetermined period may be configured for each service. The information may be configured for each QoS of the service. For example, the predetermined value may be determined, for example, according to the latency required for each service. The aforementioned methods should be applied to the notification method from the gNB to the UE.

Another method is disclosed. A synchronization signal (SS) in the SL (hereinafter referred to as an SLSS) may be used in the method for determining whether the UE is in a synchronized state in the unicast or groupcast communication. The reception UE determines whether its own UE is in a synchronized state, using the SLSS to be transmitted from the UE with which the reception UE synchronizes in the SL.

When the reception UE can receive, continuously a predetermined number of times, the SLSS transmitted from the UE with which the reception UE synchronizes in the SL, the reception UE should determine that its own UE is in a synchronized state. When the reception UE cannot receive, continuously a predetermined number of times, the SLSS transmitted from the UE with which the reception UE synchronizes in the SL, the reception UE should determine that its own UE is out of synchronization.

Similarly to the synchronization using the PSCCH, not a predetermined number of times but a predetermined period or a predetermined number of times within a predetermined period may be used.

In the SL, the UE with which the reception UE synchronizes is sometimes different from the transmission UE. As described above, the reception UE in the SL communication can clearly determine whether to be in a synchronized state, by determining which one of the PSCCH and the SLSS is used for determining whether its own UE is in a synchronized state. Consequently, reception errors can be reduced.

The method using the PSCCH and the method using the SLSS may be combined as the method for determining whether the UE is in a synchronized state. For example, the UE may determine that its own UE is out of synchronization when the UE cannot receive a set of the PSCCH and the SLSS continuously a predetermined number of times within a predetermined period. Otherwise, the UE may determine that its own UE is in a synchronized state. This enables the UE to determine earlier that its own UE is out of synchronization. The process can transition to the next process earlier.

Furthermore, the UE may determine that its own UE is out of synchronization in the unicast or groupcast communication when determining, using both of the PSCCH and the SLSS, that its own UE is out of synchronization. Otherwise, the UE may determine that its own UE is in a synchronized state. The UE determines that its own UE is in a synchronized state when determining, using only one of the PSCCH and the SLSS, that its own UE is out of synchronization. This can reduce situations where the UE transitions to the out-of-synchronization state. Thus, the communication state can be maintained as much as possible.

The processes of the UE which has determined that its own UE is out of synchronization are disclosed. The UE performs resynchronization. When determining that the UE is out of synchronization using the PSCCH, the UE receives the PSCCH from the transmission UE and performs resynchronization. This enables the reception UE to receive the PSCCH and the PSSCH transmitted from the transmission UE. The unicast communication in the SL becomes possible again.

When determining that the UE is out of synchronization using the SLSS, the UE receives the SLSS and performs resynchronization. The UE may receive the SLSS from a UE with which synchronization has been established the latest. A threshold of, for example, the received power or the reception quality of the SLSS for the resynchronization may be provided, and the synchronization with the UE whose SLSS is higher than or equal to the threshold may be established.

The threshold of the received power or the reception quality of the SLSS for the resynchronization may be identical to that for the synchronization. This can facilitate the control of the synchronization processes. Alternatively, the threshold of the received power or the reception quality of the SLSS for the resynchronization may be different from that for the synchronization. For example, the threshold for the resynchronization is set lower than the threshold for the synchronization. This can facilitate the resynchronization, and shorten the latency until the communication becomes possible again.

The reception UE that has received the SLSS and has established the resynchronization receives the PSCCH from the transmission UE. This enables the reception UE to receive the PSCCH and the PSSCH from the transmission UE. The unicast communication in the SL becomes possible again.

When determining that the reception UE is out of synchronization using the SLSS, the reception UE may still be able to receive the PSCCH from the transmission UE. In such a case, the reception UE that has received the SLSS and has established the resynchronization may continue to receive the PSCCH from the transmission UE. Here, the unicast communication in the SL can be continued.

These resynchronization methods may be appropriately combined for use, according to the method for determining whether the UE is in a synchronized state. This can simplify the processes when the UE is out of synchronization or the resynchronization processes.

When the reception UE cannot establish the resynchronization after being out of synchronization, the SL communication should be terminated. It is determined that the unicast communication or the groupcast communication in the SL has been terminated. The reception UE that has terminated the SL communication performs synchronization processes for the new SL communication, searches for the PSCCH in the SLRPs, receives the PSCCH from the transmission UE, and starts processes for the unicast communication or the groupcast communication. Consequently, even when the reception UE is out of synchronization due to, for example, deterioration of the communication quality in the SL communication, the reception UE can start the new SL communication.

The reception UE that has terminated the SL communication releases the RRC configuration made for communications in the unicast communication or the groupcast communication. Furthermore, the reception UE may release the configuration of each protocol in the SL communication. The reception UE releases the configurations of, for example, the PDCP, the RLC, the MAC, and the PHY in the SL communication. Alternatively, the reception UE discards data buffered in the PDCP, the RLC, the MAC, and the PHY in the SL communication. These can reduce the processing load in the UE and the buffer capacity.

Furthermore, when configuring a bearer in the SL, the reception UE that has terminated the SL communication may release the bearer configuration. The reception UE releases each protocol included in the bearer configured in the SL. This can produce the same advantages as previously described.

The duration from start of the out-of-synchronization state may be managed by a timer. When the UE establishes the resynchronization within the timer since the start of the out-of-synchronization state, the UE returns to the synchronized state and resets the timer. When the UE cannot establish the resynchronization within the timer since the start of the out-of-synchronization state, the UE should terminate the SL communication and reset the timer. This can avoid prolonging a period for performing the resynchronization processes.

When the reception UE cannot establish the resynchronization after being out of synchronization, the reception UE need not release or may hold a part or the entirety of the RRC configuration made for the communications in the unicast communication or the groupcast communication. The reception UE does not release or holds a part or the entirety of the configurations of, for example, the PDCP, the RLC, the MAC, and the PHY in the SL communication. Alternatively, the reception UE does not discard or holds a part or the entirety of the data buffered in the PDCP, the RLC, the MAC, and the PHY in the SL communication.

Furthermore, when the reception UE configures a bearer in the SL and cannot establish the resynchronization after being out of synchronization, the reception UE need not release or may hold a part or the entirety of the bearer configuration.

The transmission UE may hold the part or the entirety of the RRC configuration or the part or the entirety of the bearer configuration which has been made for the communications in the unicast communication or the groupcast communication while the reception UE holds it. The holding duration should be configured in consideration of a timer from start of the out-of-synchronization state to the resynchronization or a timer from when the UE cannot establish the resynchronization to the completion of the synchronization processes for the SL communication, which is described later. When the transmission UE cannot resume the communication with the reception UE even after the holding duration, the transmission UE releases the part or the entirety of the RRC configuration or the part or the entirety of the bearer configuration which has been held. This enables the transmission UE to perform the communication earlier using the held configurations, even when the transmission UE resumes the SL communication.

When the reception UE cannot establish the resynchronization after being out of synchronization, the reception UE performs the synchronization processes for the new SL communication, searches for the PSCCH in the SLRPs, receives the PSCCH from the transmission UE, and starts the processes for the unicast communication or the groupcast communication while holding the part or the entirety of these configurations. This enables the reception UE to perform the communication earlier using the held configurations, even when the reception UE starts the new SL communication.

When the reception UE cannot establish the resynchronization after being out of synchronization, the reception UE performs the synchronization processes for the new SL communication, searches for the PSCCH in the SLRPs, receives the PSCCH from the transmission UE, and starts the processes for the unicast communication or the groupcast communication while holding the part or the entirety of these configurations. This enables the reception UE to perform the communication earlier using the held configurations, even when the reception UE starts the new SL communication.

When the reception UE cannot establish the resynchronization after being out of synchronization, the reception UE may further perform the resynchronization processes while holding the part or the entirety of these configurations. Such resynchronization processes may be identical to those to be performed after the reception UE is out of synchronization. This enables the reception UE to perform the communication earlier using the held configurations, even when the reception UE establishes the resynchronization and then resumes the SL communication.

When the UE cannot establish the resynchronization after being out of synchronization, a duration from when the UE cannot establish the resynchronization may be managed by a timer. When the UE completes the synchronization processes for the new SL communication within the timer from when the UE cannot establish the resynchronization, the UE should return to the synchronized state and reset the timer. Alternatively, when the UE receives the PSCCH from the transmission UE and returns to the synchronized state within the timer from when the UE cannot establish the resynchronization, the UE may reset the timer. Alternatively, when the resynchronization processes are successful within the timer from when the UE cannot establish the resynchronization, the UE should return to the synchronized state and reset the timer.

When the UE cannot establish the resynchronization after being out of synchronization and the timer from when the UE cannot establish the resynchronization expires, the SL communication should be terminated. Due to the termination of the SL communication, the UE releases the part or the entirety of the RRC configuration or the part or the entirety of the bearer configuration which has been held. This enables the UE to terminate the SL communication earlier. Moreover, the UE need not hold the part or the entirety of the configurations in the SL communication for a long period of time.

The aforementioned timers, for example, the timer from start of the out-of-synchronization state to the resynchronization or the timer from when the UE cannot establish the resynchronization to the completion of the synchronization processes for the SL communication may be statically predetermined, for example, in a standard. Alternatively, the transmission UE may notify the reception UE of the timers. The transmission UE may give the notification via the RRC signaling. Alternatively, the transmission UE may give the notification in the PSCCH or via the MAC signaling. Alternatively, the gNB may notify the UE of the timers. The method for notifying the SLRPs should be applied to the notification method. Alternatively, the timers may be preconfigured in the UE. This enables the reception UE to obtain configurations of the timers.

These timers may be provided separately from a timer to be used for the RLF process in the Uu. The communication in the Uu differs from the SL communication in, for example, details of a service, the use state, and the radio propagation environment. Values accommodating such a difference can be configured. For example, the timer in the SL communication is increased more than the timer to be used for the RLF process in the Uu. This can avoid early termination of the SL communication. The latency caused by the processes including searching for, selecting, and reserving resources for restarting the SL communication can be reduced.

The transmission UE may determine whether to be in a synchronized state with the peer UE in the unicast communication or the groupcast communication. The transmission UE may determine whether to be in a synchronized state simultaneously when the reception UE determines whether to be in a synchronized state. The transmission UE may determine whether to be in a synchronized state, using the signal or channel transmitted from the reception UE. Examples of the signal or channel transmitted from the reception UE include the SRS, the HARQ feedback, and the CSI report. Alternatively, the PSFCH may be used.

The method for the reception UE to determine whether to be in a synchronized state may be appropriately applied to the method for the transmission UE to determine whether to be in a synchronized state.

Processes when the transmission UE is out of synchronization are disclosed. The transmission UE reselects resources. As another method, the transmission UE may change the SLRPs. The transmission UE may change the SLRPs and reselect resources. Consequently, the transmission UE can start the SL communication using the resources with better communication quality.

After a lapse of a predetermined period during which the transmission UE is out of synchronization, the SL communication may be terminated. During the predetermined period, the transmission UE may hold the part or the entirety of the RRC configuration or the part or the entirety of the bearer configuration which has been made for the communications in the unicast communication or the groupcast communication. When the SL communication is terminated, the transmission UE may release the part or the entirety of the RRC configuration or the part or the entirety of the bearer configuration which has been made for the communications in the unicast communication or the groupcast communication.

The transmission UE restarts the unicast communication or the groupcast communication when needing to transmit data in the unicast communication or the groupcast communication. Consequently, the transmission UE can perform processes when the transmission UE determines whether to be in a synchronized state and the SL communication between the transmission UE and the reception UE is impossible.

During the unicast communication or the groupcast communication in the SL, the transmission UE is sometimes out of synchronization with the UE with which the transmission UE synchronizes. Here, how to perform the processes for the unicast communication or the groupcast communication is a problem. In such a case, the aforementioned methods disclosed on the reception UE should be applied for the transmission UE to determine whether to be in a synchronized state with the UE with which the transmission UE synchronizes, and to perform processes when the transmission UE is out of synchronization, processes from start of the out-of-synchronization state to the resynchronization, and processes when the transmission UE cannot establish the resynchronization. This can produce the same advantages as previously described.

In the SL communication, the UE which receives the SLSS to establish synchronization may be different from the peer UE in the unicast communication or the groupcast communication. The UE which receives the SLSS to establish synchronization and the peer UE in the unicast communication or the groupcast communication may be selected irrelevantly. For example, the UE can synchronize with the UE the most suitable for establishing the synchronization, such as the UE with the highest received power. However, the reception UE needs to receive a signal from the UE with which the reception UE synchronizes and a signal from the transmission UE. This complicates the reception processes in the reception UE, and increases the power consumption. A method for solving such a problem is disclosed.

In the unicast communication or the groupcast communication, the reception UE regards the transmission UE as a UE for synchronization. The reception UE may place the transmission UE at the highest priority as the UE for synchronization.

The reception UE receives the SLSS of the transmission UE. Furthermore, the reception UE may receive the PSBCH. Upon receipt of the SLSS and the PSBCH, the reception UE may perform the synchronization processes. After synchronizing with the transmission UE, the reception UE may receive the PSCCH from the transmission UE. Alternatively, after synchronizing with the transmission UE, the reception UE may establish the RRC configuration with the transmission UE for the unicast communication or the groupcast communication in the SL. Consequently, the UE with which the synchronization is established can be identical to the UE that performs the SL communication. Thus, the reception UE can easily perform the reception processes. The power consumption can be reduced.

The transmission UE may transmit the SLSS or the SLSS and the PBCH when starting the unicast communication or the groupcast communication. Upon receipt of the SLSS, the reception UE should synchronize with the transmission UE. Upon receipt of the SLSS and the PBCH, the reception UE may perform the synchronization processes. As such, the reception UE can synchronize with the transmission UE as a process of the unicast communication or the groupcast communication. Consequently, the UE with which the synchronization is established can be identical to the UE that performs the SL communication. The reception UE can easily perform the reception processes. The power consumption can be reduced.

When the UE with which the reception UE synchronizes is a UE different from the transmission UE and the unicast communication or the groupcast communication is performed, the reception UE may change the UE with which the reception UE synchronizes to the transmission UE. When detecting the transmission UE, the reception UE may change the UE with which the reception UE synchronizes to the transmission UE. The reception UE may detect the transmission UE, using the PSCCH from the transmission UE, or the SLSS and the PSBCH. Consequently, the UE with which the synchronization is established can be identical to the UE that performs the SL communication.

Even when the transmission UE and the reception UE cannot perform the unicast communication or the groupcast communication in the SL, the method as disclosed in the eighth embodiment enables the UEs to normally terminate or resume the communication.

### The Ninth Embodiment

A new RRC_INACTIVE state is provided in NR (Non-Patent Document 16 (TS38.300)). How to configure the SLRPs for the SL communication when the UE is in RRC_INACTIVE state is unknown. None discloses this. Without the SLRP configuration, the UE in RRC_INACTIVE state cannot perform the SL communication. Here, a method for solving such a problem is disclosed.

An SLRP to be used in RRC_INACTIVE state is provided. The gNB may notify the UE of the SLRP configuration to be used in RRC_INACTIVE state. The aforementioned method for notifying the SLRP configuration should be applied to the notification. Alternatively, the SLRP configuration to be used in RRC_INACTIVE state may be preconfigured in the UE. The SLRP configuration to be used in RRC_INACTIVE state may be notified or configured together with other configurations of the SLRPs.

This enables the UE in RRC_INACTIVE state newly provided to use the SLRP and perform the SL communication with the resources in the SLRP.

However, separately providing the SLRP to be used in RRC_INACTIVE state decreases the use efficiency of the resources. A method for solving such a problem is disclosed.

The UE in RRC_INACTIVE state uses the SLRP configuration broadcast from the gNB in the SIB for the SL communication. Through the movement between cells, the UE receives the SIB including the SLRP configuration of the target cell, and uses the SLRP configuration. Consequently, a separate SLRP to be used in RRC_INACTIVE state is unnecessary. Moreover, decrease in the use efficiency of the resources can be avoided.

Another method is disclosed. The UE in RRC_INACTIVE may use the SLRP configuration notified from the gNB via the RRC signaling. The SLRP configuration for each UE may be provided. The gNB configures the SLRP configuration for each UE, and notifies the UE of the configuration via the RRC signaling. The gNB gives the notification when the UE is in RRC_CONNECTED state.

Even after transitioning to the RRC_INACTIVE state, the UE holds the SLRP configuration received from the gNB via the RRC signaling during the RRC_CONNECTED state. The UE does not release the SLRP configuration even after transitioning to the RRC_INACTIVE state. This enables the UE in RRC_INACTIVE to use the SLRP configuration notified from the gNB via the RRC signaling.

The SLRP configuration for each UE may be enabled within the RNA. The UE in RRC_INACTIVE need not transition to the RRC_CONNECTED state during the movement between the cells within the RNA. By enabling the SLRP configuration within the RNA, the UE in RRC_INACTIVE state need not transition to the RRC_CONNECTED state to receive the SLRP configuration during the movement between the cells. The complexity in the processes of the UE can be avoided.

The gNB may notify the adjacent gNB of the SLRP configuration. The gNB may notify the SLRP configuration for each cell. For example, the SLRP is adjustable between the gNBs. Furthermore, the gNB may notify the SLRP configuration notified via the RRC signaling. The gNB may include the SLRP configuration in the UE context information. The gNB may notify the adjacent gNB of the UE context information including the SLRP configuration. This enables the gNBs to share the SLRP configuration notified via the RRC signaling.

The gNB may request, from the adjacent gNB, the SLRP configuration for each cell and/or the SLRP configuration notified via the RRC signaling. Furthermore, the gNB may request the UE context information including the SLRP configuration. In response to these requests, the adjacent gNB notifies the gNB that has made the request of the SLRP configuration. This enables, for example, the gNB to request the SLRP configuration of the adjacent gNB to determine the SLRP configuration.

The adjacent gNB that notifies the SLRP configuration may be a gNB within the same RNA. Furthermore, the adjacent gNB that requests the SLRP configuration may be a gNB within the same RNA. This enables the gNBs within the same RNA to share the SLRP configuration notified via the RRC signaling.

Such a method saves the UE from receiving, each time the UE changes the cell, the SIB including the SLRP configuration at the changed cell. Since the gNB can configure the SLRP configuration dedicatedly for each UE, the same SLRP configuration can be used within the RNA.

Another method is disclosed. The SLRP configuration for RNA may be provided. The SLRP configuration for RNA may be made for each RNA. The SLRP configuration for RNA is for an SLRP available within the RNA. The SLRP configuration for RNA may be predetermined. The SLRP configuration for RNA may be preconfigured in the UE. The UE in RRC_INACTIVE uses the SLRP configuration for RNA within the RNA.

A core network may determine the SLRP configuration for RNA, and notify it to each gNB within the RNA. One gNB may determine the SLRP for RNA, and notify it to each gNB within the RNA. The gNB should notify the UE in RRC_CONNECTED of the SLRP configuration for RNA via the RRC signaling. The SLRP configuration for RNA may be different from that notified when the UE is in RRC_CONNECTED state. Alternatively, a part or the entirety of the SLRP configuration may be identical to that notified when the UE is in RRC_CONNECTED state. The UE in RRC_INACTIVE uses the SLRP configuration for RNA within the RNA.

The gNB may include the SLRP configuration for RNA in the SIB, and broadcast the configuration to the UE. The UE in RRC_INACTIVE uses the SLRP configuration for RNA within the RNA. Making the SLRP configuration for RNA saves the UE from receiving the SIB including the SLRP configuration for RNA during the movement between the cells within the RNA. This can simplify the processes of the UE during the movement between the cells.

This enables, for example, not the SLRP configuration dedicated to each UE but the SLRP configuration for each RNA. Since there is no need to prepare many SLRP configurations, the use efficiency of the resources can be increased.

In LTE, an Exceptional Pool of one SLRP (hereinafter referred to as an SLEP) has been introduced. The SLEP is used during the RLF, during transition from RRC_ IDLE to RRC_CONNECTED state, during change in a resource pool, during the HO, and during reselection of a cell. Whether the SLEP is supported in SL in NR has been proposed in 3GPP (Non-Patent Document 31 (R2-1815441)). However, none discusses or discloses any methods for configuring and using the SLEP in SL in NR.

As previously described, the new RRC_INACTIVE state is provided in NR. The methods for configuring and using the SLEP relevant to the RRC_INACTIVE state which is not provided in LTE but newly provided in NR are unknown. Here, a method for solving such a problem is disclosed.

When the SLEP is used for the SL communication, the UE randomly selects resources for the SL communication from the SLEP. The resources need not be selected through sensing the resources. The UE uses the SLEP while transitioning from RRC_INACTIVE state to RRC_CONNECTED state. The UE performs a resume process to transition from RRC_INACTIVE state to RRC_CONNECTED state. The UE may use the SLEP during the resume process. Consequently, the UE can use the SLEP before receiving the SLRP configuration via the RRC signaling in transitioning to RRC_CONNECTED, or before selecting the resources from the SLRP configuration.

Another method is disclosed. The UE uses the SLRP notified in RRC_CONNECTED state, while transitioning from RRC_INACTIVE state to RRC_CONNECTED state. The resources selected from the SLRP configuration before the transition may be used during the transition. The UE should hold the SLRP notified in RRC_CONNECTED state, after transitioning from RRC_CONNECTED state to RRC_INACTIVE state. This enables the UE to use the SLRP.

This saves the UE from receiving the SLRP configuration via the RRC signaling in transitioning to RRC_CONNECTED. Furthermore, the gNB need not transmit the SLRP configuration to the UE via the RRC signaling, each time the UE transitions from RRC_INACTIVE state to RRC_CONNECTED state. The gNB has only to notify the SLRP configuration when necessary, for example, when the gNB desires to change the SLRP configuration. This can reduce the signaling between the UE and the gNB.

When the transition from RRC Idle state to RRC_INACTIVE state is provided, the UE may use the SLEP during the transition. For example, when the SLRP for RNA is broadcast in the SIB, the UE can use the SLEP until receiving the SIB or in the SL communication until selecting the resources from the SLRP configuration broadcast in the SIB.

The UE can perform, using the SLEP while transitioning to a new state, the SL communication earlier during the transition.

The UE in RRC_INACTIVE state reselects a cell during the movement between the cells. The UE in RRC_INACTIVE state uses the SLEP in reselecting the cell. When using, in RRC_INACTIVE state, the SLRP broadcast in the SIB, the UE may use the SLEP in reselecting the cell. When using, in RRC_INACTIVE state, the SLRP notified via the RRC signaling, the UE may use the SLEP in reselecting the cell. When using, in RRC_INACTIVE state, the SLRP for RNA, the UE may use the SLRP for RNA in reselecting the cell within the RNA.

Consequently, the UE in RRC_INACTIVE state in reselecting the cell can perform the SL communication earlier.

The UE in RRC_INACTIVE state may use the SLEP in reselecting a cell outside the RNA. When the UE in RRC_INACTIVE state moves outside the RNA, the UE starts an RNA update procedure. The UE may use the SLEP during the RNA update procedure. The UE may use the SLEP until receiving the SLRP broadcast in the SIB or selecting resources from the SLRP configuration, in the target cell outside the RNA.

The UE may use the SLEP until obtaining the SLRP for each UE via the RRC signaling or selecting resources from the SLRP, in the target cell outside the RNA. The UE may use the SLEP until obtaining the SLRP for each RNA via the RRC signaling or selecting resources from the SLRP, in the target cell outside the RNA. The gNB may notify the UE of the SLRP configuration for each UE or for each RNA in the target cell outside the RNA, using the RRCRelease with suspend indication in the RNA update procedure.

The UE in RRC _INACTIVE state can perform the SL communication earlier even when moving outside the RNA.

While the UE is moving between RNAs, the gNB in the target RNA may request the SLRP configuration for each UE from the gNB in the source RNA. The request should include an identifier of the target UE. The gNB in the target RNA may make the request upon receipt of the RNA update procedure. Upon receipt of the request, the gNB in the source RNA notifies the gNB that has made the request of the SLRP configuration for each UE included in the request. This enables, for example, the gNB in the target RNA to configure the SLRP in consideration of the SLRP configuration used by the gNB in the source RNA.

The gNB may make the request via the Xn signaling. The UE context may include the SLRP configuration for each UE. The gNB in the target RNA may request the UE context from the gNB in the source RNA. Upon receipt of the request, the gNB in the source RNA notifies the gNB that has made the request of the UE context of the UE included in the request. The Retrieve UE Context Request and the Retrieve UE Context Response may be used for requesting and notifying the UE context including the SLRP configuration. The use of the existing messages can simplify the signaling processing between the gNBs.

The same method may be applied to the SLRP configuration for each RNA. While the UE is moving between the RNAs, the gNB in the target RNA may request the SLRP configuration for each RNA from the gNB in the source RNA. The gNB in the target RNA may make the request upon receipt of the RNA update procedure. Upon receipt of the request, the gNB in the source RNA notifies the gNB that has made the request of the SLRP configuration for each RNA. The gNB may make the request via the Xn signaling. A new message may be provided. This enables, for example, the gNB in the target RNA to configure the SLRP in consideration of the SLRP configuration used by the gNB in the source RNA.

The SLEP for LTE should be provided separately from the SLEP for NR. The SLEP configuration for LTE can be made different from the SLEP configuration for NR. The SLEP configuration for NR should be used during handover from an LTE cell to an NR cell. The SLEP configuration for LTE should be used during handover from an NR cell to an LTE cell. During handover between radio access technologies (RATs), the UE should follow the SLEP configuration of a handover target cell. Application of the SLEP configuration of the handover target cell until receiving the SLRP configuration in the handover target cell or selecting resources in the SLRP configuration of the handover target cell enables the UE to perform the SL communication using the SLEP appropriate for a system in the handover target cell.

The same method may be applied to reselection of a cell between the RATs. The SLEP configuration for NR should be used during reselection of a cell from an LTE cell to an NR cell. The SLEP configuration for LTE should be used during reselection of a cell from an NR cell to an LTE cell. During reselection of a cell between the RATs, the UE should follow the SLEP configuration of a reselected cell. Application of the SLEP configuration of the reselected cell until receiving the SLRP configuration in the reselected cell or selecting resources in the SLRP configuration of the reselected cell enables the UE to perform the SL communication using the SLEP appropriate for a system in the reselected cell.

When an LTE base station and an NR base station perform the dual connectivity (DC) for the UE, which one of the SLEP for LTE and the SLEP for NR is used may be configurable. Since the SLEP can be configured according to a coverage or a radio propagation state, the communication quality in the SL communication can be increased.

The SLRP configuration and the SLEP configuration which include the RRC _INACTIVE state newly provided in NR can be made and used according to the method as disclosed in the ninth embodiment. Furthermore, the SLRP configuration and the SLEP configuration can be made and used even in the movement processes between the RATs such as the handover or reselection of a cell between LTE and NR, or in the DC between different RATs. This enables the SL communication in a wide variety of situations.

### The Tenth Embodiment

As described above, support of the TSN has been studied in 3GPP. The UEs that perform the SL communication sometimes need to coincide in time with each other. This occurs, for example, when automated driving control is performed on the in-vehicle UEs that perform the unicast communication in the SL or the in-vehicle UE groups driving in a platoon by synchronizing the clocks. In such a case, the UEs or the UE groups need to perform clock synchronization.

However, the clock synchronization method for the UEs that perform the SL communication is not disclosed or unknown. Thus, the UEs have a problem of failing to perform the SL communication requiring the clock synchronization. This causes a problem of failing to use the SL in the TSN. The tenth embodiment discloses a method for solving such a problem.

The gNB notifies the UEs for the SL communication of clock synchronization information. The information disclosed in the first embodiment should be applied to the clock synchronization information. The gNB includes the clock synchronization information in the SIB to be used for the TSN, and broadcasts the information via the TSN. For example, the SIB 16 is used in LTE. Similarly, the gNB may include the clock synchronization information in the SIB, and broadcast the information in NR. The UEs that perform the SL communication should receive the SIB including the clock synchronization information to obtain the clock synchronization information from the gNB.

All the UEs that perform the SL communication need not receive the SIB to be used for the TSN. When performing a service of the TSN using the SL communication, the UE should receive the SIB to be used for the TSN. In response to a request from the upper layer, the UE that performs the service of the TSN using the SL communication receives the SIB to be used for the TSN to obtain the clock synchronization information.

Consequently, the UEs which are located within the coverage of the gNB supporting the TSN and which perform the SL communication can obtain the clock synchronization information. This enables the control under which the UEs coincide in time with each other.

Another method for the gNB to notify the UEs for the SL communication of the clock synchronization information is disclosed. The gNB includes the clock synchronization information in the SIB to be used for the SL communication, and broadcasts the information via the TSN. For example, the SIB 18 or the SIB21 is used in LTE. Similarly, the gNB may include the clock synchronization information in the SIB, and broadcast the information in NR. The UEs that perform the SL communication should receive the SIB including the clock synchronization information to obtain the clock synchronization information from the gNB.

In response to a request from the upper layer, the UEs that perform the service of the TSN using the SL communication obtain the clock synchronization information included in the SIB to be used for the SL communication. Consequently, the UEs which are located within the coverage of the gNB supporting the TSN and which perform the SL communication can obtain the clock synchronization information. This enables the control under which the UEs coincide in time with each other.

The UEs outside the coverage of the gNB supporting the TSN cannot receive the clock synchronization information held by the gNB. A method for solving such a problem is disclosed. The UE that has the clock synchronization information and performs the SL communication may transmit the clock synchronization information. Examples of the UE that has the clock synchronization information include a UE that receives the clock synchronization information from the gNB supporting the TSN and a UE that receives the clock synchronization information from another UE.

Upon receipt of the clock synchronization information from the gNB, the UE may notify the UE that performs another SL communication of the obtained clock synchronization information via the PC5 signaling. Upon receipt of the clock synchronization information from the gNB, the UE may include the obtained clock synchronization information in the broadcast information for SL and transmit the information. A new physical channel may be provided for transmitting the broadcast information for SL including the clock synchronization information. Alternatively, the PSBCH may be used for transmitting the broadcast information for SL including the clock synchronization information. Application of the PSBCH enables the use of the existing channel, and avoidance of complexity in the control.

The information disclosed in the first embodiment should be applied to the clock synchronization information. For example, information corrected using the time error in the UE, such as the clock precision of the UE, may be used as time error information. This enables not the gNB but the UE to transmit the clock synchronization information in the TSN.

When the UE that performs the SL communication is located within the coverage of the gNB, the UE establishes timing synchronization with the gNB and transmits the SLSS. When the gNB with which the UE establishes timing synchronization is different from the gNB that receives the clock synchronization information, the UE that performs the SL communication should correct information on a predetermined slot, a predetermined subframe, or a predetermined system frame in the clock synchronization information, into information on the slot, subframe, or system frame which has been obtained from the timing synchronization. Consequently, the UE that performs the SL communication can configure and transmit the clock synchronization information using the timing obtained by its own UE through the timing synchronization.

The gNB with which the UE establishes timing synchronization may be the gNB supporting the TSN. For example, when the UE is located within the coverages of both of the gNB supporting the TSN and the gNB that does not support the TSN, the gNB with which the UE establishes timing synchronization may be the gNB supporting the TSN. Even when the received power from the gNB with which the UE establishes timing synchronization is higher than that from the gNB supporting the TSN, the gNB supporting the TSN is selected.

Consequently, the gNB supporting the TSN can be identical to the gNB with which the UE establishes timing synchronization. Since the slot timing, the subframe timing, and the system frame timing in the UE can synchronize with those in the gNB supporting the TSN, the information on the predetermined slot, subframe, or system frame in the clock synchronization information is available. The processes for transmitting the clock synchronization information in the UE can be facilitated.

A predetermined threshold may be provided for the received power or the reception quality from the gNB supporting the TSN so that the UE determines whether to be able to receive the clock synchronization information. For example, when the received power or the reception quality is higher than the predetermined threshold, the UE should determine to be able to receive the clock synchronization information. In other words, the UE is located within the coverage of the gNB supporting the TSN. When the received power or the reception quality from the gNB supporting the TSN is lower than or equal to the predetermined threshold, the UE determines that its own UE is outside the coverage of the gNB supporting the TSN.

When the UE can receive pieces of clock synchronization information from a plurality of gNBs supporting the TSN, the UE may obtain and use the clock synchronization information from the gNB with a higher received power or a higher reception quality. This enables the UE to more reliably obtain the clock synchronization information.

Alternatively, when the UE can receive the pieces of clock synchronization information from the plurality of gNBs supporting the TSN, the UE may obtain and use the clock synchronization information from the gNB with a less time error in the clock synchronization information. Consequently, the information with a less time error can be configured even when its own UE transmits the clock synchronization information. The TSN can be supported with a less time error.

Consequently, when the UE is located within the coverage of the gNB supporting the TSN, the UE can receive the clock synchronization information from the gNB, and appropriately correct the clock synchronization information and transmit the corrected clock synchronization information.

The UE which is located outside the coverage of the gNB supporting the TSN and which performs the SL communication receives a channel including the clock synchronization information transmitted from another UE, and obtains the clock synchronization information.

A predetermined threshold may be provided for the received power or the reception quality from another UE for determining whether to be able to receive the clock synchronization information. For example, when the received power or the reception quality is higher than the predetermined threshold, the UE should determine to be able to receive the clock synchronization information. Otherwise, the UE determines that its own UE cannot receive the clock synchronization information. When the UE cannot receive the clock synchronization information, the UE may try to receive a channel including the clock synchronization information to be transmitted from yet another UE.

When the UE can receive pieces of clock synchronization information from a plurality of UEs each of which transmits the clock synchronization information, the UE may obtain and use the clock synchronization information from the UE with a higher received power or a higher reception quality. This enables the UE to more reliably obtain the clock synchronization information.

Alternatively, when the UE can receive the pieces of clock synchronization information from a plurality of UEs each of which transmits the clock synchronization information, the UE may obtain and use the clock synchronization information from the UE with a less time error in the clock synchronization information. Consequently, the information with a less time error can be configured even when its own UE transmits the clock synchronization information. The TSN can be supported with a less time error.

The UE that has obtained the clock synchronization information from another UE may include the obtained clock synchronization information in the broadcast information for SL and transmit the information. The processes in receiving the clock synchronization information from the gNB should be appropriately applied to this method. This can produce the same advantages as previously described. Consequently, the UE that performs the SL communication can receive and transmit the clock synchronization information.

Thus, even when the UE that performs the SL communication is not located within the coverage of the gNB supporting the TSN, the UE can obtain the clock synchronization information from another UE.

Another method for the UE that performs the SL communication to transmit the clock synchronization information is disclosed. The UE that performs the SL communication may include, in the SCI, the clock synchronization information and transmit the information in the PSCCH. The UE that performs the SL communication receives the PSCCH from the transmission UE to obtain the clock synchronization information. Such use of the PSCCH in receiving data for the SL communication enables the reception UE to obtain the clock synchronization information from the PSCCH necessary for receiving the data. The clock synchronization information can be transmitted and received earlier. Since there is no need to receive the PSBCH or another channel for obtaining the clock synchronization information, the clock synchronization processes in the UE can be simplified.

The clock synchronization information may be included in the SCI1 previously disclosed. The UE may include the clock synchronization information in the SCI1, and notify the information in the PSCCH1. All the UEs for each of which the resource pool has been configured in the SL communication can receive the clock synchronization information.

Alternatively, the clock synchronization information may be included in the SCI2. The UE may include the clock synchronization information in the SCI2, and notify the information in the PSCCH2. The peer UE in the unicast communication or only the UE in a peer UE group in the groupcast communication can receive the information. This is effective when the number of UEs on which the control for synchronizing the clocks is performed through reception of clock synchronization is limited.

Another method for the UE that performs the SL communication to transmit the clock synchronization information is disclosed. The UE that performs the SL communication may transmit the clock synchronization information via the RRC signaling in the SL communication. For example, when the RRC connection is established between the UEs in the unicast communication or the groupcast communication, the UE may transmit the clock synchronization information via the RRC signaling that occurs with the peer UE. The transmission UE in the SL communication includes the clock synchronization information in the RRC signaling and transmits the information to the reception UE. The reception UE obtains the clock synchronization information included in the RRC signaling from the transmission UE.

Consequently, when the RRC connection is established, the control for synchronizing the clocks of the UEs that perform the unicast communication or the groupcast communication becomes possible. Since the RRC signaling is used, the amount of information on the clock synchronization can be increased.

Another method for the UE that performs the SL communication to transmit the clock synchronization information is disclosed. The UE may transmit the clock synchronization information via the MAC signaling in the SL communication. For example, the UE may transmit the clock synchronization information to the peer UE via the MAC signaling in the unicast communication or the groupcast communication. The transmission UE in the SL communication includes the clock synchronization information in the MAC signaling and transmits the information to the reception UE. The reception UE obtains the clock synchronization information included in the MAC signaling from the transmission UE. The MAC signaling may support the HARQ feedback. This can reduce the reception error rate of the clock synchronization information.

Consequently, the UE outside the coverage of the gNB supporting the TSN can receive the clock synchronization information, from the UE that has received the clock synchronization information from the gNB supporting the TSN or from the UE having another clock synchronization information. This enables the control for synchronizing the clocks of the UEs inside or outside the coverage of the gNB supporting the TSN.

The embodiments and the modifications are mere exemplifications of the present invention, and can be freely combined within the scope of the present invention. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

While the invention is described in detail, the foregoing description is in all aspects illustrative and does not restrict the present invention. Therefore, numerous modifications and variations that have not yet been exemplified are devised without departing from the scope of the present invention.

### Description of References

200 communication system, 202 communication terminal device, 203 base station device.

Further preferred aspects of the present disclosure may be summarized as follows:
Aspect 1. A communication system, comprising:
   - a communication terminal; and
   - a plurality of communication apparatuses configured to perform radio communication with the communication terminal,
   wherein when the communication terminal switches a communication apparatus to which the communication terminal is connected from a first communication apparatus to a second communication apparatus, the communication terminal is configured to correct a time of the communication terminal, based on a timing reference to be transmitted from the second communication apparatus and timing advance of the second communication apparatus.
Aspect 2. The communication system according to aspect 1,
   wherein the communication terminal includes a request for notifying the timing reference in a connection completion notification and is configured to transmit the request to the second communication apparatus.
Aspect 3. The communication system according to aspect 1,
   wherein the second communication apparatus is configured to transmit the timing reference to the first communication apparatus, and the communication
   terminal is configured to obtain the timing reference of the second communication apparatus from the first communication apparatus.
Aspect 4. The communication system according to one of aspects 1 to 3,
   wherein the communication terminal is configured to estimate the timing advance of the second communication apparatus.
Aspect 5. A communication terminal configured to perform radio communication with a communication apparatus,
   wherein when the communication terminal switches the communication apparatus to which the communication terminal is connected from a first communication apparatus to a second communication apparatus, the communication terminal is configured to correct a time of the communication terminal, based on a timing reference to be transmitted from the second communication apparatus and timing advance of the second communication apparatus.

## Claims

1. A user apparatus in a communication system comprising: a plurality of user apparatuses configured to communicate with each other in a sidelink; and a base station configured to wirelessly communicate with each of the user apparatuses, wherein
the user apparatus exchanges first sidelink control information and second sidelink control information by using channels different from each other.

2. The user apparatus according to Claim 1, wherein the user apparatus receives, from the base station through an RRC (Radio Resource Control) signaling, configuration information related to symbol configuration in the sidelink.

3. The user apparatus according to Claim 2, wherein the configuration information indicates a number of symbols and symbol numbers in the sidelink.

4. The user apparatus according to Claim 1, wherein the user apparatus recognizes that a transmission resource is pre-empted based on information related resource allocation receives before transmission in the transmission resource, and stops the transmission in the transmission resource.

5. The user apparatus according to Claim 4, wherein the user apparatus selects a new transmission resource for transmitting data in the pre-empted transmission resource.

6. The user apparatus according to Claim 1, wherein the user apparatus determines regarding pre-emption of a transmission resource based on information related to a service included in the first sidelink control information received before transmission in the transmission resource for another user apparatus.

7. The user apparatus according to Claim 1, wherein the use apparatus determines regarding pre-emption of a transmission resource based on comparison of information related to a service for the user apparatus and information related to a service for another user apparatus.

8. The user apparatus according to Claim 1, wherein a PSFCH (Physical Sidelink Feedback Channe) that is a channel for feedback in the sidelink is time-division-multiplexed to information related to resource allocation.

9. The user apparatus according to Claim 1, wherein a PSFCH (Physical Sidelink Feedback Channe) that is a channel for feedback in the sidelink is time-division-multiplexed to a PSCCH (Physical Sidelink Control Channel).

10. The user apparatus according to Claim 9, wherein the first sidelink control information mapped to the PSCCH includes information related to symbol configuration of the PSFCH.

11. A base station in a communication system comprising: a plurality of user apparatuses configured to communicate with each other in a sidelink; and the base station configured to wirelessly communicate with each of the user apparatuses, wherein
the user apparatus exchanges first sidelink control information and second sidelink control information by using channels different from each other, and the base station transmits, to the user apparatus by using an RRC (Radio Resource Control) signaling, configuration information related to symbol configuration in the sidelink.

12. A communication system comprising: a plurality of user apparatuses configured to communicate with each other in a sidelink; and a base station configured to wirelessly communicate with each of the user apparatuses, wherein
the user apparatus exchanges first sidelink control information and second sidelink control information by using channels different from each other.
